# EUROPEAN PATENT APPLICATION

(11) **EP 4 683 056 A1**
(43) Date of publication of application: **21.01.2026**
(21) Application number: 23958656.3
(22) Date of filing: 17.11.2023
(51) Int. Cl.: H01M 50/133, H01M 50/131, H01M 50/159, H01M 50/116, H01M 50/102, H01M 10/0525

(54) **HOUSING, BATTERY CELL, BATTERY AND ELECTRIC DEVICE**

(71) Applicant: Contemporary Amperex Technology Co., Limited, Ningde, Fujian 352100 (CN)
(72) Inventor: CHEN, Xinxiang, Ningde, Fujian 352100 (CN); ZHENG, Yulian, Ningde, Fujian 352100 (CN); HUANG, Shoujun, Ningde, Fujian 352100 (CN); JIN, Haizu, Ningde, Fujian 352100 (CN); WANG, Peng, Ningde, Fujian 352100 (CN); CHEN, Long, Ningde, Fujian 352100 (CN)
(74) Representative: Kraus & Lederer PartGmbB
(86) International application number: PCT/CN2023/132464
(87) International publication number: WO 2025/102383

(57) **Abstract**

Embodiments of the present application provides a housing, a battery cell, a battery, and an electrical apparatus. The housing is provided with an opening, and comprises a first wall arranged opposite to the opening and at least two second walls, wherein the first wall and the second walls are arranged to intersect each other. A transition area is arranged between every two adjacent second walls among the at least two second walls, and the maximum thickness T1 of the transition area and the maximum thickness TO of the second wall with the maximum thickness among the second walls meet: T1>T0. The housing, the battery cell, the battery and the electrical apparatus in the embodiments of the present application are conducive to solving the problem of housing deformation of battery cells in production and assembly process, and the problem of deformation of housings caused by gas generation and expansion during use.

## Description

### TECHNICAL FIELD

The present application relates to the technical field of batteries, and in particular, to a housing, a battery cell, a battery and an electrical apparatus.

### BACKGROUND

Generally, a housing of a battery cell has a great influence on performance of the battery cell itself. Therefore, how to improve the performance of the battery cell by improving the housing has been a research issue.

### SUMMARY

In view of this, examples of the present application provide a housing, a battery cell, a battery and an electrical apparatus, which are beneficial to solving the problem of deformation of the housing of the battery cell.

In a first aspect, a housing is provided. The housing has an opening, and includes a first wall arranged opposite to the opening and at least two second walls, and the first wall and the second walls are arranged to intersect each other; and a transition region is arranged between every two adjacent second walls among the at least two second walls, and a maximum thickness T1 of the transition region and a maximum thickness T0 of the second wall with the maximum thickness among the second walls meet: T1>T0.

In this example, by arranging the transition region between the two adjacent second walls, stress concentration between the two adjacent second walls can be reduced, and a risk of structural failure caused by the stress concentration can be reduced. In addition, the maximum thickness T1 of the transition region is set to be greater than the maximum thickness T0 of the second wall with the maximum thickness among the two adjacent second walls. The thickened transition region can enhance a structural strength of the housing, which is beneficial to solving the problem of deformation of the housing during the production and assembly of a battery cell, and the problem of deformation of the housing caused by gas production and expansion of the battery cell during use.

In a possible implementation, the maximum thickness T1 of the transition region and the maximum thickness T0 of the second wall with the maximum thickness meet: 1.5≤T1/T0≤7.

In this example, a ratio of the maximum thickness T1 of the transition region to the maximum thickness T0 of the second wall with the maximum thickness among the two adjacent second walls is set to be between [1.5, 7]. On the one hand, the strength of the housing can be enhanced by the thicker transition region. On the other hand, the difficulty in manufacturing the housing due to excessive thickening of the transition region can be limited, thereby achieving a balance between the strength of the housing and the difficulty of manufacturing the housing.

In a possible implementation, the maximum thickness T1 of the transition region and the maximum thickness T0 of the second wall with the maximum thickness meet: 2≤T1/T0≤4.

In this example, a ratio of the maximum thickness T1 of the transition region to the maximum thickness T0 of the second wall with the maximum thickness among the two adjacent second walls is set to be between [2, 4], thereby achieving a maximum balance between the strength of the housing and the difficulty of manufacturing the housing.

In a possible implementation, two second walls are connected by a first filleted corner, and the transition region includes a first filleted corner.

In this example, the transition region between the two adjacent second walls is realized by the filleted corner, which can make the housing easier to form and have a better surface finishment. At the same time, when affected by gas production inside the battery cell, a risk of housing cracking due to sharp point stress concentration can be reduced.

In a possible implementation, an inner diameter R1 of the first filleted corner meets: 2 mm≤R1≤4 mm.

In this example, the inner diameter of the first filleted corner between the two adjacent second walls is set to be between [2 mm, 4 mm]. On the one hand, the internal space of the housing will not be occupied due to the excessive inner diameter, which will increase the gas production pressure inside the housing. On the other hand, the wall thickness increment of the first filleted corner will not be insufficient due to the inner diameter being too small, which will in turn lead to insufficient strength of the housing, so that a balance can be achieved between the internal space utilization of the housing and the strength of the housing.

In a possible implementation, an outer diameter R2 of the first filleted corner meets: 1.5 mm≤R2≤3.5 mm.

In this example, in a case where a cover plate is fixedly connected to the housing by lateral welding, the larger the outer diameter R2 of the first filleted corner between the two adjacent second walls, the more difficult it is to control the welding quality and the more prone it is to have a cold weld; and the smaller the outer diameter R2 of the first filleted corner, the more difficult it is to form the housing. Therefore, controlling the outer diameter R2 of the first filleted corner within the range of [1.5 mm, 3.5 mm] can balance the welding quality and the difficulty of forming the housing.

In a possible implementation, the housing is of an integrally formed structure, and a depth H of the housing and the inner diameter R1 of first filleted corner meets: 2.5 mm≤R1≤20 mm, and 50 mm<H≤250 mm.

In this example, by setting the depth H of the housing and the inner diameter R1 of the first filleted corner between the adjacent second walls to meet: 2.5 mm≤R1≤20 mm, and 50 mm<H≤250 mm, the risk of cracking of the housing due to stress during the integrated forming process can be reduced as much as possible without affecting the energy density of the battery cell, thereby reducing the difficulty of forming the housing.

In a possible implementation, the housing is of an integrally formed structure, and a yield strength Re of the housing at a temperature of 25°C and the inner diameter R1 of the first filleted corner meet: 140 MPa≤Re≤1000 Mpa, and 2.5 mm≤R1≤ 20 mm.

In this example, by using a material with the yield strength Re meeting 140 MPa≤Re≤1000 Mpa to manufacture the housing, the wall thickness of the housing can be thinned without reducing the strength of the housing, thereby increasing the capacity space of the battery cell. In addition, by setting the inner diameter R1 of the first filleted corner between the adjacent second walls to meet 2.5 mm≤R1≤20 mm, the risk of cracking of the housing due to stress during the integrated forming process can be reduced as much as possible, and the difficulty of forming the housing can be reduced.

In a possible implementation, the maximum thicknesses of the at least two second walls are equal.

In this example, the wall thickness of the at least two second walls is set to be equal. On the one hand, the processing difficulty of the housing can be reduced, and on the other hand, the at least two second walls can further be set to the minimum processing wall thickness, which helps to fully increase the space utilization of the housing.

In a possible implementation, the transition region is arranged between any two adjacent second walls among the at least two second walls, and the maximum thicknesses of the plurality of transition regions corresponding to the at least two second walls are equal.

In this example, the maximum thicknesses of the at least two transition regions between the at least two second walls of the housing to be equal, which helps to prepare the housing into a symmetrical structure, and processing is easy. Moreover, there is no need to worry about reverse installation when assembling the housing and the cover plate, which has a fool proofing function.

In a possible implementation, the first wall and second walls are connected by a second filleted corner, and an inner diameter r1 of the second filleted corner and a minimum thickness T2 of the second wall with the minimum thickness among least two second walls meets: 2.0≤r1/T2≤30.

In this example, a ratio of the inner diameter r1 of the second filleted corner between the first wall and the second walls to the minimum thickness T2 of the second wall with the minimum wall thickness is set to be between [2.0, 30], which helps to balance the processing difficulty of the housing with the space capacity and strength of the battery cell.

In a possible implementation, a wall thickness of the housing is uniform.

In this example, the wall thickness of the housing is set to be uniform. On the one hand, the processing difficulty of the housing can be reduced, and on the other hand, each wall of the housing can further be set to the minimum processing wall thickness, which helps to fully increase the space utilization of the housing.

In a possible implementation, a material of at least a partial region of the housing includes at least one of stainless steel or carbon steel.

In this example, the housing is prepared from a stainless steel material or a carbon steel material, which can enhance the strength of the housing.

In a possible implementation, a mass content of a chromium element in the material of at least a partial region of the housing is m, and m meets: 10%≤m≤30%.

In this example, adding a proper amount of chromium element to the material of at least a partial region of the housing can improve the strength of the housing. In addition, since the chromium element can react with oxygen to form a layer of dense chromium oxide film, a corrosion-resistant protective film can also be formed on a surface of the housing, thereby improving the corrosion resistance of the housing.

In a possible implementation, at least a partial region of the housing includes all walls of the housing.

In this example, all the walls of the housing are made of carbon steel or stainless steel, and/or a proper amount of chromium element is added to the materials of all the walls of the housing, so that the strength of the housing can be improved.

In a second aspect, a battery cell is provided, including an electrode assembly and the housing as described in the first aspect and any possible implementation thereof, wherein the electrode assembly is accommodated in the housing.

In a possible implementation, the electrode assembly includes a negative electrode plate, the negative electrode plate includes a negative electrode active material capable of reversibly deintercalating and intercalating metal ions, the negative electrode active material includes a silicon-based material; and a tensile strength of at least a partial region of the housing at a temperature of 25°C is Rm, and Rm meets: 250 MPa≤Rm≤2000 MPa.

In this example, setting the silicon-based material on the negative electrode plate can accommodate more metal ions and effectively increase the energy density of the battery cell. In addition, in a case where the negative electrode active material of the negative electrode plate has the silicon-based material, the deformation amount of the electrode assembly in the battery cell during use can also be increased. In particular, during a charging process of the battery cell, metal ions are intercalated in the silicon-based material of the negative electrode plate, causing the volume expansion of the electrode assembly, thereby increasing the pressure of the electrode assembly on the housing of the battery cell. Therefore, increasing the tensile strength Rm of at least a partial region of the housing at a room temperature of 25°C can improve the deformation capability of the housing, making the housing less likely to be damaged during the use of the battery cell, thereby improving the structural stability of the battery cell and thus prolonging the service life of the battery cell. However, the tensile strength Rm of at least a partial region of the housing at the room temperature of 25°C should not be too large, so as to reduce the selecting difficulty and processing difficulty of the material of the housing, save costs, and facilitate processing.

In a possible implementation, the electrode assembly includes the negative electrode plate, the negative electrode plate includes the negative electrode active material capable of reversibly deintercalating and intercalating the metal ions, the negative electrode active material includes the silicon-based material; and a yield strength of at least a partial region of the housing at a temperature of 25°C is Re, and Re meets: 140 MPa≤Re≤1000 MPa.

In this example, setting the silicon-based material on the negative electrode plate can accommodate more metal ions and effectively increase the energy density of the battery cell. In addition, in a case where the negative electrode active material of the negative electrode plate has the silicon-based material, the deformation amount of the electrode assembly in the battery cell during use can also be increased. In particular, during a charging process of the battery cell, metal ions are intercalated in the silicon-based material of the negative electrode plate, causing the volume expansion of the electrode assembly, thereby increasing the pressure of the electrode assembly on the housing of the battery cell. Therefore, increasing the yield strength Re of at least a partial region of the housing at a room temperature of 25°C can improve the deformation capability of the housing, thereby improving the structural stability of the battery cell and thus prolonging the service life of the battery cell. In a case where the electrode assembly will cyclically expand and shrink in volume during the charging and discharging process of the battery cell, increasing the yield strength Re of at least a partial region of the housing at the room temperature can increase the maximum extrusion force that the housing can withstand. Without exceeding the yield strength limit of the housing, the housing is not prone to being damaged, and the deformation of the housing can be restored, thereby prolonging the service life of the housing. However, the yield strength Re of at least a partial region of the housing at the room temperature should not be too large, so as to reduce the selecting difficulty and processing difficulty of the material of the housing, save costs, and facilitate processing.

In one possible implementation, the electrode assembly includes a positive electrode plate, the positive electrode plate includes a positive electrode active material capable of reversibly deintercalating and intercalating the metal ions, and the positive electrode active material includes a nickel-containing compound; and a melting point of at least partial region of the housing is p, and p meets: 1200°C≤p≤2000°C.

In this example, in a case where the positive electrode active material of the positive electrode plate includes the nickel-containing compound, the energy density and long cycle life of the battery cell can be effectively increased, and the gas generated during the use of the battery cell is also increased, especially when the battery cell suffers from thermal runaway, the internal temperature of the battery cell increases rapidly and a large amount of gas is generated. Therefore, appropriately increasing the melting point p of at least a partial region of the housing makes the housing less likely to melt, reduce the possibility of explosion of the battery cell, and further reduce the risk of thermal runaway of adjacent battery cells, thereby improving the reliability of the battery. However, the melting point p of the housing should not be too large, so as to reduce the selecting difficulty and the processing difficulty of the material of the housing, save costs, and facilitate processing.

In a possible implementation, the electrode assembly includes the positive electrode plate, the positive electrode plate includes the positive electrode active material capable of reversibly deintercalating and intercalating the metal ions, and the positive electrode active material includes the nickel-containing compound; and a tensile strength of at least a partial region of the housing at a temperature of 500°C is Rn, and Rn meets: 100 MPa≤Rn≤1200 MPa.

In this example, in a case where the positive electrode active material of the positive electrode plate includes the nickel-containing compound, the energy density and long cycle life of the battery cell can be effectively increased, and the gas generated during the use of the battery cell is also increased, especially when the battery cell suffers from thermal runaway, the internal temperature of the battery cell increases rapidly and a large amount of gas is generated. Therefore, appropriately increasing the tensile strength Rn of at least a partial region of the housing at a high temperature of 500°C can improve the deformation capability of this part of housing when the battery cell suffers from thermal runaway, making the housing less likely to be quickly destroyed and explode, thereby reducing the risk of thermal runaway of adjacent battery cells and improving the reliability of the battery. However, the tensile strength Rn of at least a partial region of the housing at the high temperature 500°C should not be too large, so as to save costs, and facilitate processing.

In a third aspect, a battery is provided, including the plurality of battery cells as described in the second aspect and any possible implementation thereof.

In a fourth aspect, an electrical apparatus is provided, including a battery. The battery includes the plurality of battery cells as described in the second aspect and any possible implementation thereof.

### BRIEF DESCRIPTION OF DRAWINGS

To more clearly describe the technical solutions of the embodiments of the present application, the drawings to be used in the embodiments of the present application will be briefly introduced below. Apparently, the drawings described below are merely some embodiments of the present application. For those of ordinary skill in the art, other drawings may also be obtained based on these drawings without making creative efforts.
FIG. 1 is a schematic structural diagram of a vehicle disclosed in an embodiment of the present application.
Fig. 2 is a schematic structural diagram of a battery disclosed in an embodiment of the present application.
FIG. 3 is a schematic structural diagram of a battery cell disclosed in an example of the present application.
FIG. 4 is an exploded view of a battery cell disclosed in an example of the present application.
FIG. 5 is a sectional view of a housing disclosed in an example of the present application.
FIG. 6 is a schematic diagram of a transition region of a housing in an example of the present application.
FIG. 7 is a schematic diagram of another transition region of a housing in an example of the present application.
FIG. 8 shows a schematic diagram of material flow of a housing in an integrally formed process.
FIG. 9 shows a schematic diagram of a force acting on a housing in an integrally formed process.
FIG. 10 is another sectional view of a housing disclosed in an example of the present application.
FIG. 11 is a schematic partial enlarged diagram of a part B in FIG. 10.
FIG. 12 is a schematic structural diagram of another battery cell disclosed in an example of the present application.
FIG. 13 is an exploded view of another battery cell disclosed in an example of the present application.
FIG. 14 is a schematic cross-sectional view of an electrode assembly in an example of the present application.
FIG. 15 is a schematic cross-sectional view of a negative electrode plate or a positive electrode plate of an electrode assembly in an example of the present application.
FIG. 16 is a schematic structural diagram of a fixture for cyclic charging fatigue testing in an example of the present application.
FIG. 17 shows a schematic side view of a housing in an example of the present application.
FIG. 18 is a schematic top view of a housing in an example of the present application.
FIG. 19 is an enlarged view of a partial structure of a housing in an example of the present application.
FIG. 20 is a schematic cross-sectional view of a partial structure of a battery in another example of the present application.
FIG. 21 is a schematic diagram of a decomposed structure of a battery cell in another example of the present application.
FIG. 22 is a schematic sectional structural diagram of a battery cell in another example of the present application.
FIG. 23 is a schematic cross-sectional view of a partial structure of a battery in another example of the present application.
FIG. 24 is a schematic cross-sectional view of another partial structure of a battery in another example of the present application.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other examples obtained by those of ordinary skill in the art based on the examples in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific examples, but are not intended to limit the present application. The terms "include" and "have" and any variations thereof in the specification and the claims of the present application as well as the above description of the drawings are intended to cover non-exclusive inclusions. The terms "first", "second", etc. in the specification, claims, or, above drawings of the present application are intended to distinguish between different objects, instead of describing a specific sequence or a primary and secondary relation.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The term "a plurality of' appearing in the present application refers to two or more (including two), and similarly, "a plurality of groups" refers to two or more (including two) groups, and "a plurality of sheets" refers to two or more (including two) sheets.

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the examples of the present application.

The battery cell generally includes an electrode assembly. The electrode assembly includes a positive electrode, a negative electrode, and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil, foam metal, or a composite current collector. For example, as the metal foil, silver surface-treated aluminum or stainless steel, stainless steel, copper, aluminum, nickel, baked carbon, carbon, nickel, titanium, or the like may be used. The foam metal may be foam nickel, foam copper, foam aluminum, foam alloy, foam carbon, or the like. The composite current collector may comprise a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: lithium-containing phosphate, a lithium transition metal oxide, and their respective modified compounds. However, the present application is not limited to these materials, and other conventional materials that can be used as positive electrode active materials for batteries may also be used. Only a single one of or a combination of two or more of these positive electrode active materials can be used. Examples of the lithium-containing phosphate may include, but are not limited to, at least one of lithium iron phosphate (such as LiFePO₄ (also abbreviated as LFP)), a lithium iron phosphate-carbon composite, lithium manganese phosphate (such as LiMnPO4), a lithium manganese phosphate-carbon composite, lithium manganese iron phosphate, and a lithium manganese iron phosphate-carbon composite.

In some examples, the negative electrode may be a negative electrode plate, and the negative electrode plate may include a negative electrode current collector and a negative electrode active material arranged on at least one surface of the negative electrode current collector.

As an example, the negative electrode current collector has two surfaces opposite in its own thickness direction, and the negative electrode active material is arranged on either one or both of the two opposite surfaces of the negative electrode current collector.

As an example, the negative electrode current collector may be a metal foil, foam metal, or a composite current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver and silver alloy, etc.) on a polymer material substrate (such as substrate of polypropylene, polyethylene terephthalate, polybutylene terephthalate, polystyrene, and polyethylene).

As an example, a negative electrode active material for a battery cell well-known in the art may be used as the negative electrode active material. As an example, the negative electrode active material may include at least one of the following materials: artificial graphite, natural graphite, soft carbon, hard carbon, a silicon-based material, a tin-based material, and lithium titanate, etc.

In some embodiments, the electrode assembly further includes a spacer, and the spacer is arranged between the positive electrode and the negative electrode.

In some embodiments, the spacer is a separator. The type of the separator is not particularly limited in the present application, and any known separator of a porous structure with good chemical stability and mechanical stability can be selected.

As an example, a main material of the separator may be selected from at least one of glass fiber, non-woven fabric, polyethylene, polypropylene, polyvinylidene fluoride and ceramics.

In some embodiments, the spacer is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The present application has no specific limitation on a type of the electrolyte, which can be selected according to requirements. The electrolyte may be liquid, gelled or solid.

In some embodiments, the electrode assembly is provided with tabs that can conduct current out of the electrode assembly. The tabs include a positive tab and a negative tab.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like. The shell includes a case and a cover plate.

As an example, the battery cell may be a cylindrical battery cell, a prismatic battery cell, a pouch battery cell, or a battery cell in another shape. The prismatic battery cell includes a square-shell battery cell, a blade-shaped battery cell, and a multi-prism battery. For example, the multi-prism battery may be a hexagonal prism battery, which is not particularly limited in the present application.

The battery mentioned in the examples of the present application may be a single physical module including one or more battery cells to provide a higher voltage and capacity. When a plurality of battery cells are provided, the plurality of battery cells are connected in series, in parallel, or in series and parallel through busbar components.

In some embodiments, the battery may be a battery module. When there are a plurality of battery cells, the plurality of battery cells are arranged and fixed to form a battery module.

In some examples, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some examples, the battery may be located in an energy storage apparatus. The energy storage apparatus includes an energy storage container, an energy storage cabinet, or the like.

Many design factors, such as energy density, cycle life, discharge capacity, charge-discharge rate and other performance parameters, should be considered in the development of the battery technology. In addition, the influence of the housing on the battery performance also needs to be taken into account. For example, the space utilization of the housing, the resistance to tension of the housing, and the manufacturability of the housing are considered.

Therefore, an example of the present application provides a housing. By arranging a transition region between two adjacent second walls, stress concentration between the two adjacent second walls can be reduced, and a risk of structural failure caused by the stress concentration can be reduced. In addition, a maximum thickness of the transition region is set to be greater than a maximum thickness of the second wall with the maximum thickness among the two adjacent second walls. The thickened transition region can enhance a structural strength of the housing, which is beneficial to solving the problem of deformation of the housing during the production and assembly of a battery cell, and the problem of deformation of the housing caused by gas production and expansion of the battery cell during use.

The technical solutions described in the examples of the present application are all applicable to various electrical devices using batteries.

The electrical devices may be vehicles, mobile phones, portable devices, laptops, ships, spacecrafts, electric toys, electric tools, and the like. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For the convenience of illustration, the following embodiments are illustrated with the electrical device being a vehicle as an example.

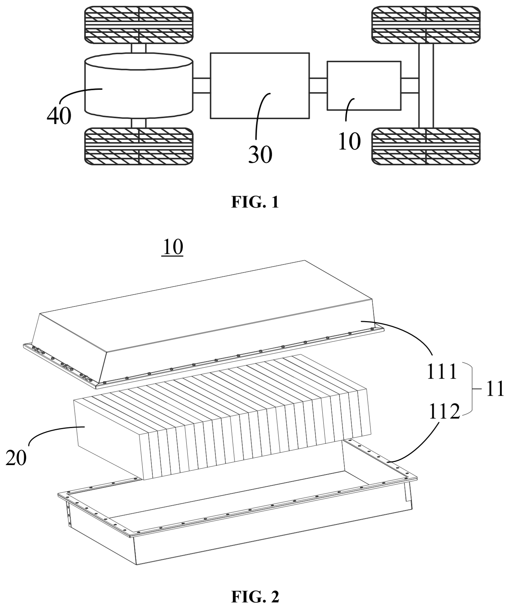

For example, FIG. 1 is a schematic structural diagram of a vehicle 1 in an example of the present application. The vehicle 1 may be a fuel vehicle, a gas vehicle, or a new energy vehicle, and the new energy vehicle may be a battery electric vehicle, a hybrid electric vehicle, an extended range electric vehicle, etc. A motor 80, a controller 60 and a battery 10 may be arranged inside the vehicle 1, and the controller 60 is configured to control the battery 10 to supply power to the motor 80. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another example of the present application, the battery 10 can be used not only as an operation power supply of the vehicle 1, but also as a driving power supply of the vehicle 1, replacing or partially replacing fuel or natural gas to supply driving power to the vehicle 1.

FIG. 2 shows a schematic structural diagram of a battery 10 in an example of the present application. The battery 10 may include a plurality of battery cells 20. The battery 10 may further include a box body 11, the box body 11 is internally of a hollow structure, and the plurality of battery cell 20 are accommodated in the box body 11. FIG. 2 shows a possible implementation of the box body 11 in an example of the present application. As shown in FIG. 2, the box body 11 may include two portions, which are referred to as a first portion 111 and a second portion 112 respectively, and the first portion 111 and the second portion 112 are fastened together. The shapes of the first portion 111 and the second portion 112 may be determined according to a combined shape of the plurality of battery cells 20, and at least one of the first portion 111 and the second portion 112 has an opening. For example, as shown in FIG. 2, the first portion 111 and the second portion 112 may each be hollow cuboid with only one surface as an opening surface, the opening of the first portion 111 and the opening of the second portion 112 are disposed opposite to each other, and the first portion 111 and the second portion 112 are fastened to each other to form the box body 11 having a closed chamber. The closed chamber may be used to accommodate the plurality of battery cells 20. The plurality of battery cells 20 are connected and combined in parallel, in series or in series and parallel, and then placed in the box body 11 formed by fastening the first portion 111 with the second portion 112 together.

For another example, unlike that shown in FIG. 2, only one of the first portion 111 and the second portion 112 may be a hollow cuboid having an opening, and the other may be of a plate shape to cover the opening. For example, here taking the second portion 112 being a hollow cuboid with only one surface as an opening surface and the first portion 111 being of a plate shape as an example, the first portion 111 covers the opening of the second portion 112 to form the box body 11 with the closed chamber. The examples of the present application are not limited thereto.

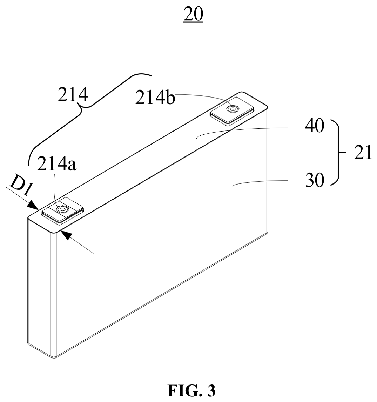

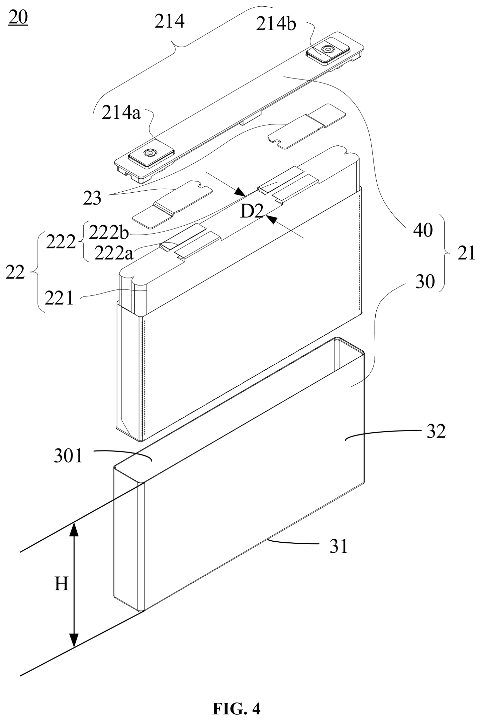

FIG. 3 shows a schematic structural diagram of a battery cell 20 in an example of the present application. For example, the battery cell 20 shown in FIG. 3 may be any battery cell 20 in the battery 10 shown in FIG. 2. FIG. 4 shows a schematic diagram of a partial decomposed structure of a battery cell 20 in an example of the present application. For example, the battery cell 20 described in FIG. 4 may be the battery cell 20 shown in FIG. 3, or may be any battery cell 20 in the battery 10 shown in FIG. 2.

As shown in FIG. 3 and FIG. 4, the battery cell 20 in the example of the present application may include: a shell 21 and an electrode assembly 22. The shell 21 has a closed accommodation space, and the electrode assembly 22 is placed in the accommodation space in the shell 21. The shell 21 may include a housing 30 and a cover plate 40. The housing 30 is of a hollow structure having at least one opening. The cover plate 40 is used to be fastened with the housing 30 together to form the shell 21 having the closed accommodation space.

In some examples, the cover plate 40 may be of a plate-like structure for covering the opening of the housing 30. In other examples, the structure of the cover plate 40 is similar to that of the housing 30. That is, the housing 30 and the cover plate 40 are each of a hollow structure with one opening, and the two openings are butted to form the shell 21 having the closed accommodation space.

It should be understood that if the cover plate 40 is of a plate-like structure, the housing 30 may be of a hollow structure with an opening formed at one or more ends. For example, if the housing 30 is of a hollow structure with an opening formed at one end, one cover plate 40 may be provided. If the housing 30 is of a hollow structure with openings formed at two opposite ends, two cover plates 40 may be provided, and the two cover plates 40 respectively cover the openings at the two ends of the housing 30.

The shell 21 may be in various shapes, such as a cylinder, a cuboid, or other polyhedrons. Exemplarily, as shown in FIG. 3 and FIG. 4, in the example of the present application, the shell 21 being of a cuboid structure is mainly taken as an example for description.

It should be understood that the cover plate 40 of the example of the present application is used to cooperate with the housing 30 to isolate the internal environment of the battery cell 20 from the external environment. The shape of the cover plate 40 may be adapted to the shape of the housing 30. As shown in FIG. 3 and FIG. 4, the housing 30 is of a cuboid structure, and the cover plate 40 is of a rectangular plate-like structure adapted to the housing 30.

It should be understood that the battery cell 20 further includes an electrode terminal 214. The electrode terminal 214 in the example of the present application is used to electrically connect to the electrode assemblies 22 inside the battery cell 20 to output electrical energy of the battery cell 20. As shown in FIG. 3 to FIG. 4, the battery cell 20 may include at least two electrode terminals 214. The at least two electrode terminals 214 may include at least one first electrode terminal 214a and at least one second electrode terminal 214b. The first electrode terminal 214a is used for being electrically connected with a positive tab 222a of the electrode assembly 22, and the second electrode terminal 214b is used for being electrically connected with a negative tab 222b of the electrode assembly 22. The first electrode terminal 214a and the positive tab 222a may be connected directly or indirectly, and the second electrode terminal 214b and the negative tab 222b may be connected directly or indirectly. Exemplarily, the first electrode terminal 214a may be electrically connected to the positive tab 222a through a connecting member 23, and the second electrode terminal 214b may be electrically connected to the negative tab 222b through a connecting member 23.

In the battery cell 20, the electrode assembly 22 is a component that undergoes an electrochemical reaction in the battery cell 20. According to actual usage requirements, one or more electrode assemblies 22 may be arranged in the housing 30. For example, as shown in FIG. 4, two electrode assemblies 22 are arranged in the battery cell 20. The electrode assembly 22 may be a cylinder, a cuboid, or the like. If the electrode assembly 22 is of a cylindrical structure, the housing 30 may also be of a cylindrical structure. If the electrode assembly 22 is of a cuboid structure, the housing 30 may also be of a cuboid structure.

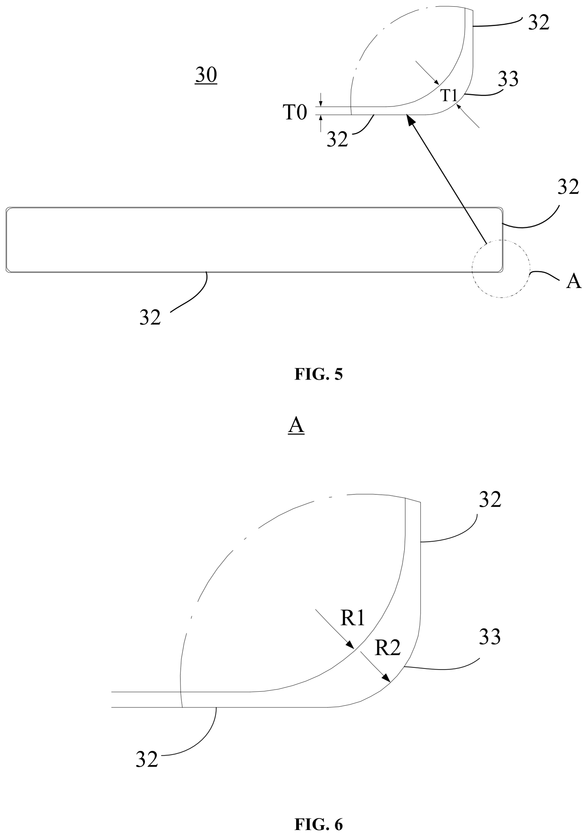

FIG. 5 shows a schematic cross-sectional view of a housing 30 in an example of the present application. It should be noted that the housing 30 is applied to the battery cell. For example, the housing 30 may be applied to the battery cell 20 shown in FIG. 3 and FIG. 4, and the housing 30 may be the housing 30 shown in FIG. 3 and FIG. 4. For example, as shown in FIG. 4, the housing 30 has an opening 301, and the housing 30 includes a first wall 31 arranged opposite to the opening 301 and at least two second walls 32, and the first wall 31 and the second walls 32 are arranged to intersect each other.

As shown in an enlarged partial view of part A in FIG. 5, a transition region 33 is arranged between every two adjacent second walls 32 among the at least two second walls 32 of the housing 30, a maximum thickness of the transition region 33 is T1, a maximum thickness of the second wall 32 with the maximum thickness among the two adjacent second walls 32 is T0, where T1 is greater than T0.

In some examples, the second walls 32 may be perpendicular to the first wall 31.

In some examples, the at least two second walls 32 may be connected end to end, and enclosed to form a hollow structure with openings at two ends, where the first wall 31 covers the opening at one end of the hollow structure.

In some examples, the housing 30 may be placed in a manner as shown in FIG. 4, where the first wall 31 may be a bottom wall of the housing 30 for supporting the electrode assembly 22, and the second walls 32 may be side walls of the housing 30, and arranged around the electrode assembly 22.

Generally, the second walls 32 are not prepared independently, that is, the at least two second walls 32 may be integrally formed. In some other examples, the at least two second walls 32 and the first wall 31 are integrally formed, that is, the housing 30 is of an integrally formed structure. For example, a plate-like structure is punched into a hollow structure with an opening by using a mold, and the housing 30 after punching may have openings in various shapes. For example, the opening 301 may be circular, polygonal or racetrack-shaped. The polygon is, for example, a square, a pentagon, a hexagon or other irregular shapes.

In some examples, the thickness of the transition region 33 may be uniform or non-uniform. The maximum thickness T1 of the transition region 33 will be defined below by taking the uniform thickness of the transition region 33 as an example.

As can be seen from FIG. 5, the transition region 33 has two surfaces, namely an inner surface and an outer surface. In some examples, the inner surface and the outer surface may be arc surfaces, and the inner surface and the outer surface are coaxially arranged. The maximum thickness T1 of the transition region 33 may be defined as a length of an extended line of a connecting line between a center of the circle where the inner arc is located and a center of the circle where the outer arc is located in any cross section in a direction perpendicular to an axis of the inner surface and the outer surface in the transition region 33. In some other examples, the inner surface and the outer surface may be planes, and the inner surface and the outer surface are parallel. The maximum thickness T1 of the transition region 33 may be defined as a vertical distance between the inner surface and the outer surface. Likewise, the second walls 32 also have two surfaces, namely, an inner surface and an outer surface, wherein a maximum value of the vertical distance between the inner surface and the outer surface is the maximum thickness of the certain second wall 32.

If at least two second walls 32 of the housing 30 have unequal wall thicknesses, for example, the wall thicknesses of the two second walls 32 of the transition region 33 are not equal, then in the example of the present application, TO is the second wall 32 with the maximum wall thickness among the two second walls 32 adjacent to the transition region 33 in the housing 30. If at least two second walls 32 of the housing 30 have the equal wall thickness, for example, the wall thicknesses of the two second walls 32 of the transition region 33 are equal, then in the example of the present application, T0 is the thickness of any second wall 32 of the housing 30.

It should be noted that if the certain second wall 32 includes a functional region, the maximum thickness of the second wall 32 actually refers to the maximum thickness of a region other than the functional region of the second wall 32, and the functional region includes at least one of the following regions: a pressure relief region, a region where the electrode terminal is located, a liquid injection region, and a welding region.

In this example, by arranging the transition region 33 between the two adjacent second walls 32, stress concentration between the two adjacent second walls 32 can be reduced, and a risk of structural failure caused by the stress concentration can be reduced. In addition, the maximum thickness T1 of the transition region 33 is set to be greater than the maximum thickness T0 of the second wall with the maximum thickness among the two adjacent second walls. The thickened transition region 33 can enhance a structural strength of the housing 30, which is beneficial to solving the problem of deformation of the housing 30 during the production and assembly of a battery cell 20, and the problem of deformation of the housing 30 caused by gas production and expansion of the battery cell 20 during use.

In some examples, the maximum thickness T1 of the transition region 33 and the maximum thickness T0 of the second wall 32 with the maximum thickness among the two adjacent second walls 32 meet:1.5≤T1/T0≤7.

In this example, a ratio of the maximum thickness T1 of the transition region 33 to the maximum thickness T0 of the second wall 32 with the maximum thickness among the two adjacent second walls 32 is set to be between [1.5, 7]. On the one hand, the strength of the housing can be enhanced by the thicker transition region 33. On the other hand, the difficulty in manufacturing the housing 30 due to excessive thickening of the transition region 33 can be limited, thereby achieving a balance between the strength of the housing 30 and the difficulty of manufacturing the housing 30.

In actual applications, a ratio of T1 to T0 may be adjusted. For example, the maximum thickness T1 of the transition region 33 and the maximum thickness T0 of the second wall 32 with the maximum thickness among the two adjacent second walls 32 may meet:2≤T1/T0≤4.

For example, T1/T0 may be equal to 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, etc.

In this example, a ratio of the maximum thickness T1 of the transition region 33 to the maximum thickness T0 of the second wall 32 with the maximum thickness among the two adjacent second walls 32 is set to be between [2, 4], thereby achieving a maximum balance between the strength of the housing 30 and the difficulty of manufacturing the housing 30.

Optionally, as shown in FIG. 5 and FIG. 6, two adjacent second walls 32 are connected by a first filleted corner 331, and the transition region 33 includes the first filleted corner 331. That is, the transition region 33 is realized by the filleted corner.

In this example, the transition region 33 between the two adjacent second walls 32 is realized by the filleted corner, which can make the housing 30 easier to form and have a better surface finishment. At the same time, when affected by gas production inside the battery cell 20, a risk of housing 30 cracking due to sharp point stress concentration can be reduced.

As shown in FIG. 6, an inner diameter of the first filleted corner 331 is R1, and an outer diameter of the first filleted corner 331 is R2.

In some examples, the first filleted corner 331 has the inner surface and the outer surface, and both the inner surface and the outer surface are arc surfaces. The inner diameter R1 of the first filleted corner 331 may be understood as a radius of a circle where the inner arc of the first filleted corner 331 is located, and the outer diameter R2 of the first filleted corner 331 may be understood as a radius of a circle where the outer arc of the first filleted corner 331 is located.

In some examples, the inner diameter R1 of the first filleted corner 331 meets: 2 mm≤R1≤4 mm. For example, R1=2 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, etc.

In this example, the inner diameter of the first filleted corner 331 between the two adjacent second walls 32 is set to be between [2 mm, 4 mm]. On the one hand, the internal space of the housing 30 will not be occupied due to the excessive inner diameter, which will increase the gas production pressure inside the housing 30. On the other hand, the wall thickness increment of the first filleted corner 331 will not be insufficient due to the inner diameter being too small, which will in turn lead to insufficient strength of the housing 30, so that a balance can be achieved between the internal space utilization of the housing 30 and the strength of the housing 30.

In some examples, the outer diameter R2 of the first filleted corner 331 meets: 1.5 mm≤R2≤3.5 mm. For example, R2=1.5 mm, 2 mm, 2.5 mm, 3.0 mm, 3.5 mm, etc.

In this example, in a case where a cover plate 40 is fixedly connected to the housing 30 by lateral welding, the larger the outer diameter R2 of the first filleted corner 331 between the two adjacent second walls 32, the more difficult it is to control the welding quality and the more prone it is to have a cold weld; and the smaller the outer diameter R2 of the first filleted corner 331, the more difficult it is to form the housing 30. Therefore, controlling the outer diameter R2 of the first filleted corner 331 within the range of [1.5 mm, 3.5 mm] can balance the welding quality and the difficulty of forming the housing.

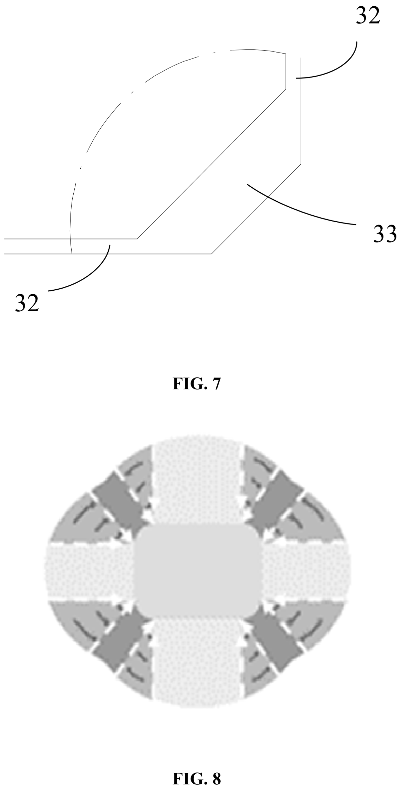

In some other examples, as shown in FIG. 7, the two adjacent second walls 32 are connected via a C corner. For example, an included angle between the C corner and the two adjacent second walls 32 is 45°.

In one example, the housing 30 may be of an integrally formed structure, as shown in FIG. 4, a depth of the housing 30 is H, wherein the depth H of the housing 30 and the inner diameter R1 of the first filleted corner 331 meets: 2.5 mm≤R1≤20 mm, and 50 mm<H≤250 mm.

In the example of the present application, the depth may be understood as a distance from the opening inward to the bottom. For example, the depth H of the housing 30 may be understood as the distance from the opening 301 to the first wall 31.

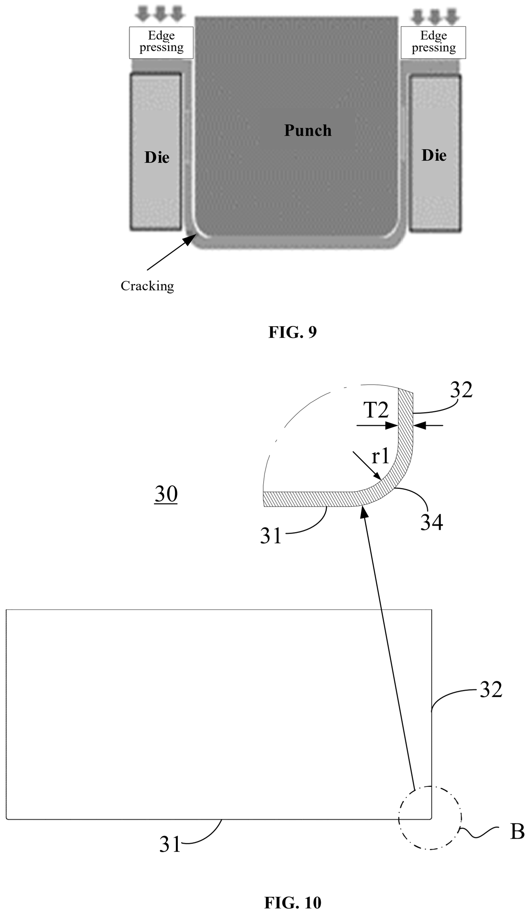

FIG. 8 shows a schematic diagram of material flow of a housing 30 in an integrally formed process. FIG. 9 shows a schematic diagram of a force acting on a housing 30 in an integrally formed process. As can be seen from FIG. 8 and FIG. 9, when the housing 30 is formed, the material of the housing 30 is prone to pile up at the position of the first filleted corner 331, resulting in a large friction force between the housing 30 and the mold, and the housing 30 is prone to cracking. Therefore, in this example, by setting the depth H of the housing 30 and the inner diameter R1 of the first filleted corner 331 to meet: 2.5 mm≤R1≤20 mm, and 50 mm<H≤250 mm, the risk of cracking of the housing 30 due to stress during the integrated forming process can be reduced as much as possible without affecting the energy density of the battery cell 20, thereby reducing the difficulty of forming the housing 30.

For example, R1=2.5 mm, 5 mm, 7.5 mm, 10 mm, 12.5 mm, 15 mm, 17.5 mm, or 20 mm; and/or, H=50 mm, 100 mm, 150 mm, 200 mm, or 250 mm.

In some examples, H and R1 meet: 75 mm≤H≤180 mm, and 4 mm≤R1≤15 mm.

For example, H=75 mm, 100 mm, 125 mm, 150 mm, 175 mm, or 180 mm. For example: R1=4 mm, 6 mm, 8 mm, 10 mm, 12 mm, 14 mm, or 15 mm.

In this example, H and R1 are set to meet: 4 mm≤R1≤15 mm, 75 mm≤H≤180 mm. On the one hand, the energy density of the battery cell 20 will not be reduced due to H being too small or R being too large. On the other hand, the housing 30 will not be prone to piling up during the forming process due to H being too large or R being too small, thereby causing the housing 30 to be subjected to excessive force and cracking.

In other examples, H and R1 meet:5 mm≤R1≤10 mm, and 90 mm≤H≤140 mm, for example, R1=5 mm, 6 mm, 7 mm, 8 mm, 9 mm, or 10 mm. For another example, H=90 mm, 100 mm, 110 mm, 120 mm, 130 mm, or 140 mm.

In some other examples, the housing 30 is of an integrally formed structure, and the yield strength of the housing 30 at a temperature of 25°C is Re, wherein the yield strength Re and the inner diameter R1 of the first filleted corner 331 meet: 140 MPa≤Re≤1000 Mpa, 2.5 mm≤R1≤20 mm.

For example, Re=140 MPa, 180 MPa, 200 MPa, 230 MPa, 250 MPa, 280 MPa, 300 MPa, 320 MPa, 350 MPa, 380 MPa, 400 MPa, 430 MPa, 450 MPa, 480 MPa, 500 MPa, 550 MPa, 600 MPa, 650 MPa, 700 MPa, 750 MPa, 800 MPa, 850 MPa, 900 MPa, 950 MPa, or 1000 Mpa.

For example, R1=2.5 mm, 5 mm, 7.5 mm, 10 mm, 12.5 mm, 15 mm, 17.5 mm, or 20 mm.

The yield strength may be understood as a critical stress value at which a material yields. Usually, after the material is subjected to stress, as the stress increases, in addition to elastic deformation, plastic deformation may also occur. A point at which the material undergoes plastic deformation may be called a yield point, and a strength corresponding to the yield point is called the yield strength. A test method of the yield strength Re of the housing 30 at a temperature of 25°C in the example of the present application may be selected according to actual applications. For example, GB/T 228.1-2010 may be used to test the yield strength Re at a room temperature of 25°C.

In order to solve the problem that when the housing 30 is integrally formed, the material is prone to piling up at the first filleted corner 331, resulting in large friction force between the housing 30 and the mold, and the housing 30 is prone to cracking, the example of the present application also provides another solution. That is, for the housing 30 whose yield strength Re meets 140 MPa≤Re≤1000 Mpa, the inner diameter R1 of the first filleted corner 331 is set to 2.5 mm≤R1≤20 mm, so that R1 cannot be too small, thereby reducing the difficulty of forming the housing 30, and R1 cannot be too large, thereby reducing the stress deformation of the housing 30.

In this example, by using a material with the yield strength Re meeting 140 MPa≤Re≤1000 Mpa to manufacture the housing 30, the wall thickness of the housing can be thinned without reducing the strength of the housing 30, thereby increasing the capacity space of the battery cell 20. In addition, by setting the inner diameter R1 of the first filleted corner 331 between the adjacent second walls 32 to meet 2.5 mm≤R1≤20 mm, the risk of cracking of the housing 30 due to stress during the integrated forming process can be reduced as much as possible, and the difficulty of forming the housing 30 can be reduced.

In some examples, the yield strength Re of the housing 30 and R1 may meet: 150 MPa≤Re≤400 Mpa, and 4 mm≤R1≤15 mm.

For example, Re=150 MPa, 170 MPa, 190 MPa, 210 MPa, 230 MPa, 260 MPa, 290 MPa, 310 MPa, 330 MPa, 370 MPa, 390 MPa, or 400 Mpa.

For example: R1=4 mm, 6 mm, 8 mm, 10 mm, 12 mm, 14 mm, or 15 mm.

In this example, by defining 150 MPa≤Re≤400 Mpa and 4 mm≤R1≤15 mm, it is helpful to achieve a balance between the forming difficulty and the deformation degree of the housing 30.

In some examples, the yield strength Re of the housing 30 and R1 may meet:160 MPa≤Re≤300 Mpa, and 5 mm≤R1≤10 mm.

For example, Re=160 MPa, 170 MPa, 180 MPa, 190 MPa, 200 MPa, 210 MPa, 220 MPa, 230 MPa, 240 MPa, 250 MPa, 260 MPa, 270 MPa, 280 MPa, 290 MPa, or 300 Mpa.

For example, R1=5 mm, 6 mm, 7 mm, 8 mm, 9 mm, or 10 mm.

In this example, by defining 160 MPa≤Re≤300 Mpa, 5 mm≤R1≤10 mm, the stress deformation of the housing 30 during use can be reduced as much as possible without affecting the difficulty of forming the housing 30.

In some examples, the tensile strength of the housing 30 at a temperature of 25°C is Rm, and Rm and R1 meet: 250 MPa≤Rm≤2000 MPa, and 2.5 mm≤R1≤20 mm.

The tensile strength may be understood as the maximum stress value that a material can withstand before breaking. A test method of the tensile strength Rm of the housing 30 at a temperature of 25°C in the example of the present application may be selected according to actual applications. For example, ISO 6892-2:2018 can be used to test the tensile strength Rm at a normal temperature of 25°C.

For example, Rm=250 MPa, 300 MPa, 350 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1100 Mpa, 1200 MPa, 1300 MPa, 1400 MPa, 1500 MPa, 1600 MPa, 1700 MPa, 1800 MPa, 1900 MPa, or 2000 MPa.

In this example, by setting250 MPa≤Rm≤1000 MPa and 2.5 mm≤R1≤20 mm, the stress on the mold can be reduced as much as possible during the manufacturing process of the housing 30 without affecting the strength of the housing 30, so that the size or surface of the housing 30 is not affected.

In some examples, Rm and R1 meet: 280 MPa≤Rm≤800 MPa, and 4 mm≤R1≤15 mm.

For example, Rm=280 MPa, 310 MPa, 340 MPa, 370 MPa, 390 MPa, 430 MPa, 470 MPa, 510 MPa, 540 MPa, 580 MPa, 610 MPa, 630 MPa, 660 MPa, 690 MPa, 720 MPa, 740 MPa, 780 MPa, or 800 MPa.

In some other examples, Rm and R1 meet: 380 MPa≤Rm≤600 MPa, or 5 mm≤R1≤10 mm.

For example, Rm=380 MPa, 390 MPa, 410 MPa, 440 MPa, 480 MPa, 520 MPa, 535 MPa, 570 MPa, 596 MPa, or 600 MPa.

In some examples, the maximum wall thicknesses of the at least two second walls 32 of the housing 30 are equal.

Further optionally, the wall thickness of each of the at least two second walls 32 of the housing 30 is uniform, and the wall thicknesses of the at least two second walls 32 are equal.

In this example, the wall thickness of the at least two second walls 32 is set to be equal. On the one hand, the processing difficulty of the housing 30 can be reduced, and on the other hand, the at least two second walls 32 can further be set to the minimum processing wall thickness, which helps to fully increase the space utilization of the housing 30.

In some other examples, the transition region 33 is arranged between any two adjacent second walls 32 among the at least two second walls 32, and the maximum thicknesses of the at least two transition regions 33 corresponding to the at least two second walls 32 are equal.

In this example, the maximum thicknesses of the at least two transition regions 33 between the at least two second walls 32 of the housing 30 to be equal, which helps to prepare the housing 30 into a symmetrical structure, and processing is easy. Moreover, there is no need to worry about reverse installation when assembling the housing 30 and the cover plate 40, which has a fool proofing function.

FIG. 10 shows another schematic cross-sectional view of a housing 30 in an example of the present application. As shown in the partial enlarged view of part B in FIG. 10, the first wall 31 and the second walls 32 are connected by a second filleted corner 34. As shown in the enlarged schematic diagram of part B in FIG. 10, the inner diameter of the second filleted corner 34 is r1, and the minimum thickness of the second wall 32 with the minimum thickness among at least two second walls 32 is T2, wherein the inner diameter r1 of the second filleted corner 34 and the minimum thickness T2 of the second wall 32 with the minimum thickness among at least two second walls 32 meet: 2.0≤r1/T2≤30.

It should be understood that the first wall 31 is connected to the at least two second walls 32. Optionally, any second wall 32 is connected to the first wall 31 via the second filleted corner 34 as shown in FIG. 10. In addition, the second filleted corner 34 here is implemented similarly to the first filleted corner 331 in FIG. 6. That is, the second filleted corner 34 has an inner surface and an outer surface, and both the inner surface and the outer surface are arc surfaces. The inner diameter r1 of the second filleted corner 34 may be understood as the radius of the circle where the inner arc is located.

It should be noted that, if each second wall 32 is a wall with uniform thickness, the minimum thickness T2 of the second wall 32 may refer to the thickness of the second wall 32 with the thinnest thickness among the at least two second walls 32. If the thickness of each second wall 32 is nonuniform, the minimum thickness T2 of the second wall 32 may refer to the thickness of a region with the thinnest thickness among all the second walls 32.

It should further be noted that if the certain second wall 32 includes a functional region, the minimum thickness of the second wall 32 actually refers to the minimum thickness of a region other than the functional region of the second wall 32, and the functional region includes at least one of the following regions: a pressure relief region, a region where the electrode terminal is located, a liquid injection region, and a welding region.

In this example, a ratio of the inner diameter r1 of the second filleted corner 34 between the first wall 31 and the second walls 32 to the minimum thickness T2 of the second wall 32 with the minimum thickness is set to be between [2.0, 30], which helps to balance the processing difficulty of the housing 30 with the space capacity and strength of the battery cell 20.

In some examples, the inner diameter r1 of the second filleted corner 34 and the minimum thickness T2 of the second wall 32 with the minimum thickness among the at least two second walls 32 meet: 2.5≤r1/T2≤10. For example, r1/T2=2.5, 3.0, 3.5, 4.0, 4.5, 5.0, 5.5, 6.0, 6.5, 7.0, 7.5, 8.0, 8.5, 9.0, 9.5, 10, etc.

Optionally, the inner diameter r1 of the second filleted corner 34 may meet: 0.8 mm ≤r1≤1.5 mm. For example, r1=0.8 mm, 0.9 mm, 1.0 mm, 1.1 mm, 1.2 mm, 1.3 mm, 1.4 mm, or 1.5 mm.

In this example, the inner diameter r1 of the second filleted corner 34 is set to be within [0.8 mm, 1.5 mm]. On the one hand, the difficulty of manufacturing the housing 30 will not be increased due to r1 being too small. On the other hand, the interference between the electrode assembly 22 and the second filleted corner 34 will not be reduced due to r1 being too large. That is, there is no need to lower the height of the electrode assembly 22 and sacrifice the capacity of the electrode assembly 22 to meet the assembly of the housing 30 and the electrode assembly 22. In addition, if r1 is too large, the housing 30 is also prone to deformation.

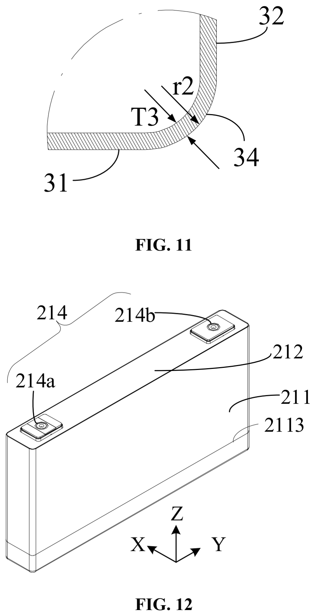

FIG. 11 shows another schematic partial enlarged diagram of a part B in FIG. 10. As shown in FIG. 11, the outer diameter of the second filleted corner 34 is r2, wherein r2 meets: 1 mm ≤r2≤ 2.5 mm. For example, r2=1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, or 2.5 mm.

Similar to the definition of the inner diameter r1 of the second filleted corner 34, the outer diameter r2 of the second filleted corner 34 may be understood as the radius of the circle where the outer arc of the second filleted corner 34 is located.

In this example, the outer diameter r2 of the second filleted corner 34 is set to be within [1.0 mm, 2.5 mm]. On the one hand, an insulating film outside the battery cell 20 will not be punctured by sharp points due to r2 being too small, thereby causing insulation failure. On the other hand, the thickness of the second filleted corner 34 will not be too thin due to r2 being too large, thereby affecting the strength of the shell 30.

In some examples, H and T2 meet: 300≤H/T2≤800. For example, H/T2=300, 350, 400, 450, 500, 550, 600, 650, 700, 750, 800, etc.

In this example, by setting a ratio between the depth H of the housing 30 and the minimum thickness T2 of the second wall 32 with the minimum thickness to be between [300, 800], it is possible to take both the volume utilization and the strength of the battery cell 20 into consideration.

As shown in FIG. 11, the maximum thickness of the second filleted corner 34 is T3, wherein the ratio of T3 to T2 meets: 0.8≤T3/T2≤2. For example, T3/T2=0.8, 0.9, 1.0, 1.1, 1.2, 1.3, 1.4, 1.5, 1.6, 1.7, 1.8, 1.9, or 2.0.

The thickness of the second filleted corner 34 may be uniform or non-uniform. The maximum thickness T3 of the second filleted corner 34 will be defined below by taking the uniform thickness of the second filleted corner 34 as an example. In some examples, the maximum thickness T3 of the second filleted corner 34 may be defined as a length of an extended line of a connecting line between a center of the circle where the inner arc is located and a center of the circle where the outer arc is located in any cross section in a direction perpendicular to an axis of the inner surface and the outer surface in the second filleted corner 34.

In this example, by setting the ratio between the maximum thickness T3 of the second filleted corner 34 and the minimum thickness T2 of the second wall 32 with the minimum thickness to be at [0.8, 2], it is possible to achieve a balance between the strength and manufacturability of the housing 30. That is, the housing 30 will not be insufficient in strength due to excessive thinning of the second filleted corner 34, nor will the housing 30 be difficult to manufacture due to excessive thinning of the second filleted corner 34.

In some examples, the wall thickness of the housing 30 is uniform, that is, all walls of the housing 30 have the equal wall thickness.

In this example, the wall thickness of the housing 30 is set to be uniform. On the one hand, the processing difficulty of the housing 30 can be reduced, and on the other hand, each wall of the housing 30 can further be set to the minimum processing wall thickness, which helps to fully increase the space utilization of the housing 30.

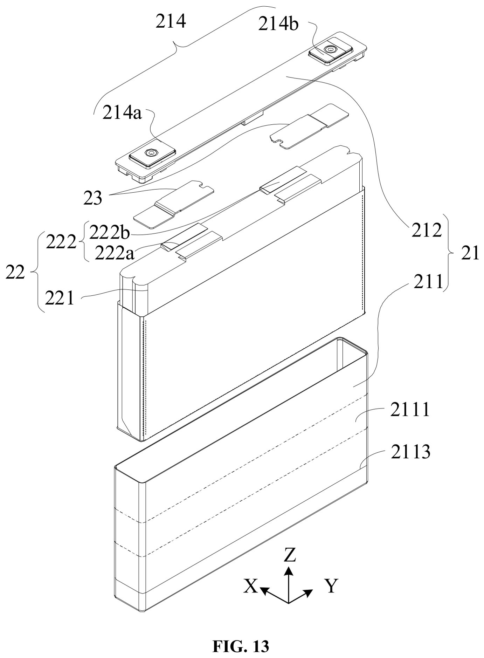

As shown in FIG. 12 and FIG. 13, an example of the present application further provides a battery cell 20, including an electrode assembly 22 and a housing 211. The electrode assembly 22 is accommodated in the housing 211.

It should be noted that the housing 211 may be the housing 30 in the various examples described above.

In some examples, the battery cell 20 further includes a cover plate 212 for covering an opening of the housing 211 to enclose the electrode assembly 22 in a cavity of the housing 211.

In some examples, the battery cell 20 is substantially in a shape of a cuboid, for example, the battery cell 20 is a cuboid battery cell. For another example, the battery cell 20 is a racetrack-shaped battery cell, and the thickness of the battery cell 20 is D1, wherein H, R1, and D1 meet: 0.15 mm≤R1*D1/H≤36 mm.

For example, R1*D1/H=0.15, 0.5, 1, 5, 10, 15, 17.5, 20, 22.5, 25, 27.5, 30, 32.5, 35, or 36.

In some examples, D2 may be a dimension of the battery cell 20 in an expansion direction of the electrode assembly 22.

In this example, by setting 0.15 mm≤R1*D1/H≤36 mm, the risk of likely piling up of materials during the forming process of the housing 211 due to the excessively small value of R1*D1/H, which may cause the housing 211 to be subjected to excessive force and crack, can be reduced, and the impact of the excessively large value of R1*D1/H on the energy density of the battery cell 20 can be reduced.

In this example, D1 meets: 15 mm≤D1≤90 mm. For example, D1=15 mm, 20 mm, 25 mm, 30 mm, 35 mm, 40 mm, 45 mm, 50 mm, 55 mm, 60 mm, 65 mm, 70 mm, 75 mm, 80 mm, 85 mm, or 90 mm.

In this example, H and R1 meet: 50 mm≤H≤250 mm, and 2.5 mm ≤R1≤ 20 mm.

In some examples, H, R1 and D1 meet 0.34 mm≤R1*D1/H≤18 mm.

In this example, by setting 0.34 mm ≤R1*D1/H≤18 mm, a balance can be achieved between the forming difficulty of the housing 211 and the energy density.

For example, R1*D1/H=0.34, 0.5, 1, 3, 5, 8, 11, 13, 16, or 18.

Similarly, in this example, D1 meets: 15 mm≤D1≤90 mm.

In this example, H and R1 meet: 75 mm≤H≤180 mm, and 4 mm≤R1≤15 mm.

In some examples, H, R1 and D1 meet: 0.9 mm≤R*D/H≤6.6 mm.

For example, R1*D1/H=0.9, 1, 1.3, 1.5, 1.8, 2.0, 2.3, 2.6, 2.8, 3.0, 3.3, 3.5, 3.8, 4.0, 4.3, 4.5, 4.7, 4.9, 5.1, 5.4, 5.7, 6.0, 6.2, 6.5, or 6.6.

In this example, D1 meets: 25 mm≤D1≤60 mm. For example, D1=25 mm, 28 mm, 31 mm, 34 mm,37 mm, 39 mm, 41 mm, 43 mm, 46 mm, 49 mm, 51 mm, 54 mm, 58 mm, 50 mm.

In this example, H and R1 meet: 90 mm≤H≤140 mm, and 3 mm≤R≤10 mm.

It should be noted that a value range of R1, a value range of H, a value range of D1 and a value range of R1*D1/H may be interrelated. For example, when 15 mm≤D1≤90 mm, 50 mm≤H≤250 mm, and 2.5 mm≤R1≤20mm, 0.15 mm≤R1*D1/H≤36 mm. For another example, when 15 mm≤D1≤90 mm, 75 mm≤H≤180 mm, and 4 mm≤R1≤15 mm, 0.34 mm≤R*D/H≤18 mm. For another example, when 25 mm≤D1≤60 mm, 90 mm≤H≤140 mm, and 3 mm≤R1≤10 mm, 0.9 mm≤R1*D1/H≤6.6 mm.

In some examples, the thickness of the electrode assembly 22 is D2, and R1 and D2 meet: 0.125≤R1/D2≤0.45.

For example, R1/D2=0.125, 0.15, 0.175, 0.2, 0.225, 0.25, 0.275, 0.3, 0.325, 0.35, 0.375, 0.4, 0.425, or 0.45.

Optionally, D2 may be a dimension of the electrode assembly 22 in the expansion direction.

In this example, 0.125≤R1/D2≤0.45 is set. On the one hand, R1 will not interfere with the electrode assembly 22 or the residual space inside the battery cell 20 will not be insufficient due to R1 being too large, thereby affecting the performance of the battery cell 20. On the other hand, R1 will not be too small, resulting in difficulty in forming the housing 211.

In an example of the present application, the electrode assembly 22 includes a negative electrode plate 224, the negative electrode plate 224 includes a negative electrode active material capable of reversibly deintercalating and intercalating metal ions, and the negative electrode active material includes a silicon-based material. The housing 211 is used to accommodate the electrode assembly 22, a tensile strength of at least a partial region of the housing 211 at a temperature of 25°C is Rm, and Rm meets: 250 MPa≤Rm≤2000 MPa.

It should be understood that as shown in FIG. 12 and FIG. 13, the electrode assembly 22 in the example of the present application may include a tab 222 and an electrode body portion 221, wherein the tab 222 of the electrode assembly 22 may include a positive tab 222a and a negative tab 222b. The positive tab 222a may be formed by stacking parts of the positive electrode plate 223 not coated with the positive electrode active material, and the negative tab 222b may be formed by stacking parts of the negative electrode plate 224 not coated with the negative electrode active material. The electrode body portion 221 may be formed by stacking or winding the positive electrode plate 223 and the negative electrode plate 224 together.

The negative electrode active material included in the negative electrode plate 224 of the example of the present application may be flexibly set according to actual applications. For example, the negative electrode active layer may include a silicon-based material. In a case where the silicon-based material is added to the negative electrode plate 224, the silicon-based material may accommodate more metal ions, effectively increasing the energy density of the battery cell 20. In addition, the deformation amount of the electrode assembly 22 inside the battery cell 20 during use can further be increased. Especially during the charging process of the battery cell 20, the metal ions are intercalated in the silicon-based material of the negative electrode plate 224, which will cause the electrode assembly 22 to expand in volume, thereby increasing the pressure of the electrode assembly 22 on the housing 211 of the battery cell 20.

Therefore, increasing the tensile strength Rm of at least a partial region of the housing 211 at a room temperature of 25°C can improve the deformation capability of this part of housing 211, making this part of housing 211 less likely to be damaged during the use of the battery cell 20, thereby improving the structural stability of the battery cell 20 and thus prolonging the service life of the battery cell. However, the tensile strength Rm of at least a partial region of the housing 211 at the room temperature should not be too large, so as to reduce the selecting difficulty and processing difficulty of the material of the housing 211, save costs, and facilitate processing. For example, the tensile strength Rm of at least a partial region of the housing 211 at a room temperature may generally be set to meet 250 MPa≤Rm≤2000 MPa.

It should be understood that the value range of the tensile strength Rm of at least a partial region of the housing 211 at a room temperature of 25°C in the example of the present application may be adjusted according to actual applications. For example, the value of the tensile strength Rm at the room temperature may meet 250 MPa≤Rm≤2000 MPa. For another example, the value of the tensile strength Rm at the room temperature may further meet 400 MPa≤Rm≤1200 MPa. On the one hand, increasing the tensile strength Rm of at least a partial region of the housing 211 at a room temperature can improve the deformation capability of the part of housing 211 to resist the expansion of the electrode assembly 22, making the part of housing 211 less likely to be damaged, thereby improving the structural stability of the battery cell 20 and prolonging the service life of the battery cell. On the other hand, the tensile strength Rm of at least a partial region of the housing 211 at the room temperature is controlled to not be too large, so as to reduce the selecting difficulty and processing difficulty of the material of the housing 211, save costs, and facilitate processing.

Further, the tensile strength Rm of at least a partial region of the housing 211 at a room temperature may further be set to meet 450 MPa≤Rm≤800 MPa. The tensile strength Rm of at least a partial region of the housing 211 at a room temperature is not too large or too small, which can improve the deformation capability of the part of housing 211 to resist the expansion of the electrode assembly 22, and is easy to implement and saves costs.

In some examples, the value of the tensile strength Rm of at least a partial region of the housing 211 in the example of the present application at a room temperature may also be set to be other values. For example, the value of the tensile strength Rm at the room temperature may be any one of the following values or between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength in the example of the present application refers to the maximum stress value that the material can withstand before breaking. A test method of the tensile strength Rm of at least a partial region of the housing 211 at a temperature of 25°C in the example of the present application may be selected according to actual applications. For example, the national standard GB/T 228.1-2010 can be used to test the tensile strength Rm at a normal temperature of 25°C.

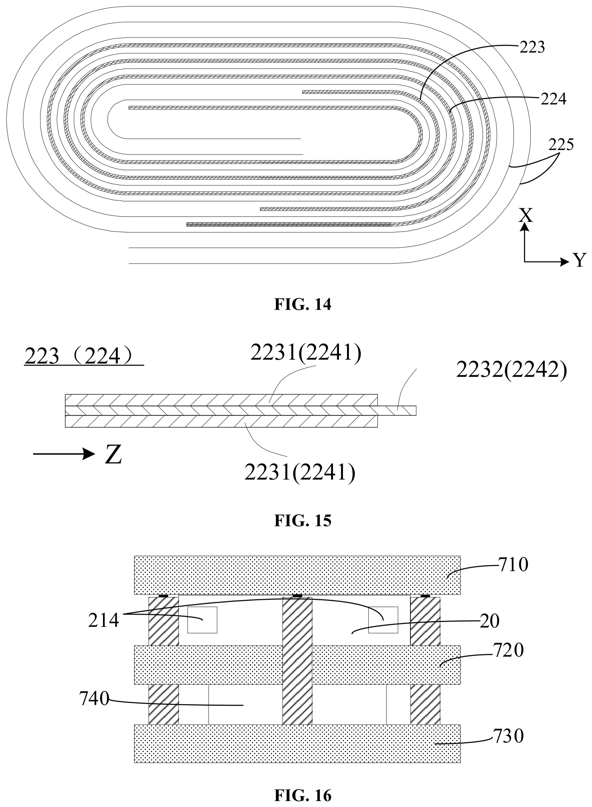

FIG. 14 shows a schematic cross-sectional view of an electrode assembly 22 in an example of the present application. For example, the schematic cross-sectional view shown in FIG. 14 may be a schematic cross-sectional view of the electrode assembly 22 shown in FIG. 12, and the cross section is perpendicular to a height direction Z of the battery cell 20. FIG. 15 shows a schematic partial cross-sectional view of a positive electrode plate 223 or a negative electrode plate 224 in an example of the present application. For example, FIG. 15 may represent a schematic partial cross-sectional view of the negative electrode plate 224 of the electrode assembly 22 shown in FIG. 14 in its thickness direction, or may also represent a schematic partial cross-sectional view of the positive electrode plate 223 of the electrode assembly 22 shown in FIG. 14 in its thickness direction.

As shown in FIG. 12 to FIG. 15, the electrode assembly 22 of the example of the present application includes a positive electrode plate 223 and a negative electrode plate 224. The electrode assembly 22 may be formed by stacking or winding the positive electrode plate 223 and the negative electrode plate 224. For example, the electrode assembly 22 may include a plurality of positive electrode plates 223 and a plurality of negative electrode plates 224. In the thickness direction Y of the electrode assembly 22, the plurality of positive electrode plates 223 and the plurality of negative electrode plates 224 are alternately stacked with each other to form a stacked electrode assembly 22. For another example, the electrode assembly 22 may include a plurality of positive electrode plates 223, and the negative electrode plate 224 includes a plurality of bending sections and a plurality of stacking sections that are interconnected and alternately arranged. After the bending sections are bent, the plurality of positive electrode plates 223 and the plurality of stacking sections of the negative electrode plates 224 are alternately stacked with each other to form a stacked electrode assembly 22. For another example, the electrode assembly may also be formed by winding the positive electrode plates 223 and the negative electrode plates 224 together to form a wound electrode assembly 22. For the convenience of description, the example of the present application takes the wound electrode assembly 22 as an example in the accompanying drawings, but the example of the present application is not limited thereto. Further, the electrode assembly 22 may also include a spacer 225 for isolating the positive electrode plate 223 and the negative electrode plate 224.

In the example of the present application, the negative electrode plate 224 includes a negative electrode active material. For example, the negative electrode active material coated on the negative electrode plate 224 can be used to form a negative electrode active material layer 2241, and the negative electrode active material layer 2241 may be arranged on a surface of at least one side of a negative electrode current collector 2242. For example, the negative electrode active material layers 2241 may be arranged on both sides of the negative electrode current collector 2242 perpendicular to the thickness direction thereof.

In some examples, the negative electrode current collector 2242 may be a metal foil or a composite current collector. As an example of the metal foil, a copper foil, a copper alloy foil, an aluminum foil, and an aluminum alloy foil may be used. The composite current collector may include a high molecular material substrate layer and a metal material layer formed on at least one surface of the high molecular material substrate layer. As an example, the metal material may include one or more of copper, a copper alloy, nickel, a nickel alloy, titanium, a titanium alloy, silver, and a silver alloy. As an example, the high molecular material substrate layer may include one or more of polypropylene (PP), polyethylene terephthalate (PET), polybutylene terephthalate (PBT), polystyrene (PS), and polyethylene (PE).

It should be understood that the negative electrode active material in the example of the present application may be set flexibly according to actual applications. Specifically, the negative electrode active material in the example of the present application may include a silicon-based material, thereby improving the energy density of the battery. For example, the silicon-based material may include at least one of elemental silicon, a silicon oxide, a silicon-carbon composite, a silicon-nitrogen composite, a silicon containing alloy, or a silicon-oxygen-carbon composite.

In some examples, the silicon-based material may include a silicon element as well as one or more of an alkali metal element and an alkaline earth metal element. As an example, the alkali metal element may include Li. As an example, the alkaline earth metal element includes Mg. As an example, the silicon-based material may be a silicon-based material pre-intercalated with an alkali metal and/or alkaline earth metal, for example, may be a silicon-based material pre-intercalated with Li and/or Mg.

It should be understood that the mass proportion g of the silicon-based material in the example of the present application may be flexibly set according to actual applications.

For example, the value range of the mass proportion g of the silicon-based material may be set to meet 2%≤g≤40%. The silicon-based material is added to the negative electrode active material of the negative electrode plate 224. Since the silicon-based material can accommodate more metal ions than other elements, for example, the capacity of the silicon-based material is about ten times that of graphite, the energy density of the battery cell 20 can be effectively improved. At the same time, the mass proportion g of the silicon-based material should not be set too large, otherwise it will increase the difficulty of processing the electrode assembly 22. In addition, it will also increase the deformation amount of the electrode assembly 22 in the battery cell 20 during use. In particular, during the charging process of the battery cell 20, the metal ions are intercalated in the silicon-based material of the negative electrode plate 224, which will cause the volume expansion of the electrode assembly 22, thereby increasing the pressure of the electrode assembly 22 on the housing 211 of the battery cell 20, thereby increasing the difficulty of processing the battery cell 20.

Further, the value range of the mass proportion g of the silicon-based material may be set to meet 8%≤g≤40%. Appropriately reducing the mass proportion g of the silicon-based material can reduce the difficulty of processing the electrode assembly 22, and can also decrease the deformation amount of the electrode assembly 22 during the charging and discharging process of the battery cell 20. That is, the volume expansion of the electrode assembly 22 is reduced, thereby reducing the pressure of the electrode assembly 22 on the housing 211 of the battery cell 20, and reducing the requirements for the structural strength of the housing 211, which is convenient for processing and reduces costs.

Further, the value range of the mass proportion g of the silicon-based material may be set to meet 10%≤g≤30%. Reasonable adjustment of the mass proportion g of the silicon-based material can not only effectively increase the energy density of the battery cell 20, but also reduce the processing difficulty of the electrode assembly 22, and effectively decrease the deformation amount of the electrode assembly 22 during the charging and discharging process of the battery cell 20, thereby reducing the requirements for the structural strength of the housing 211.

In some examples, the mass proportion g of the silicon-based material in the example of the present application may also be set to other values. For example, the value of the mass proportion g of the silicon-based material may be any one of the following values or between any two of the following values: 5%, 8%, 10%, 13%, 15%, 18%, 20%, 23%, 25%, 28%, 30%, 33%, 35%, 38%, 40%, 43%, 45%, 48% and 50%.

It should be understood that the mass proportion g of the silicon-based material in the negative electrode active material of the example of the present application represents a ratio of the mass of the silicon-based material in the negative electrode active material to the total mass of the negative electrode active material, and the test method for the mass proportion g of the silicon-based material may be selected according to the actual applications, and can be tested by methods known in the art.

In the example of the present application, the negative electrode active material may include other materials. For example, the negative electrode active material may further include a negative electrode binder. For example, the negative electrode binder may include one or more of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS), which is not limited in the example of the present application.

In some examples, the negative electrode active material may further include a negative electrode conductive agent. The type of the negative electrode conductive agent is not particularly limited in the present application. As an example, the negative electrode conductive agent may include one or more of superconducting carbon, conductive graphite, acetylene black, carbon black, Ketjen black, carbon dots, carbon nanotubes, graphene and carbon nanofiber.

In some examples, the negative electrode active material may further include other auxiliaries. As an example, the other auxiliaries may include a thickeners, such as carboxymethyl cellulose sodium (CMC), and a PTC thermistor material.

The negative electrode plate 224 does not exclude other additional functional layers other than the negative electrode active material layer 2241. For example, in some examples, the negative electrode plate 224 may further include a conductive primer coating (e.g., composed of a conductive agent and a binder) sandwiched between the negative electrode current collector 2242 and the negative electrode film layer 2241 and arranged on a surface of the negative electrode current collector 2242. In some examples, the negative electrode plate 224 may further include a protection layer covering a surface of the negative electrode film layer 2241.

In some examples, the negative electrode plate 224 may be prepared according to the following methods: dispersing the negative electrode active material, optional negative electrode binder, optional negative electrode conductive agent, and optional other auxiliaries in a solvent and stirring evenly to form a negative electrode slurry; applying the negative electrode slurry onto the negative electrode current collector 2242, and forming the negative electrode plate 224 after drying, cold pressing, and other processes. The solvent may be N-methyl pyrrolidone (NMP) or deionized water, but the example of the present application is not limited thereto.

In the example of the present application, a value of the mass proportion g of the silicon-based material and the value of the tensile strength Rm of at least a partial region of the housing 211 at a temperature of 25°C can be mutually restricted to balance a relationship between the energy density of the battery cell 20 and structural strength. For example, in the negative electrode active material, the mass proportion of the silicon-based material is g, the material of at least a partial region of the housing 211 includes an iron element, and Rm and g meet 2%<g<40%, and 300 MPa<Rm<2000 MPa. The material of at least a partial region of the housing 211 includes an iron element, which can increase the structural strength of the material of the part of region of the housing 211 to meet design requirements.

In some examples, the material of at least a partial region of the housing 211 includes carbon steel or stainless steel, and Rm and g meet 2.5%≤g≤15%, and 315 MPa≤Rm<800 MPa. For example, the material of at least a partial region of the housing 211 may include Q195 carbon steel, which is easy to process and can meet the value of the tensile strength Rm under the condition of 25°C.

In some examples, the material of at least a partial region of the housing 211 includes carbon steel or stainless steel, and Rm and g meet 4.5%≤g≤40%, and 380MPa≤Rm<2000MPa. For example, the material of at least a partial region of the housing 211 may include SPCC carbon steel, which is easy to process and can meet the value of the tensile strength Rm under the condition of 25°C.

In some examples, Rm and g meet 8%≤g≤40%, and 400 MPa≤Rm≤2000 MPa. For example, the material of at least a partial region of the housing 211 may include modified stainless steel, which is easy to process and can meet the value of the tensile strength Rm under the condition of 25°C.

In some examples, Rm and g meet 10%≤g≤40%, and 480 MPa≤Rm≤2000 MPa. For example, the material of at least a partial region of the housing 211 may include 316 stainless steel, which is easy to process and can meet the value of the tensile strength Rm under the condition of 25°C.

In some examples, Rm and g meet 15%≤g≤40%, and 520 MPa≤Rm≤2000 MPa. For example, the material of at least a partial region of the housing 211 may include 304 stainless steel, which is easy to process and can meet the value of the tensile strength Rm under the condition of 25°C.

In some examples, Rm and g meet 20%≤g≤40%, and 600MPa≤Rm<2000MPa.

The following is a comparative explanation through a plurality of comparative examples and a plurality of examples. Specifically, the battery cells 20 in the following examples and comparative examples are all based on the square a shell battery shown in FIG. 12 and FIG. 13, wherein the housing 211 is of a hollow structure with an opening at one end.

In the following examples and comparative examples, the preparation methods of the positive electrode plate 223, the negative electrode plate 224, the electrolyte solution and the spacer 225 of the battery cell 20 are as follows.

### 1. Preparation of positive electrode plate 223

A positive electrode active material LiNi_{0.95}Co_{0.04}Mn_{0.01}O₂, a conductive agent Super P, and a binder polyvinylidene fluoride (PVDF) are prepared in N-methylpyrrolidone (NMP) into a positive electrode slurry, wherein a solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate 223.

### 2. Preparation of negative electrode plate 224

A negative electrode active material, a conductive agent Super P, a thickener carboxymethyl cellulose (CMC), and a binder styrene butadiene rubber (SBR) are mixed evenly in deionized water to prepare a negative electrode slurry, wherein the negative electrode active material includes graphite and a silicon-based material, and the silicon-based material is a silicon oxide. A solid content in the negative electrode slurry is 30wt%, and a mass ratio of the negative electrode active material, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate 224.

### 3. Preparation of electrolyte solution

In an argon atmosphere glove box (H2O<0.1ppm, O2<0.1ppm), fully dried electrolyte salt LiPF6 is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain the electrolyte solution with a concentration of 1 mol/L.

### 4. Preparation of spacer 225

A 16 µm polyethylene (PE) film is used as a spacer 225.

### 5. Preparation of lithium-ion battery cell 20

The positive electrode plate 223, the spacer 225, and the negative electrode plate 224 are sequentially stacked, such that the spacer 225 is located between the positive electrode plate 223 and the negative electrode plate 224 to function for separating the positive electrode from the negative electrode, and then wound to obtain a bare battery cell. A tab is welded, the bare battery cell is placed in a shell with different materials, and the electrolyte solution prepared above is injected into a dried shell. The preparation of the lithium-ion battery cell 20 is completed after encapsulation, standing, formation, shaping, and capacity test.

In the following examples and comparative examples, the tensile strength of the housing 211 of the battery cell 20 at a temperature of 25°C is Rm, and in order to obtain different tensile strengths Rm, different materials are correspondingly selected for the housing 211. The negative electrode active material of the negative electrode plate 224 of the electrode assembly 22 of the battery cell 20 includes a silicon-based material, and the mass proportion of the silicon-based material is g; and the above specific parameter settings are shown in Table 1 below. In addition, in each example and comparative example, the materials of all regions of the housing 211 are the same, and the tensile strength Rm of the housing 211 at the condition of 25°C is measured using the method specified in GB/T 228.1-2010. In addition, the battery cells 20 in the following examples and comparative examples have the same setting conditions except that the parameter settings shown in Table 1 are different. For example, in each example, the wall thickness of each wall of the housing 211 of the battery cell 20 is 0.25 mm. For another example, in each example, the capacity of the battery cell 20 is 350 Ah.

Cyclic charging fatigue testing is performed on the battery cells 20 in the following embodiments and comparative examples. Specifically, FIG. 16 shows a schematic structural diagram of a fixture 700 for cyclic charging fatigue testing in an example of the present application. As shown in FIG. 16, the fixture 700 includes three 10 mm steel plates, and the steel plates completely cover a wall with the maximum area of the battery cell 20. For the sake of convenience, the three steel plates of the fixture are sequentially defined herein as a first steel plate 710, a second steel plate 720, and a third steel plate 730. The first steel plate 710 and the third steel plate 730 are located at two ends of the fixture 700, and are connected and fixed by bolts. The second steel plate 720 in the middle is constrained by a guide rail, so that the second steel plate 720 can only move in a translational manner in a direction perpendicular to a large surface of the second steel plate 720. The battery cell 20 is clamped between the first steel plate 710 and the second steel plate 720, and the wall with the maximum area of the battery cell 20 is attached to the first steel plate 710 and the second steel plate 720. A pressure sensor 740 is arranged between the second steel plate 720 and the third steel plate 730. An initial extrusion force of the battery cell 20 is adjusted by the second steel plate 720 by adjusting a position of the second steel plate 720.

Specifically, the battery cell 20 is clamped and fixed in the dedicated fixture 700, ensuring that the two oppositely arranged walls with the maximum area of the battery cell 20 are clamped. The initial pressure is set to be 2000 N, and an electrode terminal 214 of the battery cell 20 is connected to dedicated battery charging and discharging equipment.

The fixture 700 clamping the battery cell 20 is placed in a constant temperature environment of 25±2°C, and the testing is started after the battery cell 20 reaches temperature equilibrium.

The specific testing steps are carried out in accordance with Chapter 6.4 "Standard Cycle Life" of GBT31484-2015 Requirements and Test Methods for Cycle Life of Power Batteries for Electric Vehicles, and the test cycle end condition is changed to "stop testing until a weld 2113 of the battery cell 20 is damaged".

For example, the test can be carried out according to the following steps: step a, discharge is performed at 1I(A) to a discharge termination condition specified by the enterprise; step b, leaving is performed for not less than 30 minutes or a leaving condition specified by the enterprise; step c, charging is performed according to the method of 6.1.1.3; step d, leaving is performed for not less than 30 minutes or the leaving condition specified by the enterprise; step e, discharge is performed at 1I1(A) to the discharge termination condition specified by the enterprise; and step f, cycle from step b to step e is performed until the weld 2113 is damaged, and the test is stopped.

During the above test process, the weld 2113 of the battery cell 20 is continuously observed until the weld 2113 leaks, and the number of cycles is recorded to obtain the condition of the housing 211 at 1000 cycles as shown in Table 1 below. In the following examples and comparative examples, the weld 2113 refers to a weld between the housing 211 and the cover plate 212. That is, the weld 2113 surrounds an open end of the housing 211, and the housing 211 is of an integrally formed structure.

**Table 1**

| | Rm(MPa) | g | Housing material | Housing condition after 1000 cycles |
|---|---|---|---|---|
| Comparative Example 1 | 178 | 0.03 | Aluminum | 656 housing cracks |
| Comparative Example 2 | 189 | 0.05 | Aluminum | 437 housing cracks |
| Example 1 | 328 | 0.025 | Q195 | Uncracked |
| Example 2 | 328 | 0.15 | Q195 | Uncracked |
| Example 3 | 396 | 0.045 | SPCC | Uncracked |
| Example 4 | 396 | 0.4 | SPCC | Uncracked |
| Example 5 | 421 | 0.08 | Modified stainless steel | Uncracked |
| Example 6 | 421 | 0.4 | Modified stainless steel | Uncracked |
| Example 7 | 459 | 0.1 | SUS430 | Uncracked |
| Example 8 | 459 | 0.4 | SUS430 | Uncracked |
| Example 9 | 533 | 0.15 | SUS304 | Uncracked |
| Example 10 | 533 | 0.4 | SUS304 | Uncracked |
| Example 11 | 625 | 0.2 | SUS304 | Uncracked |
| Example 12 | 625 | 0.4 | SUS304 | Uncracked |

It should be understood that in Table 1 above, the material of the housing 211 may be Q195 carbon steel, and the tensile strength Rm of Q195 carbon steel at a room temperature of 25°C is usually at least 315 MPa to 430 MPa. The above example only takes 328 MPa as an example, but is not limited thereto. Similarly, the material of the housing 211 may be SPCC carbon steel, and the tensile strength Rm of the SPCC carbon steel at a room temperature of 25°C is usually at least 380 MPa to 430 MPa, and only 396 MPa is taken as an example in the above example. The material of the housing 211 may be modified stainless steel, and the tensile strength Rm of the modified stainless steel at a room temperature of 25°C is usually at least 400 MPa to 600 MPa, and only 421 MPa is taken as an example in the above example. The material of the housing 211 may be SUS430 stainless steel, and the tensile strength Rm of SUS430 stainless steel at a room temperature of 25°C is usually at least 450 MPa, and only 459 MPa is taken as an example in the above example. The material of the housing 211 may be SUS304 stainless steel, and the tensile strength Rm of the SUS304 stainless steel at a room temperature of 25°C is usually at least 520 MPa, and only 533 MPa and 625 MPa are taken as examples in the above example.

By comparing the two comparative examples in Table 1 above with the 12 examples, it can be seen that when the housing 211 is made of different materials, different tensile strengths Rm can be determined accordingly. In a case where the tensile strength Rm meets 250 MPa≤Rm≤2000 MPa, for example, in Examples 1-12, even if the mass proportion g of the silicon-based material in the material of the negative electrode plate 224 of the battery cell 20 is different, the number of failure fatigue times of the battery cell 20 can reach more than one thousand to meet the design requirements of the battery cell 20. However, in a case where the tensile strength Rm does not meet 250 MPa≤Rm≤2000 MPa, for example, in Comparative Examples 1-2, even if the mass proportion g of the silicon-based material in the material of the negative electrode plate 224 of the battery cell 20 is low, the number of failure fatigue times of the battery cell 20 cannot reach one thousand times, which cannot meet the design requirements of the battery cell 20.

It should be understood that the battery cell 20 of the example of the present application can also meet other design requirements. Specifically, a yield strength of at least a partial region of the housing 211 at a temperature of 25°C is Re, and Re meets: 140 MPa≤Re≤1000 MPa.

Increasing the yield strength Re of at least a partial region of the housing 211 at a room temperature can improve the deformation capability of the housing 211, thereby improving the structural stability of the battery cell 20 and prolonging the service life of the battery cell. In a case where the electrode assembly 22 will cyclically expand and shrink in volume during the charging and discharging process of the battery cell 20, increasing the yield strength Re of at least a partial region of the housing 211 at the room temperature can increase the maximum extrusion force that the housing 211 can withstand. Without exceeding the yield strength limit of the housing 211, the housing 211 is not prone to being damaged, and the deformation of the housing 211 can be restored, thereby prolonging the service life of the housing 211. However, the yield strength Re of at least a partial region of the housing 211 at the room temperature should not be too large, so as to reduce the selecting difficulty and processing difficulty of the material of the housing 211, save costs, and facilitate processing. For example, the yield strength Re of at least a partial region of the housing 211 at a room temperature may generally be set to meet 140 MPa≤Re≤1000 MPa.

It should be understood that the value range of the yield strength Re of at least a partial region of the housing 211 in the example of the present application at a room temperature of 25°C may be adjusted according to actual applications. For example, the value of the yield strength Re at the room temperature may meet 140 MPa≤Re≤1000 MPa. For another example, the value of the yield strength Re at the room temperature may meet 180 MPa≤Re≤600 MPa. On the one hand, increasing the yield strength Re of at least a partial region of the housing 211 at a room temperature can improve the deformation capability of the part of housing 211 to resist the expansion of the electrode assembly 22, making the part of housing 211 less likely to be damaged. Moreover, without exceeding the yield strength limit of the housing 211, if the expansion of the electrode assembly 22 is reduced, the deformation of the housing 211 can also be restored, thereby improving the structural stability of the battery cell 20 and prolonging the service life of the battery cell. On the other hand, the yield strength Re of at least a partial region of the housing 211 at the room temperature is controlled to not be too large, so as to reduce the selecting difficulty and processing difficulty of the material of the housing 211, save costs, and facilitate processing.

Further, the yield strength Re of at least a partial region of the housing 211 at a room temperature may further be set to meet 220 MPa≤Rm≤400 MPa. The yield strength Re of at least a partial region of the housing 211 at a room temperature is not too large or too small, which can improve the deformation capability of the part of housing 211 to resist the expansion of the electrode assembly 22, and is easy to implement and saves costs.

In some examples, the value of the yield strength Re of at least a partial region of the housing 211 in the example of the present application at a room temperature may also be set to be other values. For example, the value of the yield strength Re at the room temperature may be any one of the following values or between any two of the following values: 140 MPa, 150 MPa, 160 MPa, 180 MPa, 200 MPa, 220 MPa, 250 MPa, 280 MPa, 300 MPa, 330 MPa, 350 MPa, 380 MPa, 400 MPa, 430 MPa, 450 MPa, 480 MPa, 500 MPa, 530 MPa, 550 MPa, 580 MPa, 600 MPa, 630 MPa, 650 MPa, 680 MPa, 700 MPa, 730 MPa, 750 MPa, 780 MPa, 800 MPa, 830 MPa, 850 MPa, 880 MPa, 900 MPa, 930 MPa, 950 MPa, 980 MPa and 1000 MPa.

It should be understood that the yield strength of the example of the present application can be understood as the critical stress value at which a material yields. Usually, after the material is subjected to stress, as the stress increases, in addition to elastic deformation, plastic deformation may also occur. A point at which the material undergoes plastic deformation may be called a yield point, and a strength corresponding to the yield point is called the yield strength. In addition, the yield strength of the example of the present application generally refers to the upper yield strength, that is, the upper yield strength of at least a partial region of the housing 211 at a temperature of 25°C is Re.

A test method of the yield strength Re of at least a partial region of the housing 211 at a temperature of 25°C in the example of the present application may be selected according to actual applications. For example, the national standard GB/T 228.1-2010 may be used to test the yield strength Re at a room temperature of 25°C.

In an example of the present application, the value of the mass proportion g of the silicon-based material and the value of the yield strength Re of at least a partial region of the housing 211 at a temperature of 25°C can be mutually restricted, so as to improve the structural strength of the housing 211 while increasing the energy density of the battery cell 20, thereby improving the structural strength of the battery cell 20 and prolonging the service life of the battery cell.

For example, in the negative electrode active material, the mass proportion of the silicon-based material is g, and g and Re meet 2%<g<40%, and 140 MPa<Re<600 MPa. The silicon-based material is added to the negative electrode active material of the negative electrode plate 224. Since the silicon-based material can accommodate more metal ions than other elements, for example, the capacity of the silicon-based material is about ten times that of graphite, the energy density of the battery cell 20 can be effectively increased. At the same time, the mass proportion g of the silicon-based material should not be set too large, otherwise it will increase the processing difficulty of the electrode assembly 22. It will also increase the deformation amount of the electrode assembly 22 in the battery cell 20 during use. Especially during the charging process of the battery cell 20, metal ions are intercalated in the silicon-based material of the negative electrode plate, which will cause the volume expansion of the electrode assembly 22, thereby increasing the pressure of the electrode assembly 22 on the housing 211 of the battery cell 20, and increasing the processing difficulty of the battery cell 20. Therefore, the yield strength Re of at least a partial region of the housing 211 at a room temperature may be increased appropriately, so as to improve the deformation capability of the part of housing 211 to resist the expansion of the electrode assembly 22, making the part of housing 211 less likely to be damaged. Moreover, without exceeding the yield strength limit of the housing 211, if the expansion of the electrode assembly 22 is reduced, the deformation of the housing 211 can also be restored, thereby improving the structural stability of the battery cell 20 and prolonging the service life of the battery cell. In addition, the yield strength Re of at least a partial region of the housing 211 at the room temperature is controlled to not be too large, so as to reduce the selecting difficulty and processing difficulty of the material of the housing 211, save costs, and facilitate processing.

In some examples, the material of at least a partial region of the housing 211 includes carbon steel or stainless steel, and g and Re meet 4.5%≤g≤40%, and 170 MPa≤Re<600MPa. For example, the material of at least a partial region of the housing 211 may include SPCC carbon steel, which is easy to process and can meet the value of the yield strength Re under the condition of 25°C.

In some examples, g and Re meet 8%≤g≤40%, and 180 MPa≤Re<600 MPa. For example, the material of at least a partial region of the housing 211 may include modified stainless steel, which is easy to process and can meet the value of the yield strength Re under the condition of 25°C.

In some examples, g and Re meet 10%≤g≤40%, and 190 MPa≤Re<600 MPa. For example, the material of at least a partial region of the housing 211 may include 316 stainless steel, which is easy to process and can meet the value of the yield strength Re under the condition of 25°C.

In some examples, g and Re meet 15%≤g≤40%, and 200MPa≤Re<600MPa. For example, the material of at least a partial region of the housing 211 may include 304 stainless steel, which is easy to process and can meet the value of the yield strength Re under the condition of 25°C.

In some examples, g and Re meet 20%≤g≤40%, and 210MPa≤Re<600MPa.

The following is a comparative explanation through a plurality of comparative examples and a plurality of examples. Specifically, the battery cells 20 in the following examples and comparative examples are all based on the square a shell battery shown in FIG. 12 and FIG. 13, wherein the housing 211 is of a hollow structure with an opening formed at one end.

In the following examples and comparative examples, the preparation methods of the positive electrode plate 223, the negative electrode plate 224, the electrolyte solution and the spacer 225 of the battery cell 20 are as follows.

### 1. Preparation of positive electrode plate 223

A positive electrode active material LiNi_{0.95}Co_{0.04}Mn_{0.01}O₂, a conductive agent Super P, and a binder polyvinylidene fluoride (PVDF) are prepared in N-methylpyrrolidone (NMP) into a positive electrode slurry, wherein a solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate 223.

### 2. Preparation of negative electrode plate 224

A negative electrode active material, a conductive agent Super P, a thickener carboxymethyl cellulose (CMC), and a binder styrene butadiene rubber (SBR) are mixed evenly in deionized water to prepare a negative electrode slurry, wherein the negative electrode active material includes graphite and a silicon-based material, and the silicon-based material is a silicon oxide. A solid content in the negative electrode slurry is 30wt%, and a mass ratio of the negative electrode active material, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate 224.

### 3. Preparation of electrolyte solution

In an argon atmosphere glove box (H2O<0.1ppm, O2<0.1ppm), fully dried electrolyte salt LiPF6 is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain the electrolyte solution with a concentration of 1 mol/L.

### 4. Preparation of spacer 225

A 16 µm polyethylene (PE) film is used as a spacer 225.

### 5. Preparation of lithium-ion battery cell 20

The positive electrode plate 223, the spacer 225, and the negative electrode plate 224 are sequentially stacked, such that the spacer 225 is located between the positive electrode plate 223 and the negative electrode plate 224 to function for separating the positive electrode from the negative electrode, and then wound to obtain a bare battery cell. A tab is welded, the bare battery cell is placed in a shell with different materials, and the electrolyte solution prepared above is injected into a dried shell. The preparation of the lithium-ion battery cell 20 is completed after encapsulation, standing, formation, shaping, and capacity test.

In the following examples and comparative examples, the yield strength of the housing 211 of the battery cell 20 at a temperature of 25°C is Re, and in order to obtain different yield strengths Re, different materials are correspondingly selected for the housing 211. The negative electrode active material of the negative electrode plate 224 of the electrode assembly 22 of the battery cell 20 includes a silicon-based material, and the mass proportion of the silicon-based material is g; and the above specific parameter settings are shown in Table 1 below. In addition, in each example and comparative example, the material of all regions of the shell 211 is the same, and the yield strength Re of the shell 211 at 25° C. is measured using the method specified in GB/T 228.1-2010. In addition, the battery cells 20 in the following examples and comparative examples have the same setting conditions except that the parameters shown in Table 1 are different. For example, in each example, the wall thickness of each wall of the housing 211 of the battery cell 20 is 0.25 mm. For another example, in each example, the capacity of the battery cell 20 is 350 Ah.

Cyclic charging fatigue testing is performed on the battery cells 20 in the following embodiments and comparative examples. Specifically, the test may be performed using a fixture 700 for a cyclic charging fatigue testing as shown in the figure.

Specifically, the battery cell 20 is clamped and fixed in the dedicated fixture 700, ensuring that the two oppositely arranged walls with the maximum area of the battery cell 20 are clamped. The initial pressure is set to be 2000 N, and an electrode terminal 214 of the battery cell 20 is connected to dedicated battery charging and discharging equipment.

The fixture 700 clamping the battery cell 20 is placed in a constant temperature environment of 25±2°C, and the testing is started after the battery cell 20 reaches temperature equilibrium.

The specific testing steps are carried out in accordance with Chapter 6.4 "Standard Cycle Life" of GBT31484-2015 Requirements and Test Methods for Cycle Life of Power Batteries for Electric Vehicles, and the test cycle end condition is changed to "stop testing until a weld 2113 of the battery cell 20 is damaged".

For example, the test can be carried out according to the following steps: step a, discharge is performed at 1I(A) to a discharge termination condition specified by the enterprise; step b, leaving is performed for not less than 30 minutes or a leaving condition specified by the enterprise; step c, charging is performed according to the method of 6.1.1.3; step d, leaving is performed for not less than 30 minutes or the leaving condition specified by the enterprise; step e, discharge is performed at 1I1(A) to the discharge termination condition specified by the enterprise; and step f, cycle from step b to step e is performed until the weld 2113 is damaged, and the test is stopped.

During the above test process, the weld 2113 of the battery cell 20 is continuously observed until the weld 2113 leaks, and the number of cycles is recorded to obtain the fatigue failure condition of the housing 211 at 1000 cycles as shown in Table 2 below. In the following examples and comparative examples, the weld 2113 refers to a weld between the housing 211 and the cover plate 212. That is, the weld 2113 surrounds an open end of the housing 211, and the housing 211 is of an integrally formed structure.

**Table 2**

| | Re(MPa) | g | Housing material | Housing after 1000 cycles Fatigue failure condition |
|---|---|---|---|---|
| Comparative Example 1 | 125 | 0.1 | Aluminum | 728 Fatigue failures |
| Comparative Example 2 | 115 | 0.2 | Aluminum | 541 Fatigue failures |
| Example 1 | 145 | 0.02 | Modified stainless steel | Fatigue without failure |
| Example 2 | 145 | 0.4 | Modified stainless steel | Fatigue without failure |
| Example 3 | 173 | 0.045 | Modified stainless steel | Fatigue without failure |
| Example 4 | 173 | 0.4 | Modified stainless steel | Fatigue without failure |
| Example 5 | 182 | 0.08 | SUS 316 | Fatigue without failure |
| Example 6 | 182 | 0.4 | SUS 316 | Fatigue without failure |
| Example 7 | 193 | 0.1 | SUS 316 | Fatigue without failure |
| Example 8 | 193 | 0.4 | SUS 316 | Fatigue without failure |
| Example 9 | 203 | 0.15 | Q195 | Fatigue without failure |
| Example 10 | 203 | 0.4 | Q195 | Fatigue without failure |
| Example 11 | 212 | 0.2 | SUS304 | Fatigue without failure |
| Example 12 | 212 | 0.4 | SUS304 | Fatigue without failure |

It should be understood that in Table 2 above, the material of the housing 211 may be modified stainless steel, and the yield strength Re of the modified stainless steel at a room temperature of 25°C is usually at least 140 MPa to 180 MPa. The above example only takes 145 MPa and 173 MPa as an example, but is not limited thereto. Similarly, the material of the housing 211 may be SUS316 stainless steel, and the yield strength Re of the SUS316 stainless steel at a room temperature of 25°C is usually at least 177 MPa, and only 182 MPa and 193 MPa are taken as an example in the above example. The material of the housing 211 may be Q195 carbon steel, and the yield strength Re of the Q195 carbon steel at a room temperature of 25°C is usually at least 195 MPa, and only 203 MPa is taken as an example in the above example. The material of the housing 211 may be SUS304 stainless steel, and the yield strength Re of SUS304 stainless steel at a room temperature of 25°C is usually at least 205 MPa, and only 212 MPa is taken as an example in the above example.

By comparing the two comparative examples in Table 2 above with the 12 examples, it can be seen that when the housing 211 is made of different materials, different yield strengths Re can be determined accordingly. In a case where the yield strength Re meet 140 MPa≤Re≤1000 MPa, for example, in Comparative Examples 1-12, even if the mass proportion g of the silicon-based material in the material of the negative electrode plate 224 of the battery cell 20 is different, the number of failure fatigue times of the battery cell 20 can reach more than one thousand times, which meets the design requirements of the battery cell 20. However, in a case where the yield strength Re does not meet 140 MPa≤Re≤1000 MPa, for example, in Comparative Examples 1-2, even if the mass proportion g of the silicon-based material in the material of the negative electrode plate 224 of the battery cell 20 is low, the number of failure fatigue times of the battery cell 20 cannot reach one thousand times, which cannot meet the design requirements of the battery cell 20.

In some examples, the electrode assembly 22 further includes a positive electrode plate 223, the positive electrode plate 223 includes a positive electrode active material capable of reversibly deintercalating and intercalating the metal ions, and the positive electrode active material includes a nickel-containing compound; and a melting point of at least partial region of the housing 211 is p, and p meets: 1200°C≤p≤2000°C.

The positive electrode plate 223 of the example of the present application is provided with the positive electrode active material capable of reversibly deintercalating and intercalating the metal ions, and the positive electrode active material may be flexibly arranged according to actual applications. For example, the positive electrode active material may include the nickel-containing compound, the energy density and long cycle life of the battery cell 20 can be effectively increased, and the temperature and gas generated during the use of the battery cell 20 is also increased, especially when the battery cell 20 suffers from thermal runaway during use, the internal temperature of the battery cell 20 increases rapidly and a large amount of gas is generated.

Therefore, appropriately increasing the melting point p of at least a partial region of the housing 211 makes the housing 211 less likely to melt, reduce the possibility of explosion of the battery cell 20, and further reduce the risk of thermal runaway of adjacent battery cells 20, thereby improving the reliability of the battery 10. However, the melting point p of at least a partial region of the housing 211 should not be too large, so as to reduce the selecting difficulty and processing difficulty of the material of the housing 211, save costs, and facilitate processing. For example, the melting point p of at least a partial region of the housing 211 may be generally set to meet 1200°C≤p≤2000°C.

It should be understood that the value range of the melting point p of at least a partial region of the housing 211 in the example of the present application may be adjusted according to actual applications. For example, the melting point p of at least partial region of the housing 211 generally meets 1200°C≤p≤2000°C. For another example, the melting point p of at least a partial region of the housing 211 may also meet 1300°C≤p≤1800°C. On the one hand, appropriately increasing the value of the melting point p can improve the capability of this part of housing 211 to resist melting when the battery cell 20 suffers from thermal runaway, making the housing 211 less likely to melt, thereby reducing the risk of thermal runaway of the adjacent battery cells 20. That is, the risk of heat diffusion is reduced, thereby improving the reliability of the battery 10. At the same time, the melting point p cannot be too large, so as to facilitate the selection of suitable materials and reduce the processing difficulty, thereby saving costs and facilitating processing.

Further, the melting point p of at least a partial region of the housing 211 may further be set to meet 1400°C≤p≤1600°C. This can improve the structural strength of the housing 211 when the battery cell 20 suffers from thermal runaway, making the housing 211 less likely to melt, thereby maintaining the structural integrity of the part of housing 211 and reducing the risk of thermal runaway in the adjacent battery cells 20. At the same time, the processing difficulty can also be reduced, and the costs are saved.

In some examples, the value range of the melting point p of at least a partial region of the housing 211 may also be set to other values. For example, the value of the melting point p may be any one of the following values or between any two of the following values: 1200°C, 1250°C, 1300°C, 1350°C, 1400°C, 1450°C, 1500°C, 1550°C, 1600°C, 1650°C, 1700°C, 1750°C, 1800°C, 1850°C, 1900°C, 1950°C, and 2000°C.

In the example of the present application, the positive electrode plate 223 includes a positive electrode active material. For example, the positive electrode active material coated on the positive electrode plate 223 can be used to form a positive electrode active material layer 2231, and the positive electrode active material layer 2231 may be arranged on a surface of at least one side of a positive electrode current collector 2232. For example, the positive electrode active material layers 2241 may be arranged on both sides of the positive electrode current collector 2232 perpendicular to the thickness direction thereof. but the example of the present application is not limited thereto.

In some examples, the positive electrode current collector 2232 may be a metal foil or a composite current collector. As an example of the metal foil, an aluminum foil may be used. The composite current collector may include a high molecular material substrate layer and a metal material layer formed on at least one surface of the high molecular material substrate layer. As an example, the metal material may include one or more of aluminum, aluminum alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

It should be understood that the positive electrode active material in the example of the present application may be set flexibly according to actual applications. For example, the positive electrode active material may include a nickel-containing compound. As an example, the nickel-containing compound includes a layered lithium-containing transition metal oxide, and the molar weight of the nickel element in the layered lithium-containing transition metal oxide accounts for more than 50% of the total molar weight of the transition metal element in the layered lithium-containing transition metal oxide. Increasing the proportion of the molar weight of the nickel element in the layered lithium-containing transition metal oxide to more than 50% can effectively increase the energy density and the long cycle life of the battery cell 20, but the proportion should not be set too large, otherwise it will increase the processing difficulty of the electrode assembly 22, thereby increasing the processing cost of the battery cell 20.

Furthermore, the proportion of the molar weight of the nickel element in the layered lithium-containing transition metal oxide may further be more than 70%, or more than 80%, or 90%. In this way, in a case where the energy density of the battery cell 20 can be effectively increased, the processing difficulty of the electrode assembly 22 can be controlled to reduce the processing cost of the battery cell 20.

In some examples, the proportion of the molar weight of the nickel element in the layered lithium-containing transition metal oxide of the example of the present application can also be set to other values. For example, the value of the proportion of the molar weight of the nickel element in the layered lithium-containing transition metal oxide may be any one of the following values or between any two of the following values: 50%, 53%, 55%, 58%, 60%, 63%, 65%, 68%, 70%, 73%, 75%, 78%, 80%, 83%, 85%, 88%, 90%, 92%, 94%, 96% and 98%.

It should be understood that the test method for the molar weight of the nickel element in the layered lithium-containing transition metal oxide and the total molar weight of the transition metal element in the layered lithium-containing transition metal oxide in the example of the present application can be selected according to actual applications, and can be measured using instruments and methods known in the art. For example, the positive electrode active material may be laid and adhered to the conductive glue to prepare a sample to be tested with a length×width = 6 cm × 1.1 cm; and the particle morphology is tested using a scanning electron microscope (e.g., ZEISSSigma300). For testing, please refer to JY/T010-1996. In order to ensure the accuracy of the test results, 20 different regions can be randomly selected from the sample to be tested for scanning testing, and the content of the layered lithium-containing transition metal oxide in each region can be counted and calculated at a certain magnification (for example, more than 1000 times). For example, an average value of the test results of the 20 test regions can be taken as the number of layered lithium-containing transition metal oxides in the positive electrode active material, and then the molar weight of the layered lithium-containing transition metal oxide can be determined. Similarly, the molar weight of the nickel element in the layered lithium-containing transition metal oxide can also be determined by this method.

In some examples, the layered lithium-containing transition metal oxide may include one or more of lithium cobalt oxide and ternary materials. As an example, the layered lithium-containing transition metal oxide includes LiaNibCocMdOeAf, wherein 0<a ≤ 1.2, 0.5 ≤ b<1, and optionally, 0.9 ≤ b<1; 0<c<1; 0<d<1; 1≤e≤2; 0 ≤ f ≤ 1, M includes but is not limited to one or more of Mn, Al, Zr, Zn, Cu, Cr, Mg, Fe, V, Ti, and B, and A includes but is not limited to one or more of N, F, S, and Cl. The proportion b of the molar weight of the nickel element in the layered lithium-containing transition metal oxide is set to be more than 50%, that is, the proportion b meets: 0.5≤b<1, and may further meet 0.8≤b<1, or 0.9≤b<1, thereby further increasing the energy density of the battery cell 20.

As an example, the layered lithium-containing transition metal oxide may include, but is not limited to, one or more of LiNi0.5 Co0.2 Mn0.3 O2 (abbreviated as NCM523), LiNi0.5 Co0.25 Mn0.25 O2 (abbreviated as NCM211), LiNi0.6 Co0.2 Mn0.2 O2 (abbreviated as NCM622), LiNi0.8 Co0.1 Mn0.1 O2 (abbreviated as NCM811), LiNi0.9 Co0.06 Mn0.04 O2, LiNi0.96 Co0.02 Mn0.02 O2, and LiNi0.85 Co0.15 Al0.05 O2.

In some examples, the positive electrode active material may further include other materials. For example, the positive electrode active material may further include a positive electrode conductive agent. The present application has no specific limitation on a type of the positive electrode conductive agent. As an example, the positive electrode conductive agent may include one or more of superconducting carbon, conductive graphite, acetylene black, carbon black, Ketjen black, carbon dots, carbon nanotubes, graphene and carbon nanofibers.

In some examples, the positive electrode active material may further include a positive electrode binder. The present application has no specific limitation on a type of the positive electrode binder. As an example, the positive electrode binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin.

In some examples, the positive electrode plate 223 may be prepared through the following methods: the positive electrode active material layer 2231 is usually formed by coating a positive electrode slurry on the positive electrode current collector 2232, followed by drying and cold pressing. The positive electrode slurry is generally formed by dispersing the positive electrode active material, the positive electrode binder and the positive electrode conductive agent in a solvent and sufficiently stirring the mixture. The solvent may be N-methyl pyrrolidone (NMP) or deionized water, but the example of the present application is not limited thereto.

The following is a comparative explanation through a plurality of comparative examples and a plurality of examples. Specifically, the battery cells 20 in the following examples and comparative examples are all based on the square a shell battery shown in FIG. 12 and FIG. 13, wherein the housing 211 is of a hollow structure with an opening formed at one end.

In the following examples and comparative examples, the preparation methods of the positive electrode plate 223, the negative electrode plate 224, the electrolyte solution and the spacer 225 of the battery cell 20 are as follows.

### 1. Preparation of positive electrode plate 223

A positive electrode active material LiNi_{0.95}Co_{0.04}Mn_{0.01}O₂, a conductive agent Super P, and a binder polyvinylidene fluoride (PVDF) are prepared in N-methylpyrrolidone (NMP) into a positive electrode slurry, wherein a solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate 223.

### 2. Preparation of negative electrode plate 224

A negative electrode active material, a conductive agent Super P, a thickener carboxymethyl cellulose (CMC), and a binder styrene butadiene rubber (SBR) are mixed evenly in deionized water to prepare a negative electrode slurry, wherein the negative electrode active material includes graphite and a silicon-based material, and the silicon-based material is a silicon oxide. A solid content in the negative electrode slurry is 30wt%, and a mass ratio of the negative electrode active material, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate 224.

### 3. Preparation of electrolyte solution

In an argon atmosphere glove box (H2O<0.1ppm, O2<0.1ppm), fully dried electrolyte salt LiPF6 is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain the electrolyte solution with a concentration of 1 mol/L.

### 4. Preparation of spacer 225

A 16 µm polyethylene (PE) film is used as a spacer 225.

### 5. Preparation of lithium-ion battery cell 20

The positive electrode plate 223, the spacer 225, and the negative electrode plate 224 are sequentially stacked, such that the spacer 225 is located between the positive electrode plate 223 and the negative electrode plate 224 to function for separating the positive electrode from the negative electrode, and then wound to obtain a bare battery cell. A tab is welded, the bare battery cell is placed in a shell with different materials, and the electrolyte solution prepared above is injected into a dried shell. The preparation of the lithium-ion battery cell 20 is completed after encapsulation, standing, formation, shaping, and capacity test.

In the following examples and comparative examples, the melting point of the housing 211 of the battery cell 20 is p, and different materials are selected for the housing 211 to obtain different melting points; the capacity of the battery cell 20 is C; the wall thickness of the wall of the battery cell 20 with the maximum area is T, and the above specific parameter settings are shown in Table 3 below. In addition, in each of the example and the comparative example, the material of the entire region of the housing 211 is the same. In addition, the battery cells 20 in the following examples and comparative examples have the same setting conditions except that the parameters shown in Table 3 are different. For example, in each example, the positive electrode active material of the positive electrode plate 223 of the electrode assembly 22 of the battery cell 20 includes a nickel-containing compound, wherein the nickel-containing compound includes a layered lithium-containing transition metal oxide, and the molar amount of the nickel element in the layered lithium-containing transition metal oxide accounts for 95% of the total molar amount of the transition metal element in the layered lithium-containing transition metal oxide.

For the battery cells 20 in the following comparative examples and examples, cell batteries are tested by referring to a short-circuit test method in Chapter 6.2.4 of GBT31485-2015 Safety Requirements and Test Methods for Power Batteries for Electric Vehicles. After the test, the integrity of the housing 211 is observed, that is, whether the housing 211 is melted is observed.

**Table 3**

| | p (°C) | T (mm) | C (Ah) | Housing material | Test results |
|---|---|---|---|---|---|
| Comparative Example 1 | 660 | 0.7 | 350 | Aluminum | Housing melts |
| Comparative Example 2 | 660 | 0.15 | 72 | Aluminum | Housing melts |
| Example 1 | 1250 | 0.15 | 350 | High Carbon Ferromanganese | Complete housing |
| Example 2 | 1250 | 0.15 | 72 | High Carbon Ferromanganese | Complete housing |
| Example 3 | 1425 | 0.15 | 350 | Mild Steel | Complete housing |
| Example 4 | 1425 | 0.15 | 72 | Mild Steel | Complete housing |
| Example 5 | 1510 | 0.15 | 350 | Stainless steel | Complete housing |
| Example 6 | 1510 | 0.15 | 72 | Stainless steel | Complete housing |

By comparing the two comparative examples in Table 3 above with the six examples, it can be seen that when the housing 211 is made of different materials, different melting points p can be determined accordingly. In a case where the melting point p meets 1200°C≤p≤2000°C, for example, in Examples 1-6, the housing 211 of the battery cell 20 does not melt, and the design requirements of the battery cell 20 can be met. Moreover, when other parameters of the battery cell 20 have different fluctuations, such as the capacity C of the battery cell 20 is different, or the thickness of the wall of the housing 211 with the maximum area is different, the battery cell 20 does not melt, and the design requirements of the battery cell 20 can be met. However, in a case where the melting point p does not meet 1200°C<p<2000°C, for example, in Comparative Examples 1-2, the housing 211 of the battery cell 20 may melt, and the design requirements of the battery cell 20 cannot be met.

In some examples, the electrode assembly 22 further includes a positive electrode plate 223, the positive electrode plate 223 includes a positive electrode active material capable of reversibly deintercalating and intercalating the metal ions, and the positive electrode active material includes a nickel-containing compound; and a tensile strength of at least a partial region of the housing 211 at a temperature of 500°C is Rn, and Rn meets: 100 MPa≤Rn≤1200 MPa.

The positive electrode active material may include the nickel-containing compound, the energy density and long cycle life of the battery cell 20 can be effectively increased, and gas generated during the use of the battery cell 20 is also increased, especially when the battery cell 20 suffers from thermal runaway during use, the internal temperature cell 20 increases rapidly and a large amount of gas is generated.

Therefore, appropriately increasing the tensile strength Rn of at least a partial region of the housing 211 at a high temperature of 500°C can improve the deformation capability of this part of housing 211 when the battery cell 20 suffers from thermal runaway, making the housing 211 less likely to be quickly destroyed and explode, thereby reducing the risk of thermal runaway of adjacent battery cells 20 and improving the reliability of the battery 10. However, the tensile strength Rn of at least a partial region of the housing 211 should not be too large at the high temperature, otherwise it will increase the processing difficulty, such as easily scratching the mold and reducing the service life of the mold. Therefore, appropriately reducing the tensile strength Rn can save costs and facilitate processing. For example, the tensile strength Rn may generally be set to meet 100MPa≤Rn≤1200MPa.

It should be understood that the value range of the tensile strength Rn of at least a partial region of the housing 211 in the example of the present application at a high temperature of 500°C may be adjusted according to actual applications. For example, the value of the tensile strength Rn at the high temperature may meet 100 MPa≤Rn≤1200 MPa. For another example, the value of the tensile strength Rn at the high temperature may also meet 112 MPa≤Rn≤720 MPa. On one hand, appropriately increasing the value of the tensile strength Rn can improve the deformation capability of this part of housing 211 when the battery cell 20 suffers from thermal runaway, making the housing 211 less likely to be quickly destroyed and explode, thereby reducing the risk of thermal runaway of adjacent battery cells 20 and improving the reliability of the battery 10. At the same time, the tensile strength Rn of at least a partial region of the housing 211 at the high temperature is controlled not to be too large, so as to reduce the processing difficulty, thereby saving costs and facilitating processing.

Further, the value of the tensile strength Rn at the high temperature may further be set to meet 152 MPa≤Rn≤480 MPa, which can improve the deformation capability of this part of housing 211 when the battery cell 20 suffers from thermal runaway, improve the structural strength of the housing 211, and make the housing 211 less likely to be quickly destroyed and explode, thereby reducing the risk of thermal runaway of adjacent battery cells 20 and improving the reliability of the battery 10. At the same time, the processing difficulty can also be reduced, and the costs are saved.

In some examples, the value of the tensile strength Rn at the high temperature in the example of the present application can also be set to be other values. For example, the value of the tensile strength Rn at the high temperature may be any one of the following values or between any two of the following values: 100 MPa, 112 MPa, 130 MPa, 150 MPa, 152 MPa, 168 MPa, 180 MPa, 200 MPa, 228 MPa, 250 MPa, 280 MPa, 300 MPa, 320 MPa, 350 MPa, 380 MPa, 400 MPa, 430 MPa, 450 MPa, 480 MPa, 500 MPa, 530 MPa, 550 MPa, 580 MPa, 600 MPa, 630 MPa, 650 MPa, 680 MPa, 700 MPa, 720 MPa, 750 MPa, 780 MPa, 800 MPa, 830 MPa, 850 MPa, 880 MPa, 900 MPa, 930 MPa, 950 MPa, 980 MPa, 1000 MPa, 1050 MPa, 1100 MPa, 1150 MPa and 1200 MPa.

It should be understood that the tensile strength in the example of the present application refers to the maximum stress value that the material can withstand before breaking. A test method of the tensile strength Rn of at least a partial region of the housing 211 at a high temperature of 500°C in the example of the present application may be selected according to actual applications. For example, the national standard GB/T 228.1-2010 can be used to test the tensile strength Rn at a high temperature of 500°C.

The following is a comparative explanation through a plurality of comparative examples and a plurality of examples. Specifically, the battery cells 20 in the following examples and comparative examples are all based on the square a shell battery shown in FIG. 12 and FIG. 13, wherein the housing 211 is of a hollow structure with an opening formed at one end.

In the following examples and comparative examples, the preparation methods of the positive electrode plate 223, the negative electrode plate 224, the electrolyte solution and the spacer 225 of the battery cell 20 are as follows.

### 1. Preparation of positive electrode plate 223

A positive electrode active material LiNi_{0.95}Co_{0.04}Mn_{0.01}O₂, a conductive agent Super P, and a binder polyvinylidene fluoride (PVDF) are prepared in N-methylpyrrolidone (NMP) into a positive electrode slurry, wherein a solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate 223.

### 2. Preparation of negative electrode plate 224

A negative electrode active material, a conductive agent Super P, a thickener carboxymethyl cellulose (CMC), and a binder styrene butadiene rubber (SBR) are mixed evenly in deionized water to prepare a negative electrode slurry, wherein the negative electrode active material includes graphite and a silicon-based material, and the silicon-based material is a silicon oxide. A solid content in the negative electrode slurry is 30wt%, and a mass ratio of the negative electrode active material, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate 224.

### 3. Preparation of electrolyte solution

In an argon atmosphere glove box (H2O<0.1ppm, O2<0.1ppm), fully dried electrolyte salt LiPF6 is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain the electrolyte solution with a concentration of 1 mol/L.

### 4. Preparation of spacer 225

A 16 µm polyethylene (PE) film is used as a spacer 225.

### 5. Preparation of lithium-ion battery cell 20

The positive electrode plate 223, the spacer 225, and the negative electrode plate 224 are sequentially stacked, such that the spacer 225 is located between the positive electrode plate 223 and the negative electrode plate 224 to function for separating the positive electrode from the negative electrode, and then wound to obtain a bare battery cell. A tab is welded, the bare battery cell is placed in a shell with different materials, and the electrolyte solution prepared above is injected into a dried shell. The preparation of the lithium-ion battery cell 20 is completed after encapsulation, standing, formation, shaping, and capacity test.

In the following examples and comparative examples, the tensile strength of the housing 211 of the battery cell 20 at a high temperature of 500°C is Rn, and different materials are selected for the housing 211 to obtain different tensile strengths Rn; the capacity of the battery cell 20 is C; the wall thickness of the wall of the battery cell 20 with the maximum area is T, and the above specific parameter settings are shown in Table 4 below. In addition, in each example and comparative example, the materials of all regions of the housing 211 are the same, and the tensile strength Rn of the housing 211 at the condition of 500°C is measured using the method specified in GB/T 228.1-2010. In addition, the battery cells 20 in the following examples and comparative examples have the same setting conditions except that the parameters shown in Table 4 are different. For example, in each example, the positive electrode active material of the positive electrode plate 223 of the electrode assembly 22 of the battery cell 20 includes a nickel-containing compound, wherein the nickel-containing compound includes a layered lithium-containing transition metal oxide, and the molar amount of the nickel element in the layered lithium-containing transition metal oxide accounts for 95% of the total molar amount of the transition metal element in the layered lithium-containing transition metal oxide.

For the battery cells 20 in the following comparative examples and examples, cell batteries are tested by referring to a short-circuit test method in Chapter 6.2.4 of GBT31485-2015 Safety Requirements and Test Methods for Power Batteries for Electric Vehicles. After the test, the integrity of the housing 211 is observed, that is, whether the housing 211 breaks is observed.

**Table 4**

| | Rn(MPa) | T (mm) | C (Ah) | Housing material | Test results |
|---|---|---|---|---|---|
| Comparative Example 1 | 13 | 0.7 | 350 | Aluminum | Housing cracking |
| Comparative Example 2 | 12 | 0.15 | 72 | Aluminum | Housing cracking |
| Example 1 | 115 | 0.15 | 350 | Mild Steel | Complete housing |
| Example 2 | 113 | 0.15 | 72 | Mild Steel | Complete housing |
| Example 3 | 129 | 0.15 | 350 | Mild Steel | Complete housing |
| Example 4 | 194 | 0.15 | 350 | Stainless steel | Complete housing |
| Example 5 | 191 | 0.15 | 72 | Stainless steel | Complete housing |
| Example 6 | 234 | 0.15 | 350 | Stainless steel | Complete housing |

By comparing the two comparative examples in Table 4 above with the six examples, it can be seen that when the housing 211 is made of different materials, different tensile strengths Rn can be determined accordingly. In a case where the tensile strength Rn meets 100 MPa≤Rn≤1200 MPa, for example, in Examples 1-6, the housing 211 of the battery cell 20 does not break, and the design requirements of the battery cell 20 can be met. Moreover, when other parameters of the battery cell 20 have different fluctuations, such as the capacity C of the battery cell 20 is different, or the thickness of the wall of the housing 211 with the maximum area is different, the battery cell 20 does not break, and the design requirements of the battery cell 20 can be met. However, in a case where the tensile strength Rn does not meet 100 MPa≤Rn≤1200 MPa, for example, in Comparative Examples 1-2, the housing 211 of the battery cell 20 may break, and the design requirements of the battery cell 20 cannot be met.

It should be understood that the at least a partial region of the housing 211 in the example of the present application may include a local region of the housing 211, and may also include the entire region of the housing 211. In some examples, the housing 211 includes a weld 2113, and at least a partial region of the housing 211 includes a region within a preset distance from the housing 211 to the weld 2113, the preset distance is L, and L meets: L=10 mm. In a case where the negative electrode active material of the negative electrode plate 224 of the electrode assembly 22 includes a silicon-based material, since the silicon-based material can accommodate more metal ions, the deformation amount of the electrode assembly 22 in the battery cell 20 during use will increase, causing the volume of the electrode assembly 22 to expand, thereby increasing the pressure of the electrode assembly 22 on the housing 211 of the battery cell 20. Under the same conditions, the structural strength of the region of the housing 211 close to the weld 2113 is smaller than the structural strength of other regions of the housing 211. Therefore, the region of the housing 211 close to the weld 2113 is more likely to be damaged during the use of the battery cell 20. Therefore, setting the region within the preset distance L from the weld 2113 to meet the requirements of the tensile strength Rm or the yield strength Re at the room temperature can improve the deformation capability of the region of the housing 211 close to the weld 2113, making this part of region of the housing 211 less prone to damage, thereby improving the structural stability of the battery cell 20 and prolonging the service life of the battery cell.

In a case where the positive electrode active material of the positive electrode plate 223 of the electrode assembly 22 includes a nickel-containing compound, if the battery cell 20 suffers from thermal runaway, the internal temperature of the battery cell 20 will increase rapidly and a large amount of gas will be generated. Under the same conditions, the structural strength of the region of the housing 211 close to the weld 2113 is smaller than the structural strength of other regions of the housing 211, so the housing 211 is prone to rupture in the region close to the weld 2113, which may cause the connected battery cell 20 to suffer from thermal runaway, that is, cause heat diffusion. Therefore, setting the region within the preset distance L from the weld 2113 to meet the requirements of the tensile strength Rn or the melting point p at the high temperature can improve the deformation capability of this part of region of the housing 211, making this part of region less likely to be quickly destroyed or completely melted, reducing the risk of heat diffusion or even explosion among the multiple battery cells 20, thereby improving the reliability of the battery 10.

It should be understood that the weld 2113 included in the housing 211 of the example of the present application may include the weld 2113 at any position of the housing 211. For example, the weld 2113 included in the housing 211 may include a weld between the housing 211 and the cover plate 212, that is, a region surrounding the open end of the housing 211 is the weld. For another example, the weld 2113 of the housing 211 may also include a weld between different parts of the housing 211. For example, the housing 211 may include at least two parts, and the at least two parts are connected by welding to form the housing 211. FIG. 13 takes the housing 211 including two parts in a height direction Z of the battery cell 20 as an example, and there is a weld 2113 between the upper half of the housing and the lower half of the housing. Alternatively, different from what is shown in FIG. 13, other parts of the housing 211 may also be provided with welds 2113, and the examples of the present application are not limited thereto.

In some examples, at least a partial region of the housing 211 includes a surrounding region 2111 of the housing 211, and the surrounding region 2111 surrounds the electrode assembly 22. The surrounding region 2111 is at least a partial region of a side wall of the housing 211. In this way, in a case where the negative electrode active material of the negative electrode plate 224 of the electrode assembly 22 includes the silicon-based material, the silicon-based material may accommodate more metal ions, thus the deformation amount of the electrode assembly 22 inside the battery cell 20 during use can further be increased, and the electrode assembly 22 is caused to expand in volume, thereby increasing the pressure of the electrode assembly 22 on the housing 211 of the battery cell 20. Therefore, setting the surrounding region 2111 to meet the requirements of the tensile strength Rm or the yield strength Re at the room temperature can improve the deformation capability of the housing 211. Moreover, the surrounding region 2111 is set around the electrode assembly 22, which can limit the extrusion force of the internal electrode assembly 22 on the housing 211 in a radial direction, making the housing 211 less prone to damage, thereby improving the structural stability of the battery cell 20 and prolonging the service life of the battery cell.

When the positive electrode active material of the positive electrode plate 223 of the electrode assembly 22 includes the nickel-containing compound, if the battery cell 20 suffers from thermal runaway, the internal temperature of the battery cell 20 will increase rapidly and a large amount of gas will be generated. The surrounding region 2111 meets the requirements of the tensile strength Rn or the melting point p at the high temperature, then the deformation capability of the surrounding region 2111 of the housing 211 can be improved, which will make the surrounding region 2111 less likely to be quickly destroyed and completely melted, and can limit the excessive expansion of the electrode assembly 22 inside the housing 211 in its thickness direction, thereby reducing the possibility of explosion of the battery cell 20, and further reducing the risk of thermal runaway of the adjacent battery cells 20, so as to improve the reliability of the battery 10.

It should be understood that, the position and size of the surrounding region 2111 of the example of the present application can be set flexibly according to actual applications. For example, in the height direction Z of the battery cell 20, the height of the surrounding region 2111 may be less than or equal to the height of the housing 211. Specifically, if the height of the surrounding region 2111 is less than the height of the housing 211 in the height direction Z of the battery cell 20, the surrounding region 2111 may be located at any position of the housing 211 in the height direction Z of the battery cell 20. For example, the surrounding region 2111 may be located at a middle of the housing 211 in the height direction Z of the battery cell 20 to limit deformation of the corresponding middle position of the electrode assembly 22.

If the height of the surrounding region 2111 is equal to the height of the housing 211 in the height direction Z of the battery cell 20, then the surrounding region 2111 includes all the side walls of the housing 211 and can wrap the side surfaces of the electrode assembly 22, thereby improving the structural strength of the side walls of the housing 211 and reducing the risk of explosion and heat diffusion of the battery cell 20 after thermal runaway due to damage to a local weak region of the side walls of the housing 211, so as to improve the reliability of the battery 10.

In some examples, at least a partial region of the housing 211 includes the entire wall of the housing 211. That is, at least a partial region of the housing 211 in the example of the present application may refer to the entire regions of the housing 211. In this way, in a case where the negative electrode active material of the negative electrode plate 224 of the electrode assembly 22 includes the silicon-based material, the silicon-based material may accommodate more metal ions, thus the deformation amount of the electrode assembly 22 inside the battery cell 20 during use can further be increased, and the electrode assembly 22 is caused to expand in volume, thereby increasing the pressure of the electrode assembly 22 on the housing 211 of the battery cell 20. Therefore, setting the entire region of the housing 211 to meet the requirements of the tensile strength Rm or the yield strength Re at the room temperature can improve the overall deformation capability of the housing 211 and limit the extrusion force of the internal electrode assembly 22 on the housing 211 in all directions, so that the strength of each part of the housing 211 is balanced and the housing is not easy to be damaged in the local weak regions, thereby improving the structural stability of the battery cell 20 and prolonging the service life of the battery cell.

When the positive electrode active material of the positive electrode plate 223 of the electrode assembly 22 includes the nickel-containing compound, if the battery cell 20 suffers from thermal runaway, the internal temperature of the battery cell 20 will increase rapidly and a large amount of gas will be generated. The entire region of the housing 211 meets the requirements of the tensile strength Rn or the melting point p at the high temperature, then the overall deformation capability of the housing 211 can be improved, which will make the housing 211 less likely to be destroyed and melted, and can limit the high-temperature and high-pressure gas inside the housing 211, thereby reducing the influence on the connected battery cells 20, and further reducing the risk of thermal runaway of the adjacent battery cells 20, so as to improve the reliability of the battery 10.

Furthermore, the cover plate 212 of the example of the present application may be made of the same material as at least a partial region of the housing 211 of the example of the present application, so that the structural strength of the cover plate 212 also meets the design requirements. For example, the cover plate 212 may also meet at least one of the requirements of the tensile strength Rm and yield strength Re at the room temperature, and the tensile strength Rn and melting point p at the high temperature, so as to improve the structural strength of the cover plate 212 and thereby improve the structural stability of the battery cell 20, but the examples of the present application are not limited thereto.

In the example of the present application, the housing 211 at least partially includes a third housing wall 2112, an average thickness of the third housing wall 2112 is T, and T meets: 0.05 mm≤T≤0.5 mm, and 60 mm·MPa≤T×Rm≤500 mm·MPa.

It should be understood that the third housing wall 2112 of the housing 211 in the example of the present application can be any wall of the housing 211. Specifically, the battery cell 20 may be any polyhedral structure, the housing 211 may be of a hollow structure with an opening formed in at least one end, the housing 211 may include one or more walls, the third housing wall 2112 is any wall of the housing 211, and the housing 211 may include one or more third housing walls 2112. For example, if the housing 211 is a polygon prism, the third housing wall 2112 may be any wall of the polygon prism, and the surface of the third housing wall 2112 may be any polygon. For another example, as shown in FIG. 12 and FIG. 13, if the housing 211 is a cuboid, the third housing wall 2112 may be any wall of the housing 211, and the surface of the third housing wall 2112 is a rectangle. For another example, if the shell 211 is a cylinder, the third housing wall 2112 may be a bottom surface of the cylinder or a side surface of the cylinder, and the examples of the present application are not limited thereto. In addition, if two adjacent walls of the housing 211 are connected by a filleted corner, when the third housing wall 2112 of the example of the present application is any wall of the housing 211, the third housing wall 2112 does not include a connection region of a filleted corner between the wall and the connected wall.

In the example of the present application, at least a partial region of the housing 211 includes a third housing wall 2112, and the tensile strength of the third housing wall 2112 at a normal temperature of 25°C is Rm. Increasing the tensile strength Rm of at least a partial region of the housing 211 at a room temperature of 25°C can improve the deformation capability of the housing 211, making the housing 211 less likely to be damaged during the use of the battery cell 20, thereby improving the structural stability of the battery cell 20 and thus prolonging the service life of the battery cell. However, the tensile strength Rm of at least a partial region of the housing 211 at the room temperature should not be too large, so as to reduce the selecting difficulty and processing difficulty of the material of the housing 211, save costs, and facilitate processing.

When the average thickness T of the third housing wall 2112 of the housing 211 is relatively thin, the structural strength of the third housing wall 2112 can be increased by improving the tensile strength Rm of the third housing wall 2112 of the housing 211 at the room temperature of 25°C, thereby increasing the energy density of the battery cell 20 and improving the structural strength and stability of the battery cell 20. On the contrary, when the average thickness T of the third housing wall 2112 of the housing 211 is relatively thick, the structural strength of the housing 211 can be improved, and the difficulty of selecting the material of the housing 211 can be reduced by appropriately reducing the requirement for the tensile strength Rm of the third housing wall 2112 of the housing 211 at the room temperature, thereby reducing the processing difficulty and processing cost of the battery cell 20. Moreover, T×Rm represents the rigidity of the third housing wall. The rigidity of the third housing wall should not be too small or too large, which can not only make the third housing wall have better deformation ability, but also reduce the processing difficulty and cost.

It should be understood that the value range of the average thickness T of the third housing wall 2112 of the example of the present application can also be flexibly set according to actual applications. For example, the average thickness T of the third housing wall 2112 meets: 0.05 mm≤T≤0.5 mm. Further, the average thickness T of the third housing wall 2112 meets: 0.1 mm≤T≤0.4 mm. Appropriately thinning the average thickness T of the third housing wall 2112 can reduce the space occupied by the housing 211 inside the battery 10 so as to improve the energy density of the battery 10, and can compensate for the need for the structural strength of the housing 211 by improving the tensile strength Rm of the third housing wall 2112 at the room temperature to maintain the stability of the housing 211. Appropriately increasing the average thickness T of the third housing wall 2112 can also reduce the difficulty of processing the third housing wall 2112.

Further, the average thickness T of the third housing wall 2112 meets: 0.1 mm≤T≤0.3 mm. The average thickness T of the third housing wall 2112 is neither too large nor too small, which can not only improve the structural strength and structural stability of the housing 211, but also reduce the space occupied by the housing 211 inside the battery 10, thereby increasing the energy density of the battery 10.

In some examples, the value of the average thickness T of the third housing wall 2112 in the example of the present application can also be set to other values. For example, the value of the average thickness T of the third housing wall 2112 can be any one of the following values or between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm and 0.5 mm.

In some examples, the value range of T×Rm may further be adjusted according to actual applications. For example, Rm and T meet: 60 mm·MPa≤T×Rm≤500 mm·MPa. Further, Rm and T may further meet: 100 mm·MPa≤T×Rm≤500 mm·MPa. By selecting suitable materials, the tensile strength Rm of the third housing wall 2112 at the room temperature can be improved, and the average thickness T of the third housing wall 2112 is decreased, so that the stiffness value of the third housing wall 2112 meets the design requirements, which can not only improve the structural strength and structural stability of the third housing wall 2112 of the housing 211, but also increase the energy density of the battery cell 20 and the battery 10.

Furthermore, the value range of T×Rm can also be set to: Rm and T meet: 100 mm·MPa≤T×Rm≤300 mm·MPa, so that the stiffness value of the third housing wall 2112 is more appropriate, which can not only make the third housing wall 2112 have good deformation capability to prolong the service life of the battery cell 20, but also reduce the difficulty of material selection, thereby reducing the processing difficulty and processing cost.

In some examples, the value of T×Rm in the example of the present application can also be set to be other values. For example, the value of T×Rm can be any one of the following values or between any two of the following values: 60 mm·MPa, 65 mm·MPa, 70 mm·MPa, 75 mm·MPa, 80 mm·MPa, 85 mm·MPa, 90 mm·MPa, 95 mm·MPa, 100 mm·MPa, 130 mm·MPa, 150 mm·MPa, 180 mm·MPa, 200 mm·MPa, 230 mm·MPa, 250 mm·MPa, 280 mm·MPa, 300 mm·MPa, 330 mm·MPa, 350 mm·MPa, 380 mm·MPa, 400 mm·MPa, 430 mm·MPa, 450 mm·MPa, 480 mm·MPa and 500 mm·MPa.

In the example of the present application, the value of the mass proportion g of the silicon-based material and the value of the average thickness T of the third housing wall 2112 can be mutually restricted, and a value of the mass proportion g of the silicon-based material and the value of the tensile strength Rm of at least a partial region of the housing 211 at a temperature of 25°C can also be mutually restricted to balance a relationship between the energy density of the battery cell 20 and structural strength. For example, in the negative electrode active material, the mass proportion of the silicon-based material is g, and g and T meet 2%<g<20%, and 0.15 mm≤T≤0.4 mm. In a case where the mass proportion g of the silicon-based material is relatively small, the average thickness T of the third housing wall 2112 can be appropriately reduced to increase the space utilization of the housing 211 and further balance the structural strength of the housing 211 while increasing the energy density of the battery cell 20.

In some examples, the mass proportion of the silicon-based material in the negative electrode active material is g, and g, T and Rm meet: 15%<g<40%, 0.2 mm≤T≤0.4 mm, and 100 mm·MPa≤T×Rm≤500 mm·MPa. Increasing the mass g of the silicon-based material can effectively increase the energy density of the battery cell 20, while increasing the thickness and rigidity T×Rm of the third housing wall 2112 can improve the structural strength and stability of the battery cell 20.

It should be understood that the average thickness T of the third housing wall 2112 in the example of the present application may refer to an average thickness of at least a partial region of the third housing wall 2112. For example, the average thickness T of the third housing wall 2112 may refer to the average thickness T of the entire region of the third housing wall 2112, especially when the third housing wall 2112 is relatively flat, that is, the thicknesses of most regions of the third housing wall 2112 are basically equal or have a small difference, or the thicknesses of all regions of the third housing wall 2112 are basically equal or have a small difference, then the average thickness of the entire region of the third housing wall 2112 can be determined as T.

For another example, the average thickness T of the third housing wall 2112 may also refer to the average thickness T of a local region of the third housing wall 2112, that is, the average thickness T of the remaining region after excluding the partial region of the third housing wall 2112. For example, if there is a part of special region in the third housing wall 2112, and the thickness of the part of special region is significantly different from that of other regions. For example, there is a protruding structure or a recessed region in the part of special region, so that the thickness of the part of special region is larger or smaller than that of other regions, then the part of special region can be excluded to calculate the average thickness T of the remaining regions of the third housing wall 2112.

In some examples, the third housing wall 2112 includes a functional region, and the average thickness T of the third housing wall 2112 is the average thickness of the region of the third housing wall 2112 other than the functional region, and the functional region includes at least one of the following regions: a pressure relief region, a region 214 where the electrode terminal is located, a liquid injection region, and a welding region. The thickness of the functional region is usually much different from the thickness of other regions of the third housing wall 2112. Therefore, when the average thickness T of the third housing wall 2112 is calculated without including the functional region, the design of the third housing wall 2112 can better meet the strength requirements to improve the structural strength and stability of the battery cell 20.

Specifically, the functional region of the example of the present application may include a region on the third housing wall 2112 where a specific structure is provided or which has a specific purpose. For example, the functional region may include a pressure relief region. The pressure relief region is used for being provided with a pressure relief mechanism, and the pressure relief region is used as an element or component that is actuated to relieve the internal pressure or temperature when the internal pressure or temperature of the battery cell 20 reaches a predetermined threshold. The predetermined threshold may be adjusted according to different design requirements. For example, the predetermined threshold may depend on the material of one or more of the positive electrode plate, the negative electrode plate, the electrolyte solution and the separator in the battery cell 20.

The "actuate" mentioned in the present application means that the pressure relief mechanism performs an action or is activated to a certain state, so that the internal pressure and temperature of the battery cell 20 can be released. The action performed by the pressure relief mechanism may include, but is not limited to: at least part of the pressure relief mechanism being broken, crushed, torn, opened, or the like. When the pressure relief mechanism is actuated, high-temperature and high-pressure substances inside the battery cell 20 are discharged as emissions outwards from an actuated part. In this way, the pressure and temperature in the battery cell 20 can be released at a controllable pressure or temperature, thereby avoiding more serious potential accidents.

The emissions from the battery cell 20 referred to in the present application include, but are not limited to: an electrolyte solution, dissolved or split positive and negative electrode plates, separator fragments, high-temperature and high-pressure gas produced from reactions, flames, and the like.

The pressure relief mechanism in the example of the present application may be arranged on any wall of the battery cell 20. For example, the pressure relief mechanism may be arranged in a pressure relief region of the third housing wall 2112 of the battery cell 20. The pressure relief mechanism may be a part of the third housing wall 2112, or may be of a split structure from the third housing wall 2112, so as to be fixed to the third housing wall 2112 by means of, for example, welding. For example, when the pressure relief mechanism is a part of the third housing wall 2112, for example, the pressure relief mechanism may be formed by setting a nick on the third housing wall 2112, that is, the third housing wall 2112 is provided with a nick in the pressure relief region, and the thickness at the nick is significantly smaller than the thickness of other regions of the third housing wall 2112. Therefore, the average thickness T of the third housing wall 2112 can exclude the thickness at the nick. The nick is the weakest position of the pressure relief mechanism. When excessive gas generated by the battery cell 20 causes the internal pressure to rise and reach a threshold, or the internal temperature of the battery cell 20 rises and reaches a threshold due to the heat generated by the internal reaction of the battery cell 20, the pressure relief mechanism can be ruptured at the nick, resulting in the communication between the inside and outside of the battery cell 20. The gas pressure and temperature are released outward through the cracking of the pressure relief mechanism, thereby preventing the battery cell 20 from exploding.

For another example, the pressure relief mechanism may also be of a split structure from the third housing wall 2112. The pressure relief mechanism may use forms such as an explosion-proof valve, an air valve, a pressure relief valve, or a safety valve, and may specifically use pressure-sensitive or temperature-sensitive components or structures. For example, the third housing wall 2112 is provided with a through hole in the pressure relief region, and the pressure relief mechanism is installed and fixed to the third housing wall 2112 through the through hole. The installed pressure relief mechanism may protrude or be recessed relative to other regions of the third housing wall 2112. Therefore, the average thickness T of the third housing wall 2112 may be calculated without including the pressure relief region where the pressure relief mechanism is located. When the internal pressure or temperature of the battery cell 20 reaches a predetermined threshold, the pressure relief mechanism executes an action or a weak structure provided in the pressure relief mechanism is damaged, so as to form an opening or channel for releasing the internal pressure or temperature.

In some examples, the functional region may also include a region where the electrode terminal 214 is located. Specifically, the electrode terminal 214 in the example of the present application is used to electrically connect to the electrode assemblies 22 inside the battery cell 20 to output electrical energy of the battery cell 20. Furthermore, the battery cell 20 may include at least two electrode terminals 214. The at least two electrode terminals 214 may respectively include at least one first electrode terminal 214a and at least one second electrode terminal 214b, wherein the first electrode terminal 214a and the second electrode terminal 214b have opposite polarities. For example, the first electrode terminal 214a may be a positive electrode terminal, and the second electrode terminal 214b may be a negative electrode terminal; or the first electrode terminal 214a may be a negative electrode terminal, and the second electrode terminal 214b may be a positive electrode terminal. The positive electrode terminal is used for electrical connection with the positive tab 222a of the electrode assembly 22, and the negative electrode terminal is used for electrical connection with the negative tab 222b of the electrode assembly 22. The positive electrode terminal and the positive tab 222a may be connected directly or indirectly, and the negative electrode terminal and the negative tab 222b may be connected directly or indirectly. Exemplarily, the positive electrode terminal may be electrically connected to the positive tab 222a through a connecting member 23, and the negative electrode terminal may be electrically connected to the negative tab 222b through a connecting member 23.

For another example, taking the example that each battery cell 20 includes two electrode terminals 214, and the two electrode terminals 214 are located on the same wall, unlike what is shown in FIG. 12 and FIG. 13, the two electrode terminals 214 may also be located in the housing 211. For example, the two electrode terminals 214 may both be located at the third housing wall 2112 of the housing 211. When the electrode terminal 214 is located at the third housing wall 2112, the electrode terminal 214 usually protrudes from other regions of the third housing wall 2112. That is, the thickness of the region where the electrode terminal 214 is located is much greater than the thickness of other regions of the third housing wall 2112. Therefore, the average thickness T of the third housing wall 2112 may be calculated without including the region where the electrode terminal 214 is located.

In some examples, the functional region may also include a liquid injection region. For example, the liquid injection region of the third housing wall 2112 may be provided with a liquid injection hole, through which the electrolyte solution is injected into the housing 211. After the injection of the electrolyte solution is completed, the liquid injection hole may be sealed by a sealing element. Considering that the thickness of the liquid injection region where the sealing element is located is usually much greater than the thickness of other regions of the third housing wall 2112, the average thickness T of the third housing wall 2112 may be calculated without including the liquid injection region.

In some examples, the functional region may also include a welding region. For example, the third housing wall 2112 may be fixed to other walls by welding, or the third housing wall 2112 itself needs to be processed and formed by welding, and the third housing wall 2112 may include the welding region. For example, as shown in FIG. 13, the housing 211 may be welded by splicing, and the housing 211 may have a weld 2113. Specifically, the housing 211 may include at least two parts, and the at least two parts are connected by welding to form the housing 211. FIG. 13 takes the housing 211 includes two parts in a height direction Z of the battery cell 20 as an example, and there is a weld 2113 between the upper half of the housing and the lower half of the housing. Alternatively, different from what is shown in FIG. 13, other parts of the housing 211 may also be provided with welds 2113, and the examples of the present application are not limited thereto. The welding region of the functional region in the example of the present application may also include the weld 2113. Due to the processing technology, the thickness of the welding region is usually greater than the thickness of other regions of the third housing wall 2112. Therefore, the average thickness T of the third housing wall 2112 may be calculated without including the welding region.

In the example of the present application, the third housing wall 2112 of the housing 211 may be any wall of the housing 211. For example, the third housing wall 2112 is a wall of the housing 211 with the minimum thickness. That is, by limiting the thickness T of the wall of the housing 211 with the minimum thickness, the thickness of other walls of the housing 211 is limited, so that each wall of the housing 211 can meet the structural strength requirements, thereby improving the structural strength and stability of the battery cell 20.

In some examples, the third housing wall 2112 is a wall of the housing 211 with the maximum area. Taking into account that a plurality of battery cells 20 are arranged in the battery 10, the plurality of battery cells 20 usually abut against each other through the wall of the housing 211 with the maximum area. Therefore, the wall with the maximum area is usually subjected to the largest squeezing force from the electrode assembly 22. By limiting the average thickness T and the tensile strength Rm of the third housing wall 2112 at the room temperature, the deformation capability of the housing 211 can be effectively improved, thereby improving the structural strength and stability of the battery cells 20.

It should be understood that the position of the wall of the housing 211 with the maximum area in the example of the present application may be set according to the actual applications. For example, the battery 10 may include the plurality of battery cells 20, an arrangement direction of the plurality of battery cells 20 may be perpendicular or parallel to the wall of the housing 211 with the maximum area, and the examples of the present application are not limited thereto.

In some examples, the housing 211 includes a bottom wall and a side wall intersecting each other, wherein the bottom wall is used to support the electrode assembly accommodated in the housing 211. Specifically, the housing 211 may be of a hollow structure with an opening formed in at least one end, and the bottom wall and the side wall of the housing 211 do not necessarily refer to the walls opposite to and adjacent to the opening, respectively. The electrode assembly 22 is accommodated in the housing 211. Considering that in actual applications, the electrode assembly 22 may be arranged in different directions in different application scenarios, and the housing 211 may include a wall for supporting the electrode assembly 22. Therefore, the bottom wall of the housing 211 in the example of the present application is a wall used to support the electrode assembly 22. That is, the bottom wall of the housing 211 is used to bear the gravity of the electrode assembly 22. Correspondingly, the wall of the housing 211 that directly intersects with the bottom wall is the side wall of the housing 211.

In some examples, the third housing wall 2112 is the side wall of the housing 211. Considering that the bottom wall and the side wall of the housing 211 have different uses, the design requirements of the bottom wall and the side wall may also be different. For example, the side wall of the housing 211 usually has higher requirements for the deformation capability. In a case where the third housing wall 2112 is the side wall of the housing 211, by limiting the tensile strength Rm of the side wall of the housing 211 at the room temperature and the average thickness T of the side wall, the deformation capability of the side wall of the housing 211 can be effectively improved, thereby improving the structural stability of the battery cell 20.

In some examples, the housing 211 includes a plurality of side walls, and the plurality of side walls have equal thickness to facilitate processing.

In some examples, the thickness of the bottom wall of the housing 211 is equal to the thicknesses of the side walls of the housing 211 to facilitate processing and optimize the space occupied by the housing 211.

In some examples, the third housing wall 2112 is perpendicular to a stacking direction of electrode plates of the electrode assembly 22. The stacking direction of the electrode plates of the electrode assembly 22 is usually the thickness direction of the electrode assembly 22. Considering that the electrode assembly 22 is prone to expand in the thickness direction during the cyclic charging and discharging of the battery cell 20, the deformation requirements for the wall of the corresponding housing 211 are relatively high. Therefore, the third housing wall 2112 is set to be a wall perpendicular to the stacking direction of the electrode plates of the electrode assembly 22, or the third housing wall 2112 and the electrode assembly 22 are arranged in the stacking direction of the electrode plates of the electrode assembly 22. By limiting the tensile strength Rm at the room temperature and the average thickness T of the third housing wall 2112, the energy density of the battery cell 20 can be increased, and the deformation capability of the third housing wall 2112 can be effectively improved, thereby improving the structural stability of the battery cell 20.

It should be understood that the cover plate 212 in the example of the present application may adopt the same or different design as the third housing wall 2112. For example, the cover plate 212 may adopt the same design as the third housing wall 2112. That is, the average thickness of the cover plate 212 may be T, the tensile strength of the cover plate 212 at the room temperature may be b, and the above-mentioned design requirements of b and T are met to improve the deformation capability of the cover plate 212, thereby improving the structural strength and stability of the battery cell 20.

In some examples, a ratio of the volume of the internal space of the housing 211 to the external volume of the housing 211 is greater than or equal to 93%. That is, the housing 211 is thinner, so that the housing 211 itself occupies less space, thereby increasing the space utilization and energy density of the battery 10.

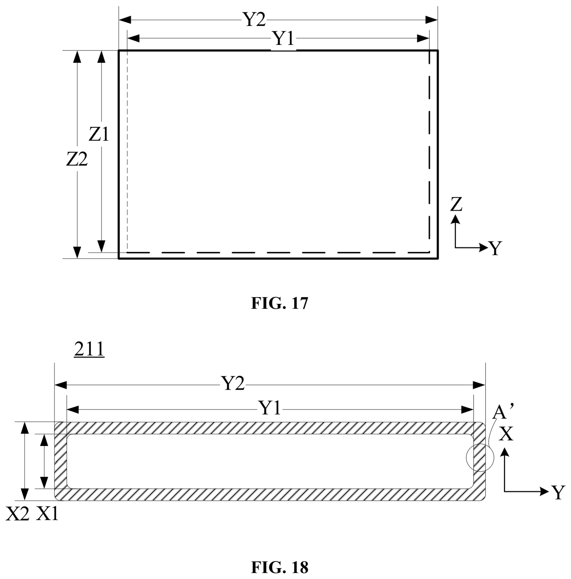

It should be understood that the specific calculation method of the volume of the internal space of the housing 211 and the external volume of the housing 211 in the example of the present application is related to the shape of the housing 211. For example, the housing 211 being a cuboid is taken as an example. FIG. 17 shows a schematic side view of the housing 211 in an example of the present application. FIG. 18 shows a schematic top view of the housing 211 in an example of the present application. For example, the housing 211 shown in FIG. 17 and FIG. 18 may be the housing 211 of the battery cell 20 shown in FIGS. 12 and 13.

As shown in FIG. 17 and FIG. 18, a rectangular housing 211 is taken as an example, and the housing 211 is a hollow cuboid with an opening formed at one end. When calculating the volume of the internal space of the housing 211 and the external volume of the housing 211, the filleted corner connections between adjacent walls of the housing 211 may be ignored. As shown in FIG. 17 and FIG. 18, since each wall of the housing 211 has a certain thickness, in a length direction Y, an internal length of the housing 211 is Y1, an external length is Y2, and Y2 is greater than Y1. Similarly, in a width direction X, an internal width of the housing 211 is X1, an external width is X2, and X2 is greater than X1. In a height direction Z, an internal height of the housing 211 is Z1, an external height is Z2, and Z2 is greater than Z1. Therefore, the volume V1 of the internal space of the housing 211 is equal to X1×Y1×Z1; the volume V2 of the external space of the housing 211 is equal to X2×Y2×Z2, and V1/V2 is greater than or equal to 93%, so as to reduce the space occupied by the housing 211 itself, thereby increasing the space utilization and energy density of the battery 10.

The following is a comparative explanation through a plurality of comparative examples and a plurality of examples. Specifically, the battery cells 20 in the following examples and comparative examples are all based on the square a shell battery shown in FIG. 12 and FIG. 13, wherein the housing 211 is of a hollow structure with an opening formed at one end.

In the following examples and comparative examples, the preparation methods of the positive electrode plate 223, the negative electrode plate 224, the electrolyte solution and the spacer 225 of the battery cell 20 are as follows.

### 1. Preparation of positive electrode plate 223

A positive electrode active material LiNi_{0.95}Co_{0.04}Mn_{0.01}O₂, a conductive agent Super P, and a binder polyvinylidene fluoride (PVDF) are prepared in N-methylpyrrolidone (NMP) into a positive electrode slurry, wherein a solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate 223.

### 2. Preparation of negative electrode plate 224

A negative electrode active material, a conductive agent Super P, a thickener carboxymethyl cellulose (CMC), and a binder styrene butadiene rubber (SBR) are mixed evenly in deionized water to prepare a negative electrode slurry, wherein the negative electrode active material includes graphite and a silicon-based material, and the silicon-based material is a silicon oxide. A solid content in the negative electrode slurry is 30wt%, and a mass ratio of the negative electrode active material, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate 224.

### 3. Preparation of electrolyte solution

In an argon atmosphere glove box (H2O<0.1ppm, O2<0.1ppm), fully dried electrolyte salt LiPF6 is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain the electrolyte solution with a concentration of 1 mol/L.

### 4. Preparation of spacer 225

A 16 µm polyethylene (PE) film is used as a spacer 225.

### 5. Preparation of lithium-ion battery cell 20

The positive electrode plate 223, the spacer 225, and the negative electrode plate 224 are sequentially stacked, such that the spacer 225 is located between the positive electrode plate 223 and the negative electrode plate 224 to function for separating the positive electrode from the negative electrode, and then wound to obtain a bare battery cell. A tab is welded, the bare battery cell is placed in a shell with different materials, and the electrolyte solution prepared above is injected into a dried shell. The preparation of the lithium-ion battery cell 20 is completed after encapsulation, standing, formation, shaping, and capacity test.

In the following examples and comparative examples, the tensile strength of the housing 211 of the battery cell 20 at a temperature of 25°C is Rm, and in order to obtain different tensile strengths Rm, different materials are selected for the housing 211. The average thickness of the third housing wall 2112 of the housing 211 is T. The above specific parameter settings are shown in Table 5 below. In addition, in each example and comparative example, the materials of all regions of the housing 211 are the same, and the tensile strength Rm of the housing 211 at the condition of 25°C is measured using the method specified in GB/T 228.1-2010. In addition, the battery cells 20 in the following examples and comparative examples have the same setting conditions except that the parameters shown in Table 5 are different. For example, the capacity of the battery cell 20 in each example is 350 Ah.

Cyclic charging fatigue testing is performed on the battery cells 20 in the following embodiments and comparative examples. Specifically, the test may be performed using a fixture 700 for a cyclic charging fatigue testing as shown in FIG. 16.

Specifically, the battery cell 20 is clamped and fixed in the dedicated fixture 700, ensuring that the two oppositely arranged walls with the maximum area of the battery cell 20 are clamped. The initial pressure is set to be 2000 N, and an electrode terminal 214 of the battery cell 20 is connected to dedicated battery charging and discharging equipment.

The fixture 700 clamping the battery cell 20 is placed in a constant temperature environment of 25±2°C, and the testing is started after the battery cell 20 reaches temperature equilibrium.

The specific testing steps are carried out in accordance with Chapter 6.4 "Standard Cycle Life" of GBT31484-2015 Requirements and Test Methods for Cycle Life of Power Batteries for Electric Vehicles, and the test cycle end condition is changed to "stop testing until a weld 2113 of the battery cell 20 is damaged".

For example, the test can be carried out according to the following steps: step a, discharge is performed at 1I(A) to a discharge termination condition specified by the enterprise; step b, leaving is performed for not less than 30 minutes or a leaving condition specified by the enterprise; step c, charging is performed according to the method of 6.1.1.3; step d, leaving is performed for not less than 30 minutes or the leaving condition specified by the enterprise; step e, discharge is performed at 1I1(A) to the discharge termination condition specified by the enterprise; and step f, cycle from step b to step e is performed until the weld 2113 is damaged, and the test is stopped.

During the above test process, the weld 2113 of the battery cell 20 is continuously observed until the weld 2113 leaks, and the number of cycles is recorded to obtain the condition of the housing 211 at 1000 cycles as shown in Table 5 below. In the following examples and comparative examples, the weld 2113 refers to a weld between the housing 211 and the cover plate 212. That is, the weld 2113 surrounds an open end of the housing 211, and the housing 211 is of an integrally formed structure.

**Table 5**

| | T (mm) | Rm(MPa) | T×Rm (mm·MPa) | Housing material | Housing condition after 1000 cycles |
|---|---|---|---|---|---|
| Comparative Example 1 | 0.1 | 170 | 17 | Aluminum | 656 housing cracks |
| Comparative Example 2 | 0.3 | 170 | 51 | Aluminum | 437 housing cracks |
| Example 1 | 0.2 | 328 | 65.6 | Q195 | Uncracked |
| Example 2 | 0.3 | 328 | 98.4 | Q195 | Uncracked |
| Example 3 | 0.16 | 396 | 63.36 | SPCC | Uncracked |
| Example 4 | 0.3 | 396 | 118.8 | SPCC | Uncracked |
| Example 5 | 0.14 | 459 | 64.26 | SUS430 | Uncracked |
| Example 6 | 0.3 | 459 | 137.7 | SUS430 | Uncracked |
| Example 7 | 0.12 | 533 | 63.96 | SUS304 | Uncracked |
| Example 8 | 0.3 | 533 | 159.9 | SUS304 | Uncracked |
| Example 9 | 0.1 | 625 | 62.5 | SUS304 | Uncracked |
| Example 10 | 0.3 | 625 | 187.5 | SUS304 | Uncracked |
| Example 11 | 0.1 | 763 | 76.3 | SUS304 | Uncracked |
| Example 12 | 0.3 | 763 | 228.9 | SUS304 | Uncracked |

It should be understood that in Table 5 above, the material of the housing 211 may be Q195 carbon steel, and the tensile strength Rm of Q195 carbon steel at a room temperature of 25°C is usually at least 315 MPa to 430 MPa. The above example only takes 328 MPa as an example, but is not limited thereto. Similarly, the material of the housing 211 may be SPCC carbon steel, and the tensile strength Rm of the SPCC carbon steel at a room temperature of 25°C is usually at least 380 MPa to 430 MPa, and only 396 MPa is taken as an example in the above example. The material of the housing 211 may be SUS430 stainless steel, and the tensile strength Rm of the SUS430 stainless steel at a room temperature of 25°C is usually at least 450 MPa, and only 459 MPa is taken as an example in the above example. The material of the housing 211 may be SUS304 stainless steel, and the tensile strength Rm of the SUS304 stainless steel at a room temperature of 25°C is usually at least 520 MPa, and only 533 MPa, 625 MPa and 763 MPa are taken as an example in the above example.

According to Table 5 above, it can be seen that in the above examples 1-12, Rm and T of the third housing wall 2112 of the housing 211 meet: 250 MPa≤Rm≤2000 Mpa, 0.05 mm≤T≤0.5 mm and 60 mm·MPa≤T×Rm≤500 mm·MPa, the number of failure fatigue times of the battery cell 20 can reach more than one thousand to meet the design requirements of the battery cell 20. Moreover, even if the average thickness T of the third housing wall 2112 is set to be smaller, the number of failure fatigue times of the battery cell 20 can reach more than one thousand, and setting the average thickness T of the third housing wall 2112 to be smaller can further increase the energy density of the battery 10. However, in the two comparative examples, the structural strength of the third housing wall 2112 is insufficient, and Rm and T×Rm do not meet the above values. Even if the average thickness T of the third housing wall 2112 is larger, the number of failure fatigue times of the battery cell 20 does not reach one thousand times, which cannot meet the design requirements of the battery cell 20.

In some examples, the capacity of the battery cell is C, and C meets: 25 Ah≤C≤550 Ah. On the one hand, increasing the capacity C of the battery cell 20 can increase the capacity density of the battery 10 including the plurality of such battery cells 20. Alternatively, if the capacity C of a single battery cell 20 is increased while the total capacity of the battery 10 remains unchanged, the number of battery cells 20 provided can be reduced, and correspondingly the number of electrical connections between the plurality of battery cells 20 can also be reduced, thereby reducing the probability of electrical connection failure and helping to improve the reliability of the battery. Moreover, when the capacity C of the battery cell 20 is relatively large, the tensile strength Rm of at least a partial region of the housing 211 at the room temperature of 25°C can be increased to meet the requirements of the high-capacity battery cell 20 for the structural strength of the housing 211, thereby improving the reliability of the battery cell 20 and prolonging the service life of the battery cell. On the other hand, if the battery cell 20 has a larger capacity, the reaction inside it will be intensified, thereby increasing the requirements on the structural strength of the housing 211. Therefore, the capacity C of the battery cell 20 should not be too large to limit the design requirements for the structural strength of the shell 211, which can reduce the difficulty of material selection and processing of the battery cell 20, reduce costs and improve processing efficiency.

It should be understood that the value range of the capacity C of the battery cell 20 in the example of the present application may be adjusted according to the actual applications. For example, the capacity C of the battery cell 20 may be reasonably selected according to actual requirements of the battery 10. In some examples, the capacity C of the battery cell 20 met be set to further meet: 100 Ah≤C≤300 Ah. Properly increasing the capacity C of the battery cell 20 can increase the energy density of the battery 10. At the same time, the capacity C of the battery cell 20 should not be too large to balance a relationship between the capacity C of the battery cell 20 and the structural strength of the housing 211, thereby improving the reliability of the battery cell 20 and prolonging the service life of the battery cell.

Furthermore, the capacity C of the battery cell 20 may also meet: 150 Ah≤C≤250 Ah. Further limiting the capacity C of the battery cell 20 can not only increase the energy density of the battery 10, but also improve the structural strength of the housing 211, thereby improving the reliability of the battery cell 20 and the battery 10 and prolonging the service life of the battery cell and the battery.

In some examples, the value of the capacity C of the battery cell 20 in the example of the present application can also be set to be other values. For example, the capacity C of the battery cell 20 can be any one of the following values or between any two of the following values: 25 Ah, 30 Ah, 35 Ah, 40 Ah, 45 Ah, 50 Ah, 55 Ah, 60 Ah, 65 Ah, 70 Ah, 75 Ah, 80 Ah, 85 Ah, 90 Ah, 95 Ah, 100 Ah, 130 Ah, 150 Ah, 180 Ah, 200 Ah, 230 Ah, 250 Ah, 280 Ah, 300 Ah, 330 Ah, 350 Ah, 380 Ah, 400 Ah, 430 Ah, 450 Ah, 480 Ah, 500 Ah, 530 Ah and 550 Ah.

It should be understood that the capacity C of the battery cell 20 in the example of the present application represents the amount of electricity output when the battery cell 20 is fully charged and discharged to a termination voltage under specified discharging conditions. The testing method of the capacity C of the battery cell 20 can be selected according to actual applications. For example, GB/T 31467.1 may be used to perform a discharge test to determine the capacity C of the battery cell 20, but the examples of the present application are not limited thereto.

The following is a comparative explanation through a plurality of comparative examples and a plurality of examples. Specifically, the battery cells 20 in the following examples and comparative examples are all based on the square a shell battery shown in FIG. 12 and FIG. 13, wherein the housing 211 is of a hollow structure with an opening formed at one end.

In the following examples and comparative examples, the preparation methods of the positive electrode plate 223, the negative electrode plate 224, the electrolyte solution and the spacer 225 of the battery cell 20 are as follows.

### 1. Preparation of positive electrode plate 223

A positive electrode active material LiNi_{0.95}Co_{0.04}Mn_{0.01}O₂, a conductive agent Super P, and a binder polyvinylidene fluoride (PVDF) are prepared in N-methylpyrrolidone (NMP) into a positive electrode slurry, wherein a solid content in the positive electrode slurry is 50wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil, dried at 85°C and then cold pressed, then trimmed, cut into pieces, and divided into strips, and then dried under vacuum conditions at 85°C for 4 hours to prepare the positive electrode plate 223.

### 2. Preparation of negative electrode plate 224

A negative electrode active material, a conductive agent Super P, a thickener carboxymethyl cellulose (CMC), and a binder styrene butadiene rubber (SBR) are mixed evenly in deionized water to prepare a negative electrode slurry, wherein the negative electrode active material includes graphite and a silicon-based material, and the silicon-based material is a silicon oxide. A solid content in the negative electrode slurry is 30wt%, and a mass ratio of the negative electrode active material, silicon monoxide, Super P, CMC and the binder styrene butadiene rubber (SBR) in the solid components is 88:7:3:2. The negative electrode slurry is coated on upper and lower surfaces of a current collector copper foil and dried at 85°C, then cold pressed, trimmed, cut into pieces, and divided into strips, and then dried under vacuum conditions at 120°C for 12 hours to prepare the negative electrode plate 224.

### 3. Preparation of electrolyte solution

In an argon atmosphere glove box (H2O<0.1ppm, O2<0.1ppm), fully dried electrolyte salt LiPF6 is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain the electrolyte solution with a concentration of 1 mol/L.

### 4. Preparation of spacer 225

A 16 µm polyethylene (PE) film is used as a spacer 225.

### 5. Preparation of lithium-ion battery cell 20

The positive electrode plate 223, the spacer 225, and the negative electrode plate 224 are sequentially stacked, such that the spacer 225 is located between the positive electrode plate 223 and the negative electrode plate 224 to function for separating the positive electrode from the negative electrode, and then wound to obtain a bare battery cell. A tab is welded, the bare battery cell is placed in a shell with different materials, and the electrolyte solution prepared above is injected into a dried shell. The preparation of the lithium-ion battery cell 20 is completed after encapsulation, standing, formation, shaping, and capacity test.

In the following examples and comparative examples, the tensile strength of the housing 211 of the battery cell 20 at a high temperature of 25°C is Rm, and different materials are selected for the housing 211 to obtain different tensile strengths Rm; the capacity of the battery cell 20 is C; and the above specific parameter settings are shown in Table 6 below. In addition, in each example and comparative example, the materials of all regions of the housing 211 are the same, and the tensile strength Rm of the housing 211 at the condition of 25°C is measured using the method specified in GB/T 228.1-2010. In addition, the battery cells 20 in the following examples and comparative examples have the same setting conditions except that the parameters shown in Table 6 are different. For example, in each example, the thickness of the wall of the battery cell 20 with the maximum area is 0.15 mm. For another example, the chemical system of the battery cell 20 in each example is a nickel-cobalt-manganese ternary system.

**Table 6**

| | Rm(MPa) | C (Ah) | Housing material | Test results |
|---|---|---|---|---|
| Comparative Example 1 | 177 | 500 | Aluminum | Housing cracking |
| Comparative Example 2 | 190 | 100 | Aluminum | Housing cracking |
| Example 1 | 393 | 500 | Mild Steel | Complete housing |
| Example 2 | 394 | 300 | Mild Steel | Complete housing |
| Example 3 | 390 | 100 | Mild Steel | Complete housing |
| Example 4 | 851 | 500 | Stainless steel | Complete housing |
| Example 5 | 854 | 300 | Stainless steel | Complete housing |
| Example 6 | 845 | 100 | Stainless steel | Complete housing |

By comparing the two comparative examples in Table 6 above with the six examples, it can be seen that when the housing 211 is made of different materials, different tensile strengths Rm can be determined accordingly. In a case where the tensile strength Rm meets 250 MPa≤Rm≤2000 MPa and the capacity C of the battery cell 20 meets 25 Ah≤C≤550 Ah, for example, in Examples 1-6, the housing 211 of the battery cell 20 does not crack, then the structural strength of the housing 211 can be used for the battery cell 20 with larger capacity and can meet the design requirements of the battery cell 20. However, in a case where the tensile strength Rm does not meet 250 MPa≤Rm≤2000 MPa, for example, in Comparative Examples 1-2, the housing 211 of the battery cell 20 may break, and the design requirements of the battery cell 20 cannot be met.

It should be understood that in order to meet the above design requirements, the material of at least a partial region of the housing 211 in the example of the present application can be flexibly selected according to the actual applications.

In some examples, the material of at least a partial region of the housing 211 includes at least one of the following: steel, a copper alloy, a titanium alloy, or a nickel alloy. These materials have high strength, can meet the strength requirements of the housing 211, and are convenient to process and low in cost.

In some examples, the material of at least a partial region of the housing 211 includes at least one of the following: stainless steel, carbon steel, and high-strength alloy steel. For example, if the housing 211 is made of a stainless steel material, its structural strength is relatively large and can usually meet the requirements of the tensile strength Rm at the room temperature, the yield strength Re at the room temperature, the tensile strength Rn at the high temperature and the melting point p. For example, the melting point of the stainless steel is usually in a range from 1400°C to 1500°C. Furthermore, the housing 211 is made of the stainless steel, which is not prone to rusting. Compared with other materials, the service life of the housing 211 can be prolonged.

If the housing 211 is made of a carbon steel material, its structural strength is large, making it easy to meet the requirements of the tensile strength Rm at the room temperature, the yield strength Re at the room temperature, the tensile strength Rn at the high temperature and the melting point p. For example, the melting point of the carbon steel is usually in a range from 1425°C to 1525°C. In addition, considering that the carbon steel material may be prone to being corroded during use, an outer surface of the housing 211 made of the carbon steel may be nickel-plated. For example, the thickness of a nickel plating layer is usually in a range from 1 µm to 10 µm to protect the surface of the housing 211 from being oxidized and then corroded, thereby prolonging the service life of the housing 211.

The housing 211 may further be made of other high-strength alloy steel materials to effectively improve the structural strength of the housing 211. For example, when the requirements for the structural strength of the housing 211 are high, a high-strength alloy steel material can be selected, which is easy to meet the above-mentioned requirements for the tensile strength Rm at the room temperature, the yield strength Re at the room temperature, the tensile strength Rn at the high temperature and the melting point p.

In some examples, when at least a partial region of the housing 211 is made of steel, the type of the steel may include at least one of the following: SPCC, Q195, Q215, Q235, SUS 304, SUS 316 and other modified stainless steels. These steels are easily available, have the strength to meet the design requirements, and are relatively low in cost. For example, the approximate values of the tensile strength Rm at the room temperature of 25°C, the yield strength Re at the room temperature of 25°C, the tensile strength Rn at the high temperature of 500°C and the melting point p of different steels can be found in Table 7 below.

**Table 7**

| Material | Yield strength Re (MPa) | Tensile strength Rm (MPa) | Tensile strength Rn (MPa) | Melting point p (°C) |
|---|---|---|---|---|
| | 25°C | 25°C | 500°C | |
| SPCC | 270-320 | 380-430 | 230-280 | 1400 |
| Q195 | >195 | 315-430 | 140-180 | 1400-1460 |
| Q215 | >215 | 335-450 | 150-280 | 1420-1480 |
| Q235 | >235 | 375-500 | 160-300 | 1460-1530 |
| SUS 304 | >205 | >520 | 210-450 | 1380-1450 |
| SUS 316 | >177 | >480 | 200-450 | 1375-1450 |
| Modified Stainless steel | 140-180 | 400-600 | 180-350 | 1400-1600 |

It should be understood that the material of at least a partial region of the housing 211 in the example of the present application may also be selected from other materials. For example, different materials may be reasonably selected based on the mass content of different elements in the material and the role played by the element.

In some examples, a mass content of a chromium element in the material of at least a partial region of the housing 211 is m, and m meets: 10%≤m≤30%. Appropriately adding the chromium element to the material of at least a partial region of the housing 211 can increase the melting point and strength of the material, making it easy to meet the requirements for the tensile strength Rm at the room temperature, the yield strength Re at the room temperature, the tensile strength Rn at the high temperature and the melting point p in the example of the present application. In addition, since the chromium element can react with oxygen to form a layer of dense chromium oxide film, a corrosion-resistant protective film can also be formed on a surface of the housing 211, thereby improving the corrosion resistance of the housing 211.

In some examples, a mass content of a nickel element in the material of at least a partial region of the housing 211 is n, and n meets 8%≤ n≤25%. Appropriately adding the nickel element to the material of at least a partial region of the housing 211 can improve the structural strength and plasticity of the housing 211. For example, the tensile strength Rm at the room temperature, the yield strength Re at the room temperature and the tensile strength Rn at the high temperature can be improved, and the corrosion resistance of the material can further be improved.

In some examples, taking the case where the housing 211 is made of steel as an example, different types of steel may contain different elements with different mass contents. For example, for the stainless steel material, an iron element is one of the basic elements of stainless steel, and its mass content is usually in a range from 60% to 70%. For another example, Table 8 shows the mass contents of different elements in several steels, wherein the values in Table 8 are the maximum values of the mass percentage of each element in the material, that is, the mass percentage of each element in the corresponding material is usually not greater than the values shown in Table 8.

**Table 8**

| | Carbon C | Silicon Si | Manganese Mn | Phosphorus P | Sulfur S | Nickel Ni | Chromium Cr | Molybdenum Mo |
|---|---|---|---|---|---|---|---|---|
| SPCC | 0.12 | / | 0.5 | 0.04 | 0.045 | / | / | / |
| Q195 | 0.12 | 0.3 | 0.5 | 0.035 | 0.035 | 0.3 | 0.3 | / |
| Q215 | 0.15 | 0.35 | 1.2 | 0.035 | 0.035 | 0.3 | 0.3 | / |
| Q235 | 0.22 | 0.35 | 1.4 | 0.035 | 0.035 | 0.3 | 0.3 | / |
| SUS 304 | 0.08 | 1.0 | 2.0 | 0.045 | 0.03 | 8.0-10.5 | 18.0-20.0 | / |
| SUS 316 | 0.08 | 1.0 | 2.0 | 0.045 | 0.03 | 10.0-14.0 | 16.0-18.0 | 2.0-3.0 |
| Modified stainless steel | 0.08 | 1 | 2 | 0.045 | 0.03 | 7.5-10 | 16.5-18.5 | 0.1 |

It should be understood that when at least a partial region of the housing 211 is made of steel, increasing the mass content of the carbon element in the steel can improve the strength and hardness of the steel. For example, generally the higher the carbon content, the harder and stronger the steel will be, but corrosion resistance may be reduced.

If the mass content of the chromium element in the steel is increased, the corrosion resistance of the steel can be improved because the chromium element can react with oxygen to form a layer of dense chromium oxide film, so as to form a corrosion-resistant protective film on the surface of the steel.

If the mass content of the nickel element in the steel is increased, the corrosion resistance, strength and plasticity of the steel can be improved.

If the mass content of the molybdenum element in the steel is increased, the corrosion resistance and strength of the steel, especially in corrosive media such as acids and salts can be improved.

If the mass content of the manganese element in the steel is increased, the toughness and fatigue resistance of the steel can be improved.

If the mass content of the silicon element in the steel is increased, the corrosion resistance and strength of stainless steel can be improved.

If the mass content of the phosphorus element and the sulfur element in the steel is reduced, the negative impact of these two elements on the corrosion resistance, plasticity and toughness of the steel can be reduced.

In addition, other elements may also be provided in the steel. For example, the steel may also include a copper element. For example, the mass content of the copper element in Q195, Q215 and Q235 is generally not greater than 0.3%, while the mass content of the copper element in the modified stainless steel is generally not greater than 2% to 3.5%. For another example, the steel may also include the nitrogen element. For example, the mass content of the nitrogen element in Q195, Q215 and Q235 is generally not greater than 0.12%.

It should be understood that the testing method for the mass content of each element in the above steel in the example of the present application may be set according to the actual applications. For example, inductively coupled plasma atomic emission spectroscopy, namely inductively coupled plasma (ICP) may be used for testing, but the examples of the present application are not limited thereto.

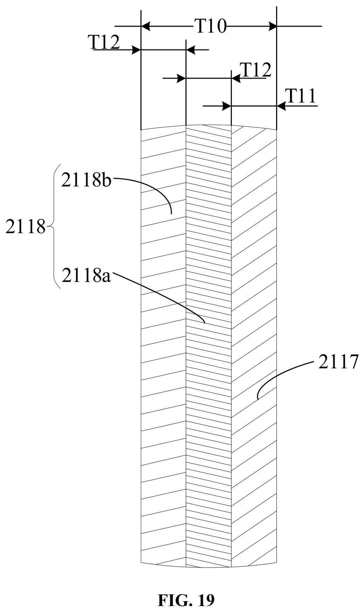

FIG. 19 shows a schematic diagram of a partial structure of a housing 211 according to an example of the present application. For example, FIG. 19 may be a partial enlarged diagram of a region A' shown in FIG. 18. As shown in FIG. 19, the housing 211 of the example of the present application is of a multi-layer structure, and the material of the outermost housing 2117 of the housing 211 includes at least one of the following: aluminum, an aluminum alloy, copper, a copper alloy and chromium.

It should be understood that the housing 211 of the example of the present application is of a multi-layer structure. That is, for any wall of the housing 211, a plurality of structures are stacked in the thickness direction of the wall, so that the housing 211 is of a multi-layer structure. Furthermore, an installation method between the plurality of structures of the housing 211 can be flexibly set according to actual applications. For example, a plurality of single-layer housing structures with different sizes but basically the same shape can be first processed. For example, each single-layer housing structure is a hollow structure with an opening; then, the housing structures with relatively larger sizes among the plurality of single-layer housing structures are sequentially sleeved on the outer sides of the housing structures with relatively smaller sizes, so that the plurality of single-layer housing structures can be combined into a multi-layer housing 211. For another example, an approximate plate-like structure with a multi-layer structure may be first processed, and then the plurality of the plate-like structures may be mutually spliced and combined to form a multi-layer housing 211, but the examples of the present application are not limited thereto.

It should be understood that the outermost housing 2117 of the housing 211 of the example of the present application includes the outermost structure of each wall of the housing 211, that is, the outermost housing 2117 is a housing structure including the outer surface of the housing 211.

In the example of the present application, the material of the outermost housing 2117 of the housing 211 may include at least one of the following: aluminum, an aluminum alloy, copper, a copper alloy or chromium. When the material of the outermost housing 2117 contains aluminum, the aluminum will be oxidized into dense aluminum oxide, which can prevent corrosion. When the material of the outermost shell 2117 contains copper, the copper will be oxidized into copper oxide, i.e., verdigris, which can prevent corrosion. When the material of the outermost housing 2117 contains chromium, the chromium will be oxidized into chromium oxide, which can also prevent corrosion. Therefore, when the material of the outermost housing 2117 is the above corrosion-resistant material, the outermost housing 2117 can protect other housing layers located on an inner side of the outermost housing, which can not only improve the structural stability of the housing 211, but also prolong the service life of the housing 211.

It should be understood that the specific thickness of the outermost housing 2117 in the examples of the present application can also be set flexibly according to actual applications. For example, the thickness of the outermost housing 2117 may be set in a certain proportion according to the thickness of the housing 211.

In some examples, the average thickness of the outermost housing 2117 is T11, the average thickness of the housing 211 is T10, and T11 and T10 meet: 0.15≤T11/T10≤0.5. If the ratio T11/T10 is set too small, since the average thickness T10 of the housing 211 is limited, the average thickness T11 of the outermost housing 2117 will be very small, which will increase the processing difficulty on the one hand, and reduce the anti-corrosion effect of the outermost housing 2117 on the other hand, thereby affecting the structural reliability of the housing 211. On the contrary, if the ratio T11/T10 is set too large, the average thickness T11 of the outermost housing 2117 will be very large, while the thicknesses of the other layers of the housing 211 except the outermost housing 2117 will be very small. However, the structural strength of the outermost housing 2117 may be insufficient, especially after it is oxidized, and its deformation capability is poor. When its average thickness T11 is large, the overall structural strength of the housing 211 will be affected, thereby further reducing the stability of the housing 211.

Furthermore, T11 and T10 meet: 0.15≤T11/T10≤0.4. By appropriately reducing the maximum value of the ratio T11/T10 and increasing the minimum value of the ratio T11/T10, the average thickness T11 of the outermost housing 2117 can be limited to be neither too large nor too small, thereby improving the anti-corrosion effect and improving the structural strength and stability of the housing 211.

Furthermore, T11 and T10 meet: 0.2≤T11/T10≤0.3, so as to better improve the anti-corrosion effect and improve the stability and reliability of the housing 211.

In some examples, the value of the ratio T11/T10 of the average thickness T11 of the outermost housing 2117 to the average thickness T10 of the housing 211 in the example of the present application can also be set to other values. For example, the ratio T11/T10 may be any one of the following values or between any two of the following values: 0.15, 0.18, 0.2, 0.23, 0.25, 0.28, 0.3, 0.33, 0.35, 0.38, 0.4, 0.43, 0.45, 0.48 and 0.5.

It should be understood that the value range of the average thickness T10 of the housing 211 of the example of the present application can also be flexibly set according to actual applications. For example, the average thickness T10 of the housing 211 meets: 0.05 mm≤ T10≤0.5 mm. The average thickness T10 of the housing 211 should not be too small to reduce the processing difficulty of the multi-layer housing 211 and improve the structural strength of the housing 211. For example, the housing 211 is not prone to breaking, thereby prolonging the service life of the housing 211. On the contrary, the average thickness T10 of the housing 211 should not be too large, so that the housing 211 occupies less space, increases the space utilization of the battery cell 20, and further increases the energy density of the battery 10 provided with the plurality of battery cells 20.

Further, the average thickness T10 of the housing 211 meets: 0.075 mm≤ T10≤0.4 mm. Appropriately thinning average thickness T10 of the housing 211 can reduce the space occupied by the housing 211 inside the battery 10 so as to increase the energy density of the battery 10. Appropriately increasing average thickness T10 of the housing 211 can also reduce the difficulty of processing the housing 211.

Further, the average thickness T10 of the housing 211 meets: 0.1 mm≤ T10≤0.3 mm. The average thickness T10 of the housing 211 is neither too large nor too small, which can not only improve the structural strength and structural stability of the housing 211, but also reduce the space occupied by the housing 211 inside the battery 10, thereby increasing the energy density of the battery 10.

In some examples, the value of the average thickness T10 of the housing 211 in the example of the present application can also be set to other values. For example, the value of the average thickness T10 of the housing 211 can be any one of the following values or between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm and 0.5 mm.

It should be understood that the value range of the average thickness T11 of the outermost housing 2117 of the example of the present application can also be flexibly set according to actual applications. For example, T11 meets: 0.015 mm≤ T11≤0.25 mm. The average thickness T11 of the outermost housing 2117 should not be too small to reduce the processing difficulty, improve the anti-corrosion effect of the outermost housing 2117, and further improve the structural reliability of the housing 211. On the contrary, the average thickness T11 of the outermost housing 2117 should not be too large. Considering that after the outermost housing 2117 is oxidized, its deformation capability is poor. In a case where its average thickness T11 is too large, the deformation capability of the overall structure of the housing 211 is affected, thereby reducing the reliability and stability of the housing 211.

Further, the average thickness T11 of the outermost housing 2117 may further meet: 0.05 mm≤T11≤0.2 mm. Properly increasing the minimum value of the average thickness T11 of the outermost housing 2117 can improve the anti-corrosion effect of the outermost housing 2117. Properly reducing the maximum value of the average thickness T11 of the outermost housing 2117 can improve the deformation capability of the overall structure of the housing 211, thereby improving the reliability and stability of the housing 211.

Further, the average thickness T11 of the outermost housing 2117 may further meet: 0.075 mm≤T11≤0.15 mm. It can not only improve the anti-corrosion effect of the outermost housing 2117, but also improve the deformation capability of the overall structure of the housing 211, thereby improving the reliability and stability of the housing 211.

In some examples, the value of the average thickness T11 of the outermost housing 2117 in the example of the present application can also be set to other values. For example, the value of the average thickness T11 of the outermost housing 2117 can be any one of the following values or between any two of the following values: 0.015 mm, 0.02 mm, 0.025 mm, 0.03 mm, 0.035 mm, 0.04 mm, 0.045 mm, 0.05 mm, 0.055 mm, 0.06 mm, 0.065 mm, 0.07 mm, 0.075 mm, 0.08 mm, 0.085 mm, 0.09 mm, 0.095 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm and 0.25 mm.

It should be understood that a thickness of an inner housing 2118 of the housing 211 of the example of the present application can also be flexibly set according to the actual applications, wherein the inner housing 2118 is any layer of the housing 211 except the outermost housing 2117. Furthermore, the housing 211 may include one or more layers of inner housing 2118. When the housing 211 includes the plurality of layers of inner housing 2118, the thicknesses of the plurality of layers of inner housing 2118 may be the same for ease of processing, or may be different so as to flexibly adjust the thickness of the inner housing 2118 at different positions according to actual applications. For example, as shown in FIG. 19, taking an example that the housing 211 includes a three-layer housing structure, the three-layer housing structure includes an outermost shell 2117 located on the outermost side and two layers of inner housings 2118 located inside, and the two layers of inner housings 2118 include an innermost housing 2118b and an intermediate housing 2118a. The average thickness of the innermost shell 2118b and the average thickness of the intermediate housing 2118a may be the same or different. For example, the average thickness of the innermost housing 2118b and the average thickness of the intermediate housing 2118a may be set to T12, and the value of T12 can be set according to the application. For example, T12 may be greater than, equal to, or less than T11. The examples of the present application are not limited thereto.

It should be understood that the average thickness T10 of the housing 211 in the example of the present application may refer to an average thickness of at least a partial region of the housing 211. The average thickness T11 of the outermost housing 2117 of the housing 211 may also refer to the average thickness of at least a partial region of the outermost housing 2117. The average thickness T12 of the inner housing 2118 of the housing 211 may also refer to the average thickness of at least a partial region of the inner housing 2118. Furthermore, a calculation region of the average thickness T10 of the housing 211 is usually consistent with a calculation region of the average thickness T11 of the outermost housing 2117, and also consistent with the calculation region of the average thickness T12 of the inner housing 2118. For example, if some regions are excluded when calculating the average thickness T10 of the housing 211, then correspondingly, the calculation of the average thickness T11 of the outermost housing 2117 also needs to exclude the same regions, and the calculation of the average thickness T12 of the inner housing 2118 also needs to exclude the same region. For ease of explanation, the following description is made by taking the calculation of the average thickness T10 of the housing 211 as an example, but the relevant description is also applicable to determining the average thickness T11 of the outermost housing 2117 and the average thickness T12 of the inner housing 2118, which will not be repeated here.

For example, the average thickness T10 of the housing 211 may refer to the average thickness T10 of the entire region of the housing 211, especially when the entire surface of the housing 211 is relatively flat, that is, the thicknesses of most regions of the housing 211 are basically equal or have a small difference, or the thicknesses of all regions of the housing 211 are basically equal or have a small difference, then the average thickness of the entire region of the housing 211 can be determined as T10.

For another example, the average thickness T10 of the housing 211 may also refer to the thickness T10 of a local region of the housing 211, that is, the average thickness T10 of the remaining region after excluding the partial region of the housing 211. For example, if there is a part of special region in the housing 211, and the thickness of the part of special region is significantly different from that of other regions. For example, there is a protruding structure or recessed region in the thickness direction in the part of special region, so that the thickness of the part of special region is larger or smaller than that of other regions, then the part of special region can be excluded to calculate the average thickness T10 of the remaining regions of the housing 211.

In some examples, the housing 211 may include a functional region, and the average thickness T10 of the housing 211 is the average thickness of the region of the housing 211 other than the functional region. For example, the functional region includes at least one of the following regions: a pressure relief region, a region 214 where the electrode terminal is located, a liquid injection region, and a welding region. The thickness of the functional region is usually much different from the thickness of other regions of the housing 211. Therefore, when the average thickness T10 of the housing 211 is calculated without including the functional region, the design of the housing 211 can better meet the strength requirements to improve the structural strength and stability of the battery cell 20.

It should be understood that the functional region in the example of the present application may include a region on the housing 211 where a specific structure is provided or which has a specific purpose, and is applicable to the "functional region" described above. For the sake of brevity, it will not be repeated one by one here. For example, the functional region may include a pressure relief region, and the pressure relief region is used to set a pressure relief mechanism. The pressure relief mechanism in the example of the present application may be arranged on any wall of the battery cell 20. For example, the pressure relief mechanism may be arranged in a pressure relief region of the housing 211 of the battery cell 20. The pressure relief mechanism may be a part of the housing 211, or may be of split structure from the housing 211, so as to be fixed to the housing 211 by means of, for example, welding. For example, when the pressure relief mechanism is a part of the housing 211, for example, the pressure relief mechanism may be formed by setting a nick on the housing 211, that is, the housing 211 is provided with a nick in the pressure relief region, and the thickness at the nick is significantly smaller than the thickness of other regions of the housing 211. Therefore, the average thickness T10 of the housing 211 can exclude the thickness at the nick. The nick is the weakest position of the pressure relief mechanism. When excessive gas generated by the battery cell 20 causes the internal pressure to rise and reach a threshold, or the internal temperature of the battery cell 20 rises and reaches a threshold due to the heat generated by the internal reaction of the battery cell 20, the pressure relief mechanism can be ruptured at the nick, resulting in the communication between the inside and outside of the battery cell 20. The gas pressure and temperature are released outward through the cracking of the pressure relief mechanism, thereby preventing the battery cell 20 from exploding.

For another example, the pressure relief mechanism may also be of a split structure from the housing 211. The pressure relief mechanism may use forms such as an explosion-proof valve, an air valve, a pressure relief valve, or a safety valve, and may specifically use pressure-sensitive or temperature-sensitive components or structures. For example, the housing 211 is provided with a through hole in the pressure relief region, and the pressure relief mechanism is installed and fixed to the housing 211 through the through hole. The installed pressure relief mechanism may protrude or be recessed relative to other regions of the housing 211. Therefore, the average thickness T10 of the housing 211 may be calculated without including the pressure relief region where the pressure relief mechanism is located. When the internal pressure or temperature of the battery cell 20 reaches a predetermined threshold, the pressure relief mechanism executes an action or a weak structure provided in the pressure relief mechanism is damaged, so as to form an opening or channel for releasing the internal pressure or temperature.

In some examples, the functional region may also include a region where the electrode terminal 214 is located. Each electrode terminal 214 of the examples of the present application may be arranged on any wall, and a plurality of electrode terminals 214 may be arranged on the same wall or on different walls of the battery cell 20. For example, as shown in FIG. 3 to FIG. 4, taking an example that each battery cell 20 includes two electrode terminals 214, and the two electrode terminals 214 are located on the same wall, for example, the two electrode terminals 214 may both be located on the cover plate 212.

For another example, taking the example that each battery cell 20 includes two electrode terminals 214, and the two electrode terminals 214 are located on the same wall, unlike what is shown in FIG. 3 to FIG. 4, the two electrode terminals 214 may also be located on any wall of the housing 211. For example, the two electrode terminals 214 may both be located on the wall of the housing 211 with the minimum area. When one or more electrode terminals 214 are located at the housing 211, each electrode terminal 214 usually protrudes from other regions of the housing 211. That is, the thickness of the region where the electrode terminal 214 is located is much greater than the thickness of other regions of the housing 211. Therefore, the average thickness T10 of the housing 211 may be calculated without including the region where all the electrode terminals 214 are located.

In some examples, the functional region may also include a liquid injection region. For example, the liquid injection region of the 211 may be provided with a liquid injection hole, through which the electrolyte solution is injected into the housing 211. After the injection of the electrolyte solution is completed, the liquid injection hole may be sealed by a sealing element. Considering that the thickness of the liquid injection region where the sealing element is located is usually much greater than the thickness of other regions of the housing 211, the average thickness T10 of the housing 211 may be calculated without including the liquid injection region.

In some examples, the functional region may also include a welding region. For example, the housing 211 and the cover plate 212 may be fixed by welding, or the housing 211 itself needs to be processed and formed by welding. For example, any two walls of the housing 211 may be welded, or the housing 211 is formed by splicing at least two parts together, and the housing 211 may include a welding region. For example, the housing 211 may be welded by splicing, and the housing 211 may have a weld 2113. Specifically, the housing 211 may include at least two parts, and the at least two parts are connected by welding to form the housing 211. The example of the present application mainly takes the housing 211 including two parts in a height direction Z of the battery cell 20 as an example, and there is a weld 2113 between the upper half of the housing and the lower half of the housing. Alternatively, different from what is shown in FIG. 4, other parts of the housing 211 may also be provided with welds 2113, and the examples of the present application are not limited thereto. The welding region of the functional region in the example of the present application may also include the weld 2113. Due to the processing technology, the thickness of the welding region is usually greater thickness of other regions of the housing 211. Therefore, the average thickness T10 of the housing 211 may be calculated without including the welding region.

It should be understood that in order to further improve the structural strength and reliability of the shell 211, the inner housing 2118 of the housing 211 can be set according to actual applications. In some examples, the tensile strength of the inner housing 2118 of the housing 211 at 25°C is Rm1, and Rm1 meets: 250 MPa≤Rm1≤2000 MPa. The overall structural strength and stability of the housing 211 are increased by improving the tensile strength Rm1 of the inner housing 2118 of the housing 211 at the room temperature of 25°C. However, the tensile strength Rm1 of the inner housing 2118 at the room temperature should not be too large to reduce the difficulty in selecting the material of the inner housing 2118, thereby reducing the processing difficulty and processing cost of the battery cell 20.

It should be understood that the value range of the tensile strength Rm1 of the housing 2118 at a room temperature of 25°C in the example of the present application may be adjusted according to actual applications. For example, the value of the tensile strength Rm1 at the room temperature may further meet 400 MPa≤Rm1≤1200 MPa. On the one hand, increasing the tensile strength Rm1 of the inner housing 2118 at a room temperature can improve the deformation capability of the inner housing 2118 to resist the expansion of the electrode assembly 22, making the inner housing 2118 less likely to be damaged, thereby improving the structural stability of the housing 211 and the battery cell 20 and prolonging the service life of the housing and the battery cell. On the other hand, the tensile strength Rm1 of the inner housing 2118 at the room temperature is controlled to not be too large, so as to reduce the selecting difficulty and processing difficulty of the material of the inner housing 2118, save costs, and facilitate processing.

Further, the tensile strength Rm1 of the inner housing 2118 at a room temperature may further be set to meet 450 MPa≤Rm1≤800 MPa. The tensile strength Rm1 of the inner housing 2118 at a room temperature is not too large or too small, which can improve the deformation capability of the inner housing 2118 to resist the expansion of the electrode assembly 22, and is easy to implement and saves costs.

In some examples, the value of the tensile strength Rm1 of the inner housing 2118 in the example of the present application at a room temperature may also be set to be other values. For example, the value of the tensile strength Rm1 at the room temperature may be any one of the following values or between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength in the example of the present application refers to the maximum stress value that the material can withstand before breaking. A test method of the tensile strength Rm1 of the inner housing 2118 at a temperature of 25°C in the example of the present application may be selected according to actual applications. For example, the national standard GB/T 228.1-2010 can be used to test the tensile strength Rm1 at a normal temperature of 25°C.

The above description mainly takes the rectangular battery cell 20 as an example. The following description will take a cylindrical battery cell 20 as an example with reference to the accompanying drawings. The cylindrical battery cell 20 in the example of the present application is different from the rectangular battery cell 20 described above except for the shape. The rest of the description is applicable to each other and will not be repeated here.

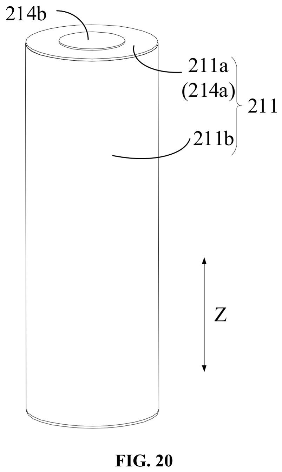

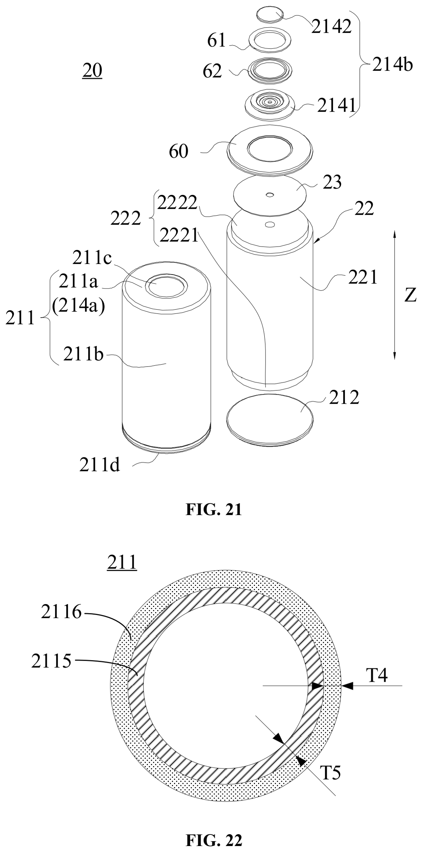

FIG. 20 shows a schematic structural diagram of a battery cell 20 in an example of the present application. For example, the battery cell 20 shown in FIG. 3 can be any battery cell 20 in the battery 10. FIG. 21 shows a schematic diagram of a partial decomposition structure of a battery cell 20 in an example of the present application. For example, FIG. 21 may be a schematic diagram of the partial decomposition structure of the battery cell 20 shown in FIG. 20. FIG. 22 shows a schematic cross-sectional view of a housing 211 of a battery cell 20 in an example of the present application. For example, FIG. 22 may be a cross-sectional view of the housing 211 of the battery cell 20 shown in FIG. 20 and FIG. 21, and the cross-section is a cross section of the housing 211.

In the example of the present application, as shown in FIG. 20 to FIG. 22, the battery cell 20 includes: an electrode assembly 22, the electrode assembly 22 including a first tab 2221; a first electrode terminal 214a; and a housing 211. The housing 211 includes a barrel 211b and a cover 211a connected to the barrel 211b, the barrel 211b is arranged around the periphery of the electrode assembly 22, the cover 211a includes the first electrode terminal 214a, the first tab 2221 is electrically connected to the first electrode terminal 214a through the barrel 211b, and the housing 211 is of a multi-layer structure with different electrical resistivities.

The housing 211 may be in various shapes, such as a cylinder, a cuboid, or other polyhedrons. Exemplarily, as shown in FIG. 20 to FIG. 22, the housing 211 being of a hollow cylindrical structure is taken as an example here for description. In addition, the example of the present application mainly takes an example that the housing 211 is of a hollow structure with an opening formed at one end, and the corresponding cover plate 212 is a circular plate-like structure adapted to the housing 211. For the cylindrical housing 211, correspondingly, the barrel 211b is a cylinder, and the cover 211a is of a circular plate-shaped structure.

The electrode assembly 22 of the example of the present application may include a first tab 2221, and the first tab 2221 may be electrically connected to the first electrode terminal 214a through the barrel 211b of the housing 211, which can simplify the structure of the battery cell 20. The housing 211 is set to a multi-layer structure with different electrical resistivities, a current carrying capability of the battery cell 20 can be improved by a layer of structure with lower electrical resistivity, and the structural strength of the housing 211 can be improved by a layer of structure with higher electrical resistivity, which can improve the performance of the battery cell 20, and improve the structural strength of the battery cell 20, thereby prolonging the service life of the battery cell 20.

In the example of the present application, the electrode assembly 22 further includes a second tab 2222, and the second tab 2222 has opposite polarity to the first tab 2221. Specifically, from the appearance of the electrode assembly 22, the electrode assembly 22 includes a main body portion 221 and a tab 222. The tab 222 includes a first tab 2221 and a second tab 2222. The first tab 2221 and the second tab 2222 protrude out of the main body portion 221. The first tab 2221 is a part of the first electrode plate that is not coated with an active material layer, and the second tab 2222 is a part of the second electrode plate that is not coated with an active material layer. The first tab 2221 and the second tab 2222 are used to lead out the current in the main body portion 221.

The first tab 2221 and the second tab 2222 may extend from the same side of the main body portion 221. That is, the first tab 2221 and the second tab are located on the same end surface of the electrode assembly 22. Alternatively, the first tab 2221 and the second tab 2222 may also extend from the different sides of the main body portion 221. That is, the first tab 2221 and the second tab are located on the different end surfaces of the electrode assembly 22. For example, the first tab 2221 and the second tab 2222 may also extend from two opposite sides, respectively. That is, the first tab 2221 and the second tab 2222 are respectively located at oppositely-arranged end surfaces of the electrode assembly 22 to facilitate processing. As shown in FIG. 20 to FIG. 22, the first tab 2221 and the second tab 2222 may be respectively arranged on two sides of the main body portion 221 in a first direction Z. In other words, the first tab 2221 and the second tab 2222 are respectively arranged at two ends of the electrode assembly 22 in the first direction Z. The first direction Z may be a height direction Z of the electrode assembly 22.

It should be understood that the electrode assembly 22 includes a first electrode plate, a second electrode plate and a spacer. The spacer is used to separate the first electrode plate from the second electrode plate. The first electrode plate and the second electrode plate have the opposite polarities. In other words, one of the first electrode plate and the second electrode plate is a positive electrode plate 223, and the other one of the first electrode plate and the second electrode plate is a negative electrode plate 224.

The first electrode plate, the second electrode plate and the spacer are all of strip-shaped structures, and the first electrode plate, the second electrode plate and the spacer are wound together to form a wound structure. The wound structure may be a cylindrical structure, a flat structure or a structure of other shapes.

Optionally, the first tab 2221 is wound around a central axis of the electrode assembly 22 for multiple turns, and the first tab 2221 includes multiple turns of tab layers. After winding is completed, the first tab 2221 is roughly cylindrical, and a gap is left between two adjacent turns of tab layers. In the example of the present application, the first tab 2221 may be processed to reduce the gap between the tab layers, so as to facilitate the connection of the first tab 2221 with other conductive structures. For example, the example of the present application can perform a flattening treatment on the first tab 2221, so that an end region of the first tab 2221 away from the main body portion 221 is closed and gathered together. The flattening treatment forms a dense end surface at one end of the first tab 2221 away from the main body portion 221, thereby reducing the gap between the tab layers, and facilitating the connection of the first tab 2221 with other conductive structures. Alternatively, in the example of the present application, a conductive material may also be filled between two adjacent turns of the tab layers to reduce the gap between the tab layers.

Optionally, the second tab 2222 is wound around a central axis of the electrode assembly 22 for multiple turns, and the second tab 2222 includes multiple turns of tab layers. Exemplarily, the second tab 2222 is also flattened to reduce the gap between the tab layers of the second tab 2222.

In the example of the present application, the battery cell 20 further includes: a second electrode terminal 214b. The second electrode terminal 214b is electrically connected to the second tab 2222, and the first electrode terminal 214a and the second electrode terminal 214b are located on the same wall of the battery cell 20 to improve the integration of the battery cell 20, increase the space utilization of the battery cell 20 in the battery 10, and facilitate processing and assembly.

It should be understood that the cover 211a in the example of the present application includes the first electrode terminal 214a. For example, the first electrode terminal 214a may be arranged on the cover 211a, or the cover 211a may directly serve as the first electrode terminal 214a.

In some examples, the cover 211a is the first electrode terminal 214a, the cover 211a is provided with an electrode lead-out hole 211c, and the second electrode terminal 214b is arranged on the cover 211a in an insulated manner and installed on the electrode lead-out hole 211c. One of the cover 211a and the second electrode terminal 214b is a positive output electrode of the battery cell, and the other is a negative output electrode of the battery cell. At least a part of the housing 211 itself may be used as an output electrode of the battery cell 20, thereby eliminating a traditional electrode terminal, which can simplify the structure of the battery cell 20. When the plurality of battery cells 20 are assembled into a group, the housing 211 may be electrically connected to a busbar component, which can not only increase the current carrying area, but also make the structural design of the busbar component more flexible.

For ease of description, the following mainly takes the cover 211a being the first electrode terminal 214a as an example, but the embodiments of the present application are not limited thereto.

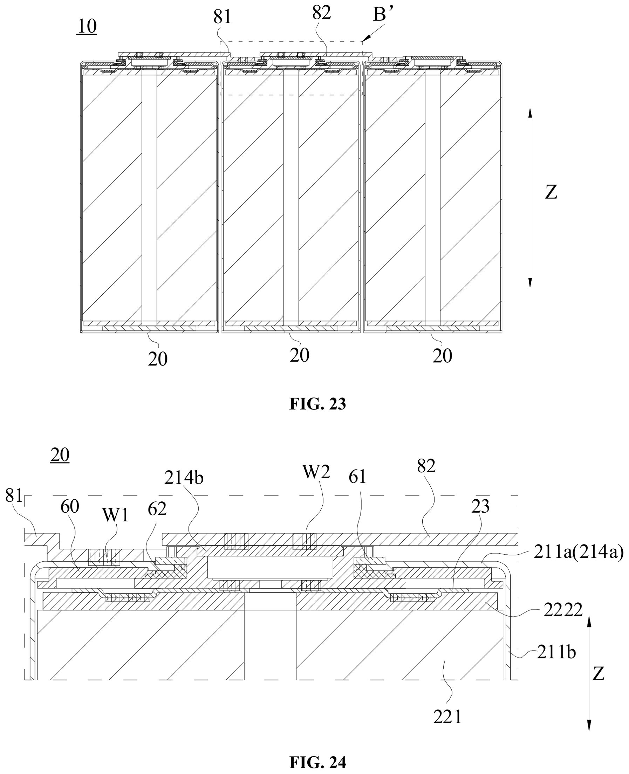

FIG. 23 is a schematic local sectional view of a battery 10 provided by some examples of the present application, and the battery 10 may include the plurality of battery cells 20. FIG. 24 is another schematic local sectional view of the battery 10 provided by some examples of the present application. For example, FIG. 24 may be a schematic enlarged diagram of the battery 10 shown in FIG. 23 at a region B'.

As shown in FIG. 20 to FIG. 24, the cover 211a is provided with an electrode lead-out hole 211c, and at least a part of the cover 211a is used to be electrically connected with a first connecting member 81 and the first tab 2221 of the battery 10. The second electrode terminal 214b is used to be electrically connected with a second connecting member 82 and a second tab 2222 of the battery 10, and the second electrode terminal 214b is arranged on the cover 211a in an insulated manner and installed on the electrode lead-out hole 211c. One of the cover 211a and the second electrode terminal 214b is a positive output electrode of the battery cell 20, and the other is a negative output electrode of the battery cell 20.

The cover 211a is electrically connected to the barrel 211b, and the cover 211a and the barrel 211b may have the same polarity.

It should be understood that the cover 211a and the barrel 211b in the example of the present application may be of an integrally formed structure. That is, the housing 211 is an integrally formed component. This can omit the process of connecting the cover 211a and the barrel 211b. For example, the housing 211 may be formed by a stretching process. Of course, the cover 211a and the barrel 211b may also be two components provided separately and then connected together by welding, riveting, bonding, etc. The example of the present application mainly takes the cover 211a and the barrel 211b being of the integrally formed structure as an example.

The housing 211 in the example of the present application may be of a hollow structure with an opening formed at one end. Specifically, the barrel 211b has an opening 211d at one end facing away from the cover 211a. The battery cell 20 further includes a cover plate 212, and the cover plate 212 covers the opening 211d of the barrel 211b to close the opening 211d of the barrel 211b. The cover plate 212 may be of various structures. For example, the cover plate 212 is of a plate-shaped structure.

In some examples, the cover 211a is provided with an electrode lead-out hole 211c. The region of the cover 211a other than the electrode lead-out hole 211c includes a region for welding with the first connecting member 81. That is, the cover 211a may be welded with the first connecting member 81 to form a first welding portion W1. Exemplarily, during welding, laser acts on the surface of the first connecting member 81 facing away from the cover 211a, and the laser melts and connects a part of the first connecting member 81 and a part of the cover 211a to form the first welding portion W1.

The electrode lead-out hole 211c penetrates through the cover 211a, so that electric energy in the electrode assembly 22 is lead out to the outside of the housing 211. Exemplarily, the electrode lead-out hole 211c penetrates through the cover 211a in the first direction Z.

The electrode lead-out hole 211c in the example of the present application is manufactured after the housing 211 is stretched and formed. For example, this example utilizes a hole-opening process to form an electrode lead-out hole 211c on the cover 211a for installing the second electrode terminal 214b, so as to arrange the positive output electrode and the negative output electrode at one end of the battery cell 20 facing away from the opening of the housing 211. The cover 211a is formed during the molding process of the housing 211, and the flatness can also be ensured after the electrode lead-out hole 211c is opened, thereby ensuring the connection strength between the cover 211a and the first connecting member 81. At the same time, the flatness of the cover 211a is not restricted by its own size, so the cover 211a may have a larger size, thereby improving the current carrying capability of the battery cell 20.

In some examples, the barrel 211b is cylindrical, the electrode lead-out hole 211c is a circular hole, and the central axis of the barrel 211b and the central axis of the electrode lead-out hole 211c are arranged to overlap each other. The "overlapping arrangement" does not require that the central axis of the barrel 211b and the central axis of the electrode lead-out hole 211c absolutely and completely overlap, and there may be deviations allowed by the process.

The electrode lead-out hole 211c may be used to define the position of the second electrode terminal 214b. In this example, the central axis of the electrode lead-out hole 211c is arranged to overlap with the central axis of the barrel 211b, so that at least part of the second electrode terminal 214b is located at the center of the cover 211a. In this way, when a plurality of battery cells 20 are assembled into a group, the requirement for the position accuracy of the second electrode terminal 214b can be reduced, the assembly process can be simplified, and the assembly efficiency can be improved.

The central axis of the electrode assembly 22 is a virtual straight line, which is parallel to the first direction Z. The central axis of the electrode assembly 22 may pass through the electrode lead-out hole 211c, or may be staggered with the electrode lead-out hole 211c, which is not limited in this example.

The first tab 2221 is electrically connected to the cover 211a. The first tab 2221 may be directly electrically connected to the cover 211a, or may be indirectly electrically connected to the cover 211a through other conductive structures. For example, the first tab 2221 may be electrically connected to the cover 211a through the barrel 211b.

The second electrode terminal 2222 is electrically connected to the second electrode terminal 214b. The second tab 2222 may be directly electrically connected to the second electrode terminal 214b, or may be indirectly electrically connected to the second electrode terminal 214b through other conductive structures. For example, the second tab 2222 may be electrically connected to the second electrode terminal 214b via a current collecting member 23.

The second electrode terminal 214b is arranged on the cover 211a in an insulated manner, so the second electrode terminal 214b and the cover 211a may have different polarities, and the second electrode terminal 214b and the cover 211a may serve as different output electrodes.

The second electrode terminal 214b is fixed to the cover 211a. The second electrode terminal 214b may be integrally fixed to the outer side of the cover 211a, or may extend into the interior of the housing 211 through the electrode lead-out hole 211c.

When the first tab 2221 is a negative electrode tab and the second tab 2222 is a positive electrode tab, the cover 211a is a negative output electrode of the battery cell 20, and the second electrode terminal 214b is a positive output electrode of the battery cell 20. When the first tab 2221 is a positive electrode tab and the second tab 2222 is a negative electrode tab, the cover 211a is a positive output electrode of the battery cell 20, and the second electrode terminal 214b is a negative output electrode of the battery cell 20.

In the battery 10, the plurality of battery cells 20 are electrically connected by busbar components. The busbar components include a first connecting member 81 for connecting to the cover 211a of the battery cell 20 and a second connecting member 82 for connecting to the second electrode terminal 214b of the battery cell 20.

The first connecting member 81 may be connected to the cover body 211a by welding, bonding or other methods to achieve an electrical connection between the first connecting member 81 and the cover body 211a. The second connecting member 82 may be connected to the second electrode terminal 214b by welding, bonding, riveting or other methods to achieve an electrical connection between the second connecting member 82 and the second electrode terminal 214b.

Exemplarily, the first connecting member 81 connects the cover 211a of one battery cell 20 and the second electrode terminal 214b of another battery cell 20, and the second connecting member 82 connects the second electrode terminal 214b of the one battery cell 20 and the cover 211a of yet another battery cell 20, so that the first connecting member 81 and the second connecting member 82 connect the three battery cells 20 in series.

In this example, by using the cover 211a and the second electrode terminal 214b as the output electrode, the structure of the battery cell 20 can be simplified and the current-carrying capability of the battery cell 20 can be ensured. The cover 211a and the second electrode terminal 214b are located at the same end of the battery cell 20, so that the first connecting member 81 and the second connecting member 82 can be assembled to the same side of the battery cell 20, which can simplify the assembly process and improve the efficiency of assembling the plurality of battery cells 20 into a group.

It should be understood that, as shown in FIG. 20 to FIG. 24, the second electrode terminal 214b of the example of the present application includes a terminal body 2141. Furthermore, the terminal body 2141 may be fixed to the cover 211a by riveting. For example, at least a part of the terminal body 2141 is located in the electrode lead-out hole 211c, and two ends of the terminal body 2141 are riveted to the electrode lead-out hole 211c.

In some examples, the terminal body 2141 may be provided with a recessed portion that is recessed from an outer surface of the terminal body 2141 in a direction facing the electrode assembly 22. The bottom of the recessed portion is used for being welded to the current collecting member 23.

When the electrode assembly 22 and the current collecting member 23 are installed in the housing 211 through the opening 211d of the barrel 211b and after the current collecting member 23 is pressed against the cover 211a, the external welding equipment can weld the bottom of the recessed portion and the current collecting member 23 from one side of the bottom of the recessed portion facing away from the current collecting member 23.

In this example, the thickness of the terminal body 2141 is decreased by arranging the recessed portion, which can reduce the welding power required for welding the bottom of the recessed portion to the current collecting member 23, reduce heat generation, and reduce the risk of burning other members (such as a first insulating member 61 and a second insulating member 60).

In some examples, the second electrode terminal 214b further includes a sealing plate 2142, and the sealing plate 2142 is used to close the opening of the recessed portion. The sealing plate 2142 may be located entirely on an outer side of the recessed portion, or may be partially accommodated within the recessed portion, as long as the sealing plate 2142 can close the opening of the recessed portion. The sealing plate 2142 can protect the recessed portion from the outer side, reduce external impurities entering the recessed portion, reduce the risk of the bottom of the recessed portion being damaged by external impurities, and improve the sealing performance of the battery cell 20.

In some examples, the sealing plate 2142 is used to be welded with the second connecting member 82 and form a second welding portion W2. The second welding portion W2 can reduce a contact resistance between the sealing plate 2142 and the second connecting member 82 and improve the current carrying capability.

In some examples, at least a part of the sealing plate 2142 protrudes from an outer surface of the terminal body 2141. When the second connecting member 82 and the sealing plate 2142 need to be welded, the second connecting member 82 is first attached to the upper surface of the sealing plate 2142 (i.e., the surface of the sealing plate 2142 facing away from the recessed portion), and then the second connecting member 82 and the sealing plate 2142 are welded. At least a part of the sealing plate 2142 protrudes from the outer surface of the terminal body 2141 to avoid the outer surface of the terminal body 2141 interfering with the fit between the sealing plate 2142 and the second connecting member 82, thereby ensuring that the second connecting member 82 and the sealing plate 2142 are attached tightly.

In the example of the present application, the battery cell 20 further includes: a first insulating member 61, and the first insulating member 61 is used to insulate and separate at least a part of the second electrode terminal 214b from the cover 211a. Exemplarily, at least a part of the first insulating member 61 is clamped between the cover 211a and the second electrode terminal 214b to insulate and separate the cover 211a from the second electrode terminal 214b, so as to reduce the risk of short circuit.

In the example of the present application, the battery cell 20 further includes a second insulating member 60, and the second insulating member 60 is located between the cover 211a and the electrode assembly 22. Specifically, the second insulating member 60 can separate the electrode assembly 22 from the cover 211a, thereby reducing the risk of contact and conduction between the electrode assembly 22 and the cover 211a when the battery cell 20 vibrates, thereby improving safety performance.

In some examples, at least one of the first insulating member 61 and the second insulating member 60 may be used to seal the electrode lead-out hole 211c. In some other examples, the battery cell 20 further includes a sealing ring 62, and the sealing ring 62 is sleeved on the second electrode terminal 214b and used to seal the electrode lead-out hole 211c. Optionally, a part of the sealing ring 62 extends into the electrode lead-out hole 211c to separate a hole wall of the electrode lead-out hole 211c from the second electrode terminal 214b.

In some examples, the second tab 2222 is arranged at one end of the electrode assembly 22 facing the cover 211a, and the first tab 2221 is arranged at the other end of the electrode assembly 22 facing away from the cover 211a. The barrel 211b is used to connect the first tab 2221 and the cover 211a, so that the first tab 2221 is electrically connected to the cover 211a.

The barrel 211b may be directly electrically connected to the first tab 2221, or may be electrically connected to the first tab 2221 through other members. For example, the first tab 2221 is electrically connected to the barrel 211b through the cover plate 212.

In the example of the present application, the first tab 2221 and the second tab 2222 are arranged at two ends of the electrode assembly 22, which can reduce the risk of conduction between the first tab 2221 and the second tab 2222 and increase the current carrying area of the first tab 2221 and the current carrying area of the second tab 2222.

In some examples, the first tab 2221 is a negative electrode tab, and the substrate material of the housing 211 is steel. The housing 211 is electrically connected to the negative electrode tab, that is, the housing 211 is in a low potential state. The housing 211 made of the steel is not prone to being corroded by the electrolyte solution under the low potential state, thereby reducing safety risks.

In some examples, the battery cell 20 further includes a current collecting member 23 for being connected to the second tab 2222 and the second electrode terminal 214b. The current collecting member 23 can be connected to the second tab 2222 by welding, abutting, bonding or other methods, and connected to the second electrode terminal 214b by welding, abutting, bonding, riveting or other methods, thereby realizing an electrical connection between the second tab 2222 and the second electrode terminal 214b.

In the first direction Z, the second electrode terminal 214b is arranged opposite to a middle region of the second tab 2222. If the second electrode terminal 214b and the second tab 2222 are directly connected, a conductive path between an edge region of the second tab 2222 and the second electrode terminal 214b will be too long, resulting in uneven current density of the second electrode plate of the electrode assembly 22, increasing the internal resistance and affecting the current carrying capability and charging efficiency of the battery cell 20.

There may be a larger connection area between the current collecting member 23 of the example of the present application and the second tab 2222, and the current of the second tab 2222 may be converged to the second electrode terminal 214b via the current collecting member 23. In this way, the current collecting member 23 may reduce the difference in the conductive path between different regions of the second tab 2222 and the second electrode terminal 214b, improve the uniformity of the current density of the second electrode plate, reduce the internal resistance, and improve the current carrying capability and charging efficiency of the battery cell 20.

It should be understood that the housing 211 in the example of the present application is of a multi-layer structure, that is, the barrel 211b and the cover 211a of the housing 211 are both of a multi-layer structure. For the convenience of description, the housing 211 hereinafter includes a barrel 211b and a cover 211a.

In the example of the present application, the housing 211 includes a first housing layer 2115, the electrical resistivity of the first housing layer 2115 is K1, and K1 meets: 1×10^-8 Ω·m≤K1≤6×10^-8 Ω·m. The first housing layer 2115 is any layer of housing in the multi-layer housing 211. For example, in FIG. 22, the innermost housing being the first housing layer 2115 of the housing is taken as an example, but the example of the present application is not limited thereto. By setting the electrical resistivity K1 of the first housing layer 2115 included in the housing 211 to be relatively small, the current carrying capability of the housing 211 can be improved, thereby improving the performance of the battery cell 20.

In some examples, the electrical resistivity K1 of the first housing layer 2115 may further meet 1×10^-8 Ω·m≤K1≤2.8×10^-8 Ω·m. It can not only improve the current carrying capability and performance of the housing 211, but also facilitate implementation. In some examples, the value of the electrical resistivity K1 of the first housing layer 2115 may also be set to other values. For example, the electrical resistivity K1 of the first housing layer 2115 can be any one of the following values or between any two of the following values: 1×10^-8 Ω·m, 1.3×10^-8 Ω·m, 1.5×10^-8 Ω·m, 1.8×10^-8 Ω·m, 2×10^-8 Ω·m, 2.3×10^-8 Ω·m, 2.5×10^-8 Ω·m, 2.8×10^-8 Ω·m, 3×10^-8 Ω·m, 3.3×10^-8 Ω·m, 3.5×10^-8 Ω·m, 3.8×10^-8 Ω·m, 4×10^-8 Ω·m, 4.3×10^-8 Ω·m, 4.5×10^-8 Ω·m, 4.8×10^-8 Ω·m, 5×10^-8 Ω·m, 5.3×10^-8 Ω·m, 5.5×10^-8 Ω·m, 5.8 and 6×10^-8 Ω·m.

It should be understood that the specific thickness of the first housing layer 2115 in the examples of the present application can also be set flexibly according to actual applications. For example, the thickness of the first housing layer 2115 may be set in a certain proportion according to the thickness of the housing 211.

In some examples, the average thickness of the first housing layer 2115 is T13, the average thickness of the housing 211 is T10, and T13 and T10 meet: 0.15≤T13/T10≤0.85. If T13/T10 is set too small, when the average thickness T10 of the housing 211 is constant, T13 will be too small, which will increase the processing difficulty and cause excessive overcurrent heat, making thermal runaway more likely to occur. On the contrary, if T13/T10 is set too large, when the average thickness T10 of the housing 211 is constant, T13 will be too large, and the thickness of other structural layers will be too small, which will affect the structural strength of the housing 211.

Furthermore, T13 and T10 meet: 0.2≤T13/T10≤0.6. Not only can the current carrying capability of the housing 211 be improved, but also the structural strength of the housing 211 can be improved. In some examples, the ratio T13/T10 may also be set to other values. For example, the value of the ratio T13/T10 may be any one of the following values or between any two of the following values: 0.15, 0.2, 0.25, 0.3, 0.35, 0.4, 0.45, 0.5, 0.55, 0.6, 0.65, 0.7, 0.75, 0.8 and 0.85.

It should be understood that the value range of the average thickness T10 of the housing 211 of the example of the present application can also be flexibly set according to actual applications. For example, the average thickness T10 of the housing 211 meets: 0.05 mm≤ T10≤0.5 mm. The average thickness T10 of the housing 211 should not be too small to reduce the processing difficulty of the multi-layer housing 211 and improve the structural strength of the housing 211. For example, the housing 211 is not prone to breaking, thereby prolonging the service life of the housing 211. On the contrary, the average thickness T10 of the housing 211 should not be too large, so that the housing 211 occupies less space, increases the space utilization of the battery cell 20, and further increases the energy density of the battery 10 provided with the plurality of battery cells 20.

Further, the average thickness T10 of the housing 211 meets: 0.075 mm≤ T10≤0.4 mm. Appropriately thinning average thickness T10 of the housing 211 can reduce the space occupied by the housing 211 inside the battery 10 so as to increase the energy density of the battery 10. Appropriately increasing average thickness T10 of the housing 211 can also reduce the difficulty of processing the housing 211.

Further, the average thickness T10 of the housing 211 meets: 0.1 mm≤ T10≤0.3 mm. The average thickness T10 of the housing 211 is neither too large nor too small, which can not only improve the structural strength and structural stability of the housing 211, but also reduce the space occupied by the housing 211 inside the battery 10, thereby increasing the energy density of the battery 10.

In some examples, the value of the average thickness T10 of the housing 211 in the example of the present application can also be set to other values. For example, the value of the average thickness T10 of the housing 211 can be any one of the following values or between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm and 0.5 mm.

In the example of the present application, the material of the first housing layer 2115 can be flexibly set according to actual applications. For example, the material of the first housing layer 2115 includes at least one of the following: silver, copper, aluminum, magnesium and brass, so as to meet the design requirement of the electrical resistivity K1 of the first housing layer 2115.

In the example of the present application, the housing 211 includes a second housing layer 2116, and the tensile strength of the second housing layer 2116 at a temperature of 25°C is Rm2, and Rm2 meets 250 MPa≤Rm2≤2000 MPa. The second housing layer 2116 is any layer of housing in the multi-layer housing 211. For example, in FIG. 22, the outermost housing being the second housing layer 2116 of the housing is taken as an example, but the example of the present application is not limited thereto. By arranging the tensile strength Rm2 of the second housing layer 2116 included in the housing 211 at a temperature of 25°C is large, the structural strength and deformation capability of the housing 211, making the housing 211 less likely to be damaged during the use of the battery cell 20, thereby improving the structural stability of the battery cell 20 and thus prolonging the service life of the battery cell. However, the tensile strength Rm2 of the second housing layer 2116 at the room temperature of 25°C should not be too large, so as to reduce the selecting difficulty and processing difficulty of the material of the housing 211, save costs, and facilitate processing.

It should be understood that the value range of the tensile strength Rm2 of the second housing layer 2116 of the housing 211 at a room temperature of 25°C in the example of the present application may be adjusted according to actual applications. For example, the value of the tensile strength Rm2 at the room temperature may further meet 400 MPa≤Rm2≤1200 MPa. On the one hand, increasing the tensile strength Rm2 of the second housing layer 2116 at a room temperature can improve the deformation capability of this part of the second housing layer 2116 to resist the expansion of the electrode assembly 22, making the second housing layer 2116 less likely to be damaged, thereby improving the structural stability of the battery cell 20 and prolonging the service life of the battery cell. On the other hand, the tensile strength Rm2 of the second housing layer 2116 at the room temperature is controlled to not be too large, so as to reduce the selecting difficulty and processing difficulty of the material of the second housing layer 2116, save costs, and facilitate processing.

Further, the tensile strength Rm2 of the second housing layer 2116 at a room temperature may further be set to meet 450 MPa≤ Rm2≤800 MPa. The tensile strength Rm2 of the second housing layer 2116 at a room temperature is not too large or too small, which can improve the deformation capability of this part of housing 211 to resist the expansion of the electrode assembly 22, and is easy to implement and saves costs.

In some examples, the value of the tensile strength Rm2 of the second housing layer 2116 of the housing 211 in the example of the present application at a room temperature may also be set to be other values. For example, the value of the tensile strength Rm2 at the room temperature may be any one of the following values or between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength in the example of the present application refers to the maximum stress value that the material can withstand before breaking. A test method of the tensile strength Rm2 of the second housing layer 2116 of the housing 211 at a temperature of 25°C in the example of the present application may be selected according to actual applications. For example, the national standard GB/T 228.1-2010 can be used to test the tensile strength Rm2 at a normal temperature of 25°C.

In the example of the present application, the average thickness of the second housing layer 2116 is T14, the average thickness of the housing 211 is T10, and T14 and T10 meet: 0.15≤T14/T10≤0.85. If T14/T10 is set too small, when the average thickness T10 of the housing 211 is constant, T14 will be too small, which will affect the structural strength of the housing 211. On the contrary, if T14/T10 is set too large, when the average thickness T10 of the housing 211 is constant, T14 will be too large, and the thickness of other structural layers will be too small. For example, the thickness T13 of the first housing layer 2115 will be too small, which will increase the processing difficulty and cause excessive overcurrent heat, making thermal runaway more likely to occur.

Furthermore, T14 and T10 meet: 0.2≤T14/T10≤0.6. Not only can the current carrying capability of the housing 211 be improved, but also the structural strength of the housing 211 can be improved. In some examples, the ratio T14/T10 may also be set to other values. For example, the value of the ratio T14/T10 may be any one of the following values or between any two of the following values: 0.15, 0.2, 0.25, 0.3, 0.35, 0.4, 0.45, 0.5, 0.55, 0.6, 0.65, 0.7, 0.75, 0.8 and 0.85.

Furthermore, the average thickness T14 of the second housing layer 2116 in the example of the present application may be the same as or different from the average thickness T13 of the first housing layer 2115 to meet different design requirements.

It should be understood that the average thickness T10 of the housing 211 in the example of the present application may refer to an average thickness of at least a partial region of the housing 211. The average thickness T13 of the first housing layer 2115 of the housing 211 may also refer to the average thickness of at least a partial region of the first housing layer 2115. The average thickness T14 of the second housing layer 2116 of the housing 211 may also refer to the average thickness of at least a partial region of the second housing layer 2116. Furthermore, a calculation region of the average thickness T10 of the housing 211 is usually consistent with a calculation region of the average thickness T13 of the first housing layer 2111, and also consistent with the calculation region of the average thickness T14 of the second housing layer 2116. For example, if some regions are excluded when calculating the average thickness T10 of the housing 211, then correspondingly, the calculation of the average thickness T13 of the first housing layer 2115 also needs to exclude the same regions, and the calculation of the average thickness T14 of the second housing layer 2116 also needs to exclude the same region. For ease of explanation, the following description is made by taking the calculation of the average thickness T10 of the housing 211 as an example, but the relevant description is also applicable to determining the average thickness T13 of the first housing layer 2115 and the average thickness T14 of the second housing layer 2116, which will not be repeated here.

For example, the average thickness T10 of the housing 211 may refer to the average thickness T10 of the entire region of the housing 211, especially when the entire surface of the housing 211 is relatively flat, that is, the thicknesses of most regions of the housing 211 are basically equal or have a small difference, or the thicknesses of all regions of the housing 211 are basically equal or have a small difference, then the average thickness of the entire region of the housing 211 can be determined as T10.

For another example, the average thickness T10 of the housing 211 may also refer to the thickness T10 of a local region of the housing 211, that is, the average thickness T10 of the remaining region after excluding the partial region of the housing 211. For example, if there is a part of special region in the housing 211, and the thickness of the part of special region is significantly different from that of other regions. For example, there is a protruding structure or recessed region in the thickness direction in the part of special region, so that the thickness of the part of special region is larger or smaller than that of other regions, then the part of special region can be excluded to calculate the average thickness T10 of the remaining regions of the housing 211.

In some examples, the housing 211 may include a functional region, and the average thickness T10 of the housing 211 is the average thickness of the region of the housing 211 other than the functional region. For example, the functional region includes at least one of the following regions: a pressure relief region, a region 214 where the electrode terminal is located, a liquid injection region, and a welding region. The thickness of the functional region is usually much different from the thickness of other regions of the housing 211. Therefore, when the average thickness T10 of the housing 211 is calculated without including the functional region, the design of the housing 211 can better meet the strength requirements to improve the structural strength and stability of the battery cell 20.

Specifically, the functional region of the example of the present application may include a region on the housing 211 where a specific structure is provided or which has a specific purpose. For example, the functional region may include a pressure relief region. The pressure relief region is used for being provided with a pressure relief mechanism, and the pressure relief region is used as an element or component that is actuated to relieve the internal pressure or temperature when the internal pressure or temperature of the battery cell 20 reaches a predetermined threshold. The predetermined threshold may be adjusted according to different design requirements. For example, the predetermined threshold may depend on the material of one or more of the positive electrode plate, the negative electrode plate, the electrolyte solution and the separator in the battery cell 20.

The "actuate" mentioned in the present application means that the pressure relief mechanism performs an action or is activated to a certain state, so that the internal pressure and temperature of the battery cell 20 can be released. The action performed by the pressure relief mechanism may include, but is not limited to: at least part of the pressure relief mechanism being broken, crushed, torn, opened, or the like. When the pressure relief mechanism is actuated, high-temperature and high-pressure substances inside the battery cell 20 are discharged as emissions outwards from an actuated part. In this way, the pressure and temperature in the battery cell 20 can be released at a controllable pressure or temperature, thereby avoiding more serious potential accidents.

The emissions from the battery cell 20 referred to in the present application include, but are not limited to: an electrolyte solution, dissolved or split positive and negative electrode plates, separator fragments, high-temperature and high-pressure gas produced from reactions, flames, and the like.

The pressure relief mechanism in the example of the present application may be arranged on any wall of the battery cell 20. For example, the pressure relief mechanism may be arranged in a pressure relief region of the housing 211 of the battery cell 20. The pressure relief mechanism may be a part of the housing 211, or may be of split structure from the housing 211, so as to be fixed to the housing 211 by means of, for example, welding. For example, when the pressure relief mechanism is a part of the housing 211, for example, the pressure relief mechanism may be formed by setting a nick on the housing 211, that is, the housing 211 is provided with a nick in the pressure relief region, and the thickness at the nick is significantly smaller than the thickness of other regions of the housing 211. Therefore, the average thickness T10 of the housing 211 can exclude the thickness at the nick. The nick is the weakest position of the pressure relief mechanism. When excessive gas generated by the battery cell 20 causes the internal pressure to rise and reach a threshold, or the internal temperature of the battery cell 20 rises and reaches a threshold due to the heat generated by the internal reaction of the battery cell 20, the pressure relief mechanism can be ruptured at the nick, resulting in the communication between the inside and outside of the battery cell 20. The gas pressure and temperature are released outward through the cracking of the pressure relief mechanism, thereby preventing the battery cell 20 from exploding.

For another example, the pressure relief mechanism may also be of a split structure from the housing 211. The pressure relief mechanism may use forms such as an explosion-proof valve, an air valve, a pressure relief valve, or a safety valve, and may specifically use pressure-sensitive or temperature-sensitive components or structures. For example, the housing 211 is provided with a through hole in the pressure relief region, and the pressure relief mechanism is installed and fixed to the housing 211 through the through hole. The installed pressure relief mechanism may protrude or be recessed relative to other regions of the housing 211. Therefore, the average thickness T10 of the housing 211 may be calculated without including the pressure relief region where the pressure relief mechanism is located. When the internal pressure or temperature of the battery cell 20 reaches a predetermined threshold, the pressure relief mechanism executes an action or a weak structure provided in the pressure relief mechanism is damaged, so as to form an opening or channel for releasing the internal pressure or temperature.

In some examples, the functional region may also include a region where the electrode terminal 214 is located. Specifically, the electrode terminal 214 in the example of the present application is used to electrically connect to the electrode assemblies 22 inside the battery cell 20 to output electrical energy of the battery cell 20. Moreover, the battery cell 20 may include at least two electrode terminals 214. The at least two electrode terminals 214 may include at least one positive electrode terminal and at least one negative electrode terminal. The positive electrode terminal is used for being electrically connected with the positive tab of the electrode terminal 22, and the negative electrode terminal is used for being electrically connected with the negative tab of the electrode terminal 22. The positive electrode terminal and the positive tab may be connected directly or indirectly, and the negative electrode terminal and the negative tab may be connected directly or indirectly. Exemplarily, in the example of the present application, the positive electrode terminal may be a first electrode terminal 214a, and the negative electrode terminal may be a second electrode terminal 214b; or the positive electrode terminal may be a second electrode terminal 214b, and the negative electrode terminal may be a first electrode terminal 214a.

It should be understood that each electrode terminal 214 of the examples of the present application may be arranged on any wall, and a plurality of electrode terminals 214 may be arranged on the same wall or on different walls of the battery cell 20. For example, as shown in FIG. 20 to FIG. 24, taking an example that each battery cell 20 includes two electrode terminals 214, and the two electrode terminals 214 are located on the same wall, for example, the two electrode terminals 214 may both be located on the cover 211a. However, in the example of the present application, the cover 211a is the first electrode terminal 214a, so one of the two electrode terminals 214 included in the battery cell 20 also protrudes from other regions of the cover 211a of the housing 211. That is, the thickness of the region where the second electrode terminal 214b is located is much greater than the thickness of other regions of the housing 211. Therefore, the average thickness T10 of the housing 211 may be calculated without including the region where the second electrode terminal 214b is located.

In some examples, the functional region may also include a liquid injection region. For example, the liquid injection region of the 211 may be provided with a liquid injection hole, through which the electrolyte solution is injected into the housing 211. After the injection of the electrolyte solution is completed, the liquid injection hole may be sealed by a sealing element. Considering that the thickness of the liquid injection region where the sealing element is located is usually much greater than the thickness of other regions of the housing 211, the average thickness T10 of the housing 211 may be calculated without including the liquid injection region.

In some examples, the functional region may also include a welding region. For example, the housing 211 and the cover plate 212 may be fixed by welding, or the housing 211 itself needs to be processed and formed by welding. For example, any two walls of the housing 211 may be welded, or the housing 211 is formed by splicing at least two parts together, and the housing 211 may include a welding region. For example, the housing 211 may be welded by splicing, and the housing 211 may have a weld 2113. Specifically, the housing 211 may include at least two parts, and the at least two parts are connected by welding to form the housing 211. The example of the present application mainly takes the housing 211 including two parts in a height direction Z of the battery cell 20 as an example, and there is a weld 2113 between the upper half of the housing and the lower half of the housing. Alternatively, different from what is shown in FIG. 21, other parts of the housing 211 may also be provided with welds 2113, and the examples of the present application are not limited thereto. The welding region of the functional region in the example of the present application may also include the weld 2113. Due to the processing technology, the thickness of the welding region is usually greater thickness of other regions of the housing 211. Therefore, the average thickness T10 of the housing 211 may be calculated without including the welding region.

In some examples, the electrical resistivity of the second housing layer 2116 is K2, and K2 and K1 meet: 2≤K2/K1≤40. Further, K2 and K1 can also meet: 2≤K2/K1≤20 to limit the electrical resistivity K1 of the first housing layer 2115, thereby improving the current carrying capability of the housing 211.

In the example of the present application, the material of the second housing layer 2116 can be flexibly set according to actual applications. For example, the material of the second housing layer 2116 includes at least one of the following: titanium, steel, silicon steel, and stainless steel to meet the design requirements of the second housing layer 2116.

In some examples, the materials of the first housing layer 2115 and the second housing layer 2116 can be selected from various materials shown in Table 9 to meet design requirements.

**Table 9**

| Serial number | Material | Electrical resistivity | Tensile strength (MPa) |
|---|---|---|---|
| 1 | Silver | 1.59×10^-8 | 160-420 |
| 2 | Copper | 1.68×10^-8 | 210-270 |
| 3 | Aluminum | 2.65×10^-8 | 120-160 |
| 4 | Magnesium | 4.45×10^-8 | 120-220 |
| 5 | Brass | 6×10^-8 | 330-550 |
| 6 | Titanium | 4.2×10^-7 | 280-550 |
| 7 | Steel | 1.35×10^-7 | 370-2000 |
| 8 | Silicon steel | 5×10^-7 | 1,000-1300 |
| 9 | Stainless steel | 6.9×10^-7 | 500-1000 |

It should be understood that the housing 211 in the example of the present application is of a multi-layer structure, and the number of layers of the housing 211 can be set according to actual applications. For example, the housing 211 includes a plurality of first housing layers 2115 and/or a plurality of second housing layers 2116, and the positions of different first housing layers 2115 and second housing layers 2116 can be flexibly set according to actual applications to meet different application scenarios.

In some examples, the housing 211 may include a plurality of first housing layers 2115 and one second housing layer 2116, and the second housing layer 2116 may be located in the middle or on one side of the plurality of first housing layers 2115. Similarly, the housing 211 may include one first housing layer 2115 and a plurality of second housing layers 2116, and the first housing layer 2115 may be located in the middle or on one side of the plurality of second housing layers 2116. For another example, the housing 211 may include a plurality of first housing layers 2115 and a plurality of second housing layers 2116. The plurality of first housing layers 2115 and the plurality of second housing layers 2116 may be arranged at intervals, or the plurality of first housing layers 2115 may be arranged on one side of the plurality of second housing layers 2116. The examples of the present application are not limited thereto.

In some examples, if the housing 211 includes a plurality of first housing layers 2115 that meet the above design requirements, the materials of the plurality of first housing layers 2115 can be the same or different, the electrical resistivity K1 can be the same or different, and the thickness T13 can be the same or different to increase the design flexibility. Similarly, if the housing 211 includes a plurality of second housing layers 2116 that meet the above design requirements, the materials of the plurality of second housing layers 2116 can be the same or different, the tensile strength Rm2 at the room temperature can be the same or different, and the thickness T14 can be the same or different to increase the design flexibility.

An example of the present application further provide a battery, and the battery includes the battery cell 20 in the various examples above.

An example of the present application further provides an electrical apparatus, including the battery. The battery includes the battery cell 20 in the various examples above, and is configured to supply electrical energy to the electrical apparatus.

The electrical apparatus may be a vehicle as shown in FIG. 1 or any device utilizing a battery.

Although the present application has been described with reference to the preferred embodiments, various improvements can be made thereto and components thereof can be replaced with equivalents without departing from the scope of the present application. In particular, the technical features mentioned in the various examples can be combined in any manner as long as there is no structural conflict. The present application is not limited to the particular examples disclosed herein, but rather includes all technical solutions falling within the scope of the claims.

## Claims

1. A housing, wherein the housing has an opening, and comprises a first wall arranged opposite to the opening and at least two second walls, and the first wall and the second walls are arranged to intersect each other; and
a transition region is arranged between every two adjacent second walls among the at least two second walls, and a maximum thickness T1 of the transition region and a maximum thickness T0 of the second wall with the maximum thickness among the second walls meet: T1>T0.

2. The housing according to claim 1, wherein the maximum thickness T1 of the transition region and the maximum thickness T0 of the second wall with the maximum thickness meet: 1.5≤T1/T0≤7.

3. The housing according to claim 2, wherein the maximum thickness T1 of the transition region and the maximum thickness T0 of the second wall with the maximum thickness meet: 2≤T1/T0≤4.

4. The housing according to any one of claims 1 to 3, wherein the two second walls are connected by a first filleted corner, and the transition region comprises the first filleted corner.

5. The housing according to claim 4, wherein an inner diameter R1 of the first filleted corner meets: 2 mm≤R1≤4 mm.

6. The housing according to claim 4 or 5, wherein an outer diameter R2 of the first filleted corner meets: 1.5 mm≤R2≤3.5 mm.

7. The housing according to any one of claims 4 to 6, wherein the housing is of an integrally formed structure, and a depth H of the housing and the inner diameter R1 of the first filleted corner meets: 2.5 mm≤R1≤20 mm, and 50 mm<H≤250 mm.

8. The housing according to any one of claims 4 to 7, wherein the housing is of an integrally formed structure, and a yield strength Re of the housing at a temperature of 25°C and the inner diameter R1 of the first filleted corner meet: 140 MPa≤Re≤1000 Mpa, and 2.5 mm≤R1≤20 mm.

9. The housing according to any one of claims 1 to 8, wherein the maximum thicknesses of the at least two second walls are equal.

10. The housing according to any one of claims 1 to 9, wherein the transition region is arranged between any two adjacent second walls among the at least two second walls, and the maximum thicknesses of the at least two transition regions corresponding to the at least two second walls are equal.

11. The housing according to any one of claims 1 to 10, wherein the first wall and the second walls are connected by a second filleted corner, and an inner diameter r1 of the second filleted corner and a minimum thickness T2 of the second wall with the minimum thickness among the at least two second walls meets: 2.0≤r1/T2≤30.

12. The housing according to any one of claims 1 to 11, wherein a wall thickness of the housing is uniform.

13. The housing according to any one of claims 1 to 12, wherein a material of at least a partial region of the housing comprises at least one of stainless steel or carbon steel.

14. The housing according to any one of claims 1 to 13, wherein a mass content of a chromium element in the material of at least a partial region of the housing is m, and m meets: 10%≤m≤30%.

15. The housing according to claim 13 or 14, wherein at least a partial region of the housing comprises all walls of the housing.

16. A battery cell, comprising an electrode assembly and a housing according to any one of claims 1 to 15, wherein the electrode assembly is accommodated in the housing.

17. The battery cell according to claim 16, wherein the electrode assembly comprises a negative electrode plate, the negative electrode plate comprises a negative electrode active material capable of reversibly deintercalating and intercalating metal ions, and the negative electrode active material comprises a silicon-based material; and
a tensile strength of at least a partial region of the housing at a temperature of 25°C is Rm, and Rm meets: 250 MPa≤Rm≤2000 MPa.

18. The battery cell according to claim 16 or 17, wherein the electrode assembly comprises the negative electrode plate, the negative electrode plate comprises the negative electrode active material capable of reversibly deintercalating and intercalating metal ions, and the negative electrode active material comprises a silicon-based material; and
a yield strength of at least a partial region of the housing at a temperature of 25°C is Re, and Re meets: 140 MPa≤Re≤1000 MPa.

19. The battery cell according to any one of claims 16 to 18, wherein the electrode assembly comprises a positive electrode plate, the positive electrode plate comprises a positive electrode active material capable of reversibly deintercalating and intercalating the metal ions, and the positive electrode active material comprises a nickel-containing compound; and
a melting point of at least partial region of the housing is p, and p meets: 1200°C≤p≤2000°C.

20. The battery cell according to any one of claims 16 to 19, wherein the electrode assembly comprises the positive electrode plate, the positive electrode plate comprises the positive electrode active material capable of reversibly deintercalating and intercalating the metal ions, and the positive electrode active material comprises the nickel-containing compound; and
a tensile strength of at least a partial region of the housing at a temperature of 500°C is Rn, and Rn meets: 100 MPa≤Rn≤1200 MPa.

21. A battery, comprising:
a plurality of battery cells, wherein the battery cells are the battery cell according to any one of claims 16 to 20.

22. An electrical apparatus, comprising:
a battery, wherein the battery comprises a battery cell according to any one of claims 16 to 20, and the battery is configured to supply power to the electrical apparatus.
